(19) Europäisches Patentamt / European Patent Office / Office européen des brevets

(11) **EP 4 177 289 A2**

(12) **EUROPEAN PATENT APPLICATION**

(43) Date of publication:
**10.05.2023 Bulletin 2023/19**

(21) Application number: **22205061.9**

(22) Date of filing: **02.11.2022**

(51) International Patent Classification (IPC):
***C08G 18/80*** *(2006.01)* ***C08G 18/08*** *(2006.01)*
***C08G 18/10*** *(2006.01)* ***C08G 18/28*** *(2006.01)*
***C08G 18/32*** *(2006.01)* ***C08G 18/42*** *(2006.01)*
***C08G 18/62*** *(2006.01)* ***C08G 18/73*** *(2006.01)*
***C08G 18/79*** *(2006.01)* ***C09D 175/06*** *(2006.01)*
***C09D 175/08*** *(2006.01)*

(52) Cooperative Patent Classification (CPC):
(C-Sets available)
**C08G 18/73; C08G 18/0852; C08G 18/10; C08G 18/282; C08G 18/283; C08G 18/324; C08G 18/4277; C08G 18/6229; C08G 18/792; C08G 18/8038; C08G 18/8064; C08G 18/807; C08G 18/8093; C09D 175/06; C09D 175/08** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 JP 2021180975**
**07.01.2022 JP 2022001565**
**17.05.2022 JP 2022080814**

(71) Applicant: **Asahi Kasei Kabushiki Kaisha**
**Tokyo 1000006 (JP)**

(72) Inventors:
- **Yoshinuma, Tomoharu**
  **Tokyo, 100-0006 (JP)**
- **Hara, Kazuyuki**
  **Tokyo, 100-0006 (JP)**
- **Shinomiya, Kie**
  **Tokyo, 100-0006 (JP)**
- **Yamauchi, Masakazu**
  **Tokyo, 100-0006 (JP)**
- **Horinouchi, Misa**
  **Tokyo, 100-0006 (JP)**

(74) Representative: **Strehl Schübel-Hopf & Partner**
**Maximilianstrasse 54**
**80538 München (DE)**

(54) **BLOCKED POLYISOCYANATE COMPOSITION AND METHOD FOR PRODUCING THE SAME, RESIN COMPOSITION, RESIN FILM AND METHOD FOR PRODUCING THE SAME, AND LAMINATE**

(57) A resin film including a urethane bond and a urea bond derived from a polyisocyanate obtained from an aliphatic isocyanate and/or an alicyclic isocyanate, a hydrophilic group, and a structure represented by the following general formula (I), wherein a molar ratio of urethane bond and urea bond (urethane bond/urea bond) is from 95/5 to 30/70.

[Chemical Formula 1]

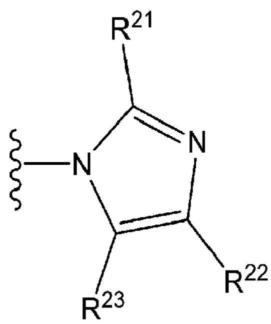

(I)

EP 4 177 289 A2

(52) Cooperative Patent Classification (CPC): (Cont.)

C-Sets
**C08G 18/10, C08G 18/283;**
**C08G 18/10, C08G 18/3243**

## Description

BACKGROUND OF THE INVENTION

Field of the Invention

The present invention relates to a blocked polyisocyanate composition and a method for producing the same, a resin composition, a resin film and a method for producing the same, and a laminate.

Description of the Related Art

Conventionally, polyurethane resin coating materials exhibit extremely superior wear resistance, chemical resistance, and stain resistance. In particular, polyurethane resin coating materials using a polyisocyanate obtained from an aliphatic diisocyanate or an alicyclic diisocyanate are more superior in weather resistance, and the demand therefor tends to increase. However, since polyurethane resin coating materials are generally in the form of a two-component type, their use is extremely inconvenient. That is, an ordinary polyurethane resin coating material is composed of two components, namely a polyol and a polyisocyanate, and it is necessary to store the polyol and the polyisocyanate separately and mix them at the time of coating. Further, there is a problem in that once the two components are mixed, the coating material forms a gel in a short period of time and cannot be used. Since polyurethane resin coating materials have such problems, they are extremely difficult to use for automatic painting in the field of line painting, such as automotive painting or weak electrical painting. In addition, since an isocyanate readily reacts with water, it cannot be used in water-based coating materials such as electrodeposition paints. Furthermore, when a coating material containing an isocyanate is used, it is necessary to sufficiently wash the coating machine and the coating tank at the end of the work, and therefore, the operating efficiency is significantly reduced.

In order to solve the above problems, it has been conventionally proposed to use a blocked polyisocyanate in which all active isocyanate groups are blocked with a blocking agent. This blocked polyisocyanate does not react with a polyol at room temperature. However, since heating dissociates the blocking agent to regenerate the active isocyanate groups which react with the polyol and cause a crosslinking reaction, the above problems can be improved. Therefore, a number of blocking agents have been studied, and typical blocking agents include phenol and methyl ethyl ketoxime.

However, when a blocked polyisocyanate using these blocking agents is used, a high baking temperature of 140°C or higher is generally required. The requirement of baking at a high temperature is not only disadvantageous in terms of energy consumption, but also a factor limiting its use because heat resistance of a base material is required.

On the other hand, research is being conducted on blocked polyisocyanates using active methylene-based compounds such as acetoacetic acid esters and malonic acid diesters as low temperature baking type blocked polyisocyanates. For example, Patent Documents 1 and 2 propose blocked polyisocyanate compositions that cure at 90°C.

Also, from the perspective of global environmental protection, the need for water-based resin compositions is increasing. In order to ensure dispersibility in the water-based resin compositions, for example, Patent Document 3 discloses a technique of modifying a hydrophilic group in a blocked polyisocyanate to improve the dispersibility in the water-based resin compositions.

In addition, Patent Document 4 discloses, as a dissociation type blocked polyisocyanate, an imidazole-based blocked polyisocyanate composition in which a nonionic hydrophilic group compound has been modified.

PRIOR ART DOCUMENTS

[Patent Documents]

[Patent Document 1] Japanese Unexamined Patent Application, First Publication No. 2002-322238
[Patent Document 2] Japanese Unexamined Patent Application, First Publication No. 2006-335954
[Patent Document 3] Japanese Patent No. 3947260
[Patent Document 4] Japanese Patent No. 6025507

SUMMARY OF THE INVENTION

Problems to be Solved by the Invention

In addition to curability when baked at a low temperature of 90°C or less and dispersibility in a water-based

resin composition, the physical properties required for blocked polyisocyanates also include storage stability in the form of a water-based resin composition. However, it is very difficult to satisfy all of these requirements.

In addition, the required performance for the water-based resin composition includes curability when baked at a low temperature of 90°C or less, coating film appearance of the obtained coating film, water resistance, and recoat adhesion. However, it is very difficult to satisfy all of these requirements.

The present invention has been made in view of the above circumstances, and provides a resin film using a blocked polyisocyanate composition that exhibits excellent curability when baked at a low temperature of 90°C or less, when used as a water-based coating composition, and brings about excellent coating film appearance, water resistance and recoat adhesion of the resin film obtained after curing; a method for producing a resin film; a laminate; and a method for producing a blocked polyisocyanate composition.

In addition, the present invention has been made in view of the above circumstances, and provides a blocked polyisocyanate composition that exhibits excellent curability immediately after being formed into a water-based resin composition and when baked at a low temperature of 90°C or less after storage immediately after being formed into a water-based resin composition, and brings about suppression of a decrease in pH when stored immediately after being formed into a water-based resin composition; and a resin composition, a resin film and a laminate using the aforementioned blocked polyisocyanate composition.

Means for Solving the Problem

That is, the present invention includes the following aspects.

(1) A resin film including: a urethane bond and a urea bond derived from a polyisocyanate obtained from an aliphatic isocyanate and/or an alicyclic isocyanate; a hydrophilic group; and a structure represented by the following general formula (I), wherein a molar ratio of the urethane bond and the urea bond (urethane bond/urea bond) is from 95/5 to 30/70,

[Chemical Formula 1]

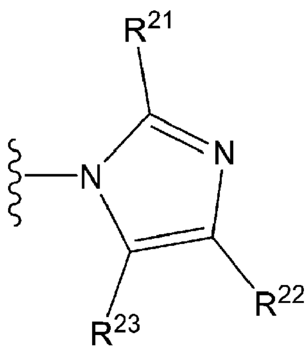

(I)

in the general formula (I), each of $R^{21}$, $R^{22}$ and $R^{23}$ independently represents a hydrogen atom or an alkyl group which may contain one or more substituents selected from the group consisting of a hydroxy group and an amino group, a total number of carbon atoms of $R^{21}$, $R^{22}$ and $R^{23}$ is 1 or more and 20 or less, and a wavy line represents a bond.

(2) The resin film according to (1), wherein the hydrophilic group is a polyethylene glycol group.

(3) The resin film according to (2), wherein a content of the polyethylene glycol group in the resin film is 1% by mass or more and 20% by mass or less.

(4) The resin film according to any one of (1) to (3), wherein when, in the resin film, a ratio of urethane bonds is defined as a, a ratio of urea bonds is defined as b, and a ratio of the structure represented by the general formula (I) is defined as c, a molar ratio c/(a + b + c) is 0.1 mol% or more and 50 mol% or less.

(5) A method for producing a resin film, the method including adding water to a mixture of a polyisocyanate obtained from an aliphatic isocyanate and/or an alicyclic isocyanate, a hydrophilic compound, a blocked polyisocyanate compound (A) derived from an imidazole-based blocking agent (d) having a structure represented by the following general formula (II) and a polyvalent hydroxy compound; and baking the resulting mixture at a temperature of 90°C or less after allowing it to stand within a temperature range of 10°C to 70°C for 1 to 240 hours,

[Chemical Formula 2]

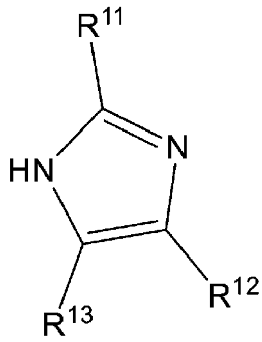

( II )

in the general formula (II), each of $R^{11}$, $R^{12}$ and $R^{13}$ independently represents a hydrogen atom or an alkyl group which may contain one or more substituents selected from the group consisting of a hydroxy group and an amino group, and a total number of carbon atoms of $R^{11}$, $R^{12}$ and $R^{13}$ is 1 or more and 20 or less.

(6) The method for producing a resin film according to (5), wherein the mixture further contains a polyisocyanate obtained from an aliphatic isocyanate and/or an alicyclic isocyanate, a hydrophilic compound, and a blocked polyisocyanate compound (E) derived from a blocking agent (e) other than an imidazole-based blocking agent.

(7) The method for producing a resin film according to (6), wherein the blocking agent (e) is an active methylene-based blocking agent.

(8) A laminate obtained by laminating one or more layers of a resin film of any one of (1) to (4) on a base material, wherein

a thickness of each layer of the resin film is 1 μm or more and 50 μm or less.

(9) A method for producing a blocked polyisocyanate composition, the method including a step of adding water to a mixture of a polyisocyanate obtained from an aliphatic isocyanate and/or an alicyclic isocyanate, a hydrophilic compound, and a blocked polyisocyanate compound (A) derived from an imidazole-based blocking agent (d) having a structure represented by the following general formula (II); and allowing the resulting mixture to stand within a temperature range of 10°C to 70°C for 1 to 240 hours,

[Chemical Formula 3]

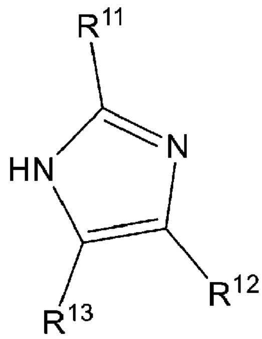

( II )

in the general formula (II), each of $R^{11}$, $R^{12}$ and $R^{13}$ independently represents a hydrogen atom or an alkyl group which may contain one or more substituents selected from the group consisting of a hydroxy group and an amino group, and a total number of carbon atoms of $R^{11}$, $R^{12}$ and $R^{13}$ is 1 or more and 20 or less.

(10) The method for producing a blocked polyisocyanate composition according to (9), wherein the mixture further contains a polyisocyanate obtained from an aliphatic isocyanate and/or an alicyclic isocyanate, a hydrophilic compound, and a blocked polyisocyanate compound (E) derived from a blocking agent (e) other than an imidazole-based blocking agent.

(11) The method for producing a blocked polyisocyanate composition according to (10), wherein the blocking agent (e) is an active methylene-based blocking agent.

(12) The method for producing a blocked polyisocyanate composition according to any one of (9) to (11), wherein the hydrophilic compound is a polyethylene glycol-based hydrophilic compound.

(13) A blocked polyisocyanate composition including:

a blocked polyisocyanate component (X) derived from a polyisocyanate (x1) and a blocking agent (x2); and
a blocked polyisocyanate component (Y) derived from a polyisocyanate (y1) and a blocking agent (y2);
wherein the blocked polyisocyanate composition contains a hydrophilic group,
the blocking agent (x1) is a compound having a heterocyclic ring containing one or more nitrogen atoms, and
a structure of an isocyanate group blocked by the blocking agent (y2) in the blocked polyisocyanate component (Y) is a structure represented by the following general formula (IV),

[Chemical Formula 4]

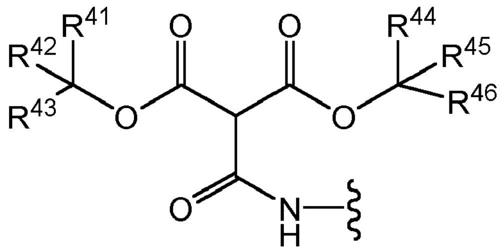

( IV )

in the general formula (IV), each of $R^{41}$, $R^{42}$ and $R^{43}$ independently represents an alkyl group which may contain one or more substituents selected from the group consisting of a hydroxy group and an amino group, a total number of carbon atoms of $R^{41}$, $R^{42}$ and $R^{43}$ is 3 or more and 20 or less, each of $R^{44}$, $R^{45}$ and $R^{46}$ independently represents a hydrogen atom or an alkyl group which may contain one or more substituents selected from the group consisting of a hydroxy group and an amino group, and a wavy line represents a bond.

(14) The blocked polyisocyanate composition according to (13), wherein a structure of an isocyanate group blocked by the blocking agent (x2) in the blocked polyisocyanate component (X) is a structure represented by the following general formula (IIa),

[Chemical Formula 5]

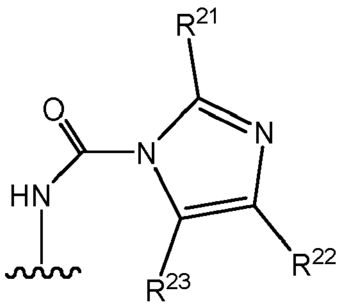

( IIa )

in the general formula (IIa), each of $R^{21}$, $R^{22}$ and $R^{23}$ independently represents a hydrogen atom or an alkyl group which may contain one or more substituents selected from the group consisting of a hydroxy group and an amino group, a total number of carbon atoms of $R^{21}$, $R^{22}$ and $R^{23}$ is 1 or more and 20 or less, and a wavy line represents a bond.
(15) The blocked polyisocyanate composition according to (13) or (14), wherein the structure of an isocyanate group blocked by the blocking agent (y2) includes a structure represented by the following general formula (IV-1) as the structure represented by the general formula (IV),

[Chemical Formula 6]

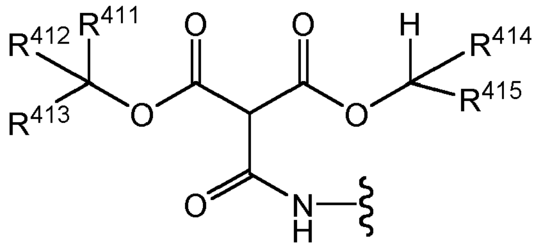

(IV -1)

in the general formula (IV-1), each of $R^{411}$, $R^{412}$ and $R^{413}$ independently represents an alkyl group which may contain one or more substituents selected from the group consisting of a hydroxy group and an amino group, a total number of carbon atoms of $R^{411}$, $R^{412}$ and $R^{413}$ is 3 or more and 20 or less, each of $R^{414}$ and $R^{415}$ independently represents a hydrogen atom or an alkyl group which may contain one or more substituents selected from the group consisting of a hydroxy group and an amino group, and a wavy line represents a bond.

(16) The blocked polyisocyanate composition according to any one of (13) to (15), wherein each of $R^{41}$, $R^{42}$ and $R^{43}$ independently represents an unsubstituted alkyl group, and
each of $R^{44}$, $R^{45}$ and $R^{46}$ independently represents a hydrogen atom or an unsubstituted alkyl group.

(17) The blocked polyisocyanate composition according to any one of (13) to (16), wherein the blocked polyisocyanate composition contains a nonionic hydrophilic group,

a content of the nonionic hydrophilic group is 0.1% by mass or more and 25.0% by mass or less with respect to a total mass of a solid content of the blocked polyisocyanate composition, and
a relationship of $0 \leq (y) < (x)$ is satisfied when a content of a nonionic hydrophilic group of the blocked polyisocyanate component (X) with respect to a total mass of a solid content of the blocked polyisocyanate component (X) is defined as (x)% by mass, and a content of a nonionic hydrophilic group of the blocked polyisocyanate component (Y) with respect to a total mass of a solid content of the blocked polyisocyanate component (Y) is defined as (y)% by mass.

(18) The blocked polyisocyanate composition according to (17), wherein a content of a nonionic hydrophilic group of the blocked polyisocyanate component (X) is 15.0% by mass or more and 65.0% by mass or less with respect to a total mass of a solid content of the blocked polyisocyanate component (X).

(19) The blocked polyisocyanate composition according to any one of (13) to (18), wherein the polyisocyanate (x1) and the polyisocyanate (y1) are polyisocyanates derived from one or more diisocyanates selected from the group consisting of an aliphatic diisocyanate and an alicyclic diisocyanate.

(20) The blocked polyisocyanate composition according to any one of (13) to (19), wherein the polyisocyanate (y1) has an average number of isocyanate groups of 3.5 or more.

(21) A resin composition including a blocked polyisocyanate composition of any one of (13) to (20) and a polyvalent hydroxy compound.

(22) A resin film obtained by curing a resin composition of (21).

(23) A laminate obtained by laminating one or more layers of a resin film of (22) on a base material, wherein
a thickness of each layer of the resin film is 1 μm or more and 50 μm or less.

(24) A method for producing a resin film, the method including adding water to a mixture of a blocked polyisocyanate composition of any one of (13) to (20) and a polyvalent hydroxy compound; and baking the resulting mixture at a temperature of 90°C or less after allowing it to stand within a temperature range of 10°C to 70°C for 1 to 240 hours.

Effects of the Invention

According to the above aspects, it is possible to provide a resin film using a blocked polyisocyanate composition that exhibits excellent curability when baked at a low temperature of 90°C or less, when used as a water-based coating composition, and brings about excellent coating film appearance, water resistance and recoat adhesion of the resin film obtained after curing; a method for producing a resin film; a laminate; and a method for producing a blocked polyisocyanate composition.

According to the blocked polyisocyanate compositions of the above aspects, it is possible to provide a blocked polyisocyanate composition that exhibits excellent curability immediately after being formed into a water-based resin composition and when baked at a low temperature of 90°C or less after storage immediately after being formed into a water-based resin composition, and brings about suppression of a decrease in pH when stored immediately after being formed into a water-based resin composition. The resin composition of the above aspect contains the aforementioned polyisocyanate composition, exhibits excellent curability immediately after being formed into a water-based resin composition and when baked at a low temperature of 90°C or less after storage immediately after being formed into a water-based resin composition, and can suppress a decrease in pH when stored immediately after being formed into a water-based resin composition.

DETAILED DESCRIPTION OF THE INVENTION

Hereinafter, embodiments for carrying out the present invention (hereinafter, referred to as "the present embodiment") will be described in detail. It should be noted that the present invention is not limited to the following embodiments. The present invention can be carried out with appropriate modifications within the scope of its gist.

It should be noted that in the present specification, the term "polyol" means a compound having two or more hydroxy groups (-OH).

In the present specification, the term "polyisocyanate" means a reaction product in which a plurality of monomer compounds having one or more isocyanate groups (-NCO) are bonded.

In the present specification, the term "structural unit" means a structure attributed to one molecule of a monomer in a structure constituting a polyisocyanate or a blocked polyisocyanate. For example, a structural unit derived from a malonic acid ester indicates a structure attributed to one molecule of the malonic acid ester in the blocked polyisocyanate. The structural unit may be a unit directly formed by a (co)polymerization reaction of a monomer, or may be a unit in which a part of the unit is converted into another structure by treating the (co)polymer.

<<Resin film, method for producing resin film, laminate and method for producing blocked polyisocyanate composition>>

<<Resin film>>

Hereinafter, each component contained in a resin film of the present embodiment will be described in detail.

The resin film of the present embodiment has a urethane bond and a urea bond derived from a polyisocyanate obtained from an aliphatic isocyanate and/or an alicyclic isocyanate, and a molar ratio of the urethane bond and the urea bond (urethane bond/urea bond) is from 95/5 to 30/70.

The urethane bond/urea bond molar ratio is preferably from 90/10 to 35/65, more preferably from 80/20 to 40/60, and still more preferably from 70/30 to 45/55.

When the molar ratio is 95/5 or less, the recoat adhesion tends to be favorable, and when the molar ratio is 30/70 or more, the appearance of the coating film tends to be favorable.

The resin film of the present embodiment contains a hydrophilic group. Although the hydrophilic group is not particularly limited, specific examples thereof include a polyethylene glycol group and the like. The content of the polyethylene glycol group in the resin film is not particularly limited, but is preferably 1% by mass or more and 20% by mass or less. The content of this component is preferably 2% by mass or more and 18% by mass or less, more preferably 3% by mass or more and 16% by mass or less, and still more preferably 4% by mass or more and 14% by mass or less. When the content of the polyethylene glycol group is 1% by mass or more, the appearance of the coating film tends to be favorable, and when the content of the polyethylene glycol group is 20% by mass or less, the water resistance tends to be favorable.

Further, the resin film of the present embodiment has a structure represented by the following general formula (I).

[Chemical Formula 7]

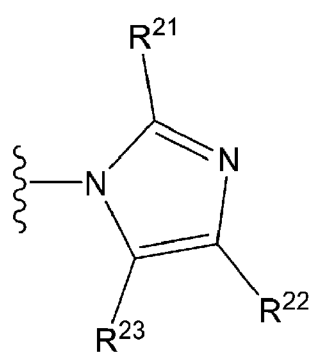

(I)

in the general formula (I), each of $R^{21}$, $R^{22}$ and $R^{23}$ independently represents a hydrogen atom or an alkyl group which may contain one or more substituents selected from the group consisting of a hydroxy group and an amino group, a

total number of carbon atoms of $R^{21}$, $R^{22}$ and $R^{23}$ is 1 or more and 20 or less, and a wavy line represents a bond.

In this resin film, when a ratio of urethane bonds is defined as a, a ratio of urea bonds is defined as b and a ratio of the structure represented by the general formula (I) is defined as c, a molar ratio c/(a + b + c) is not particularly limited, but is preferably 0.1 mol% or more and 50 mol% or less. Among the various possibilities, this ratio is more preferably 0.5 mol% or more and 25 mol% or less, still more preferably 1 mol% or more and 10 mol% or less, and still more preferably 1.5 mol% or more and 6 mol% or less. When this ratio is 0.1% or more, the recoat adhesion tends to improve, and when this ratio is 50 mol% or less, the low-temperature curability tends to improve.

A method for producing a resin film of the present embodiment includes a step of adding water to a mixture of a polyisocyanate obtained from an aliphatic isocyanate and/or an alicyclic isocyanate, a hydrophilic compound, a blocked polyisocyanate compound (A) derived from an imidazole-based blocking agent (d) having a structure represented by the following general formula (II) and a polyvalent hydroxy compound; and baking the resulting mixture at a temperature of 90°C or less after allowing it to stand within a temperature range of 10°C to 70°C for 1 to 240 hours.

[Chemical Formula 8]

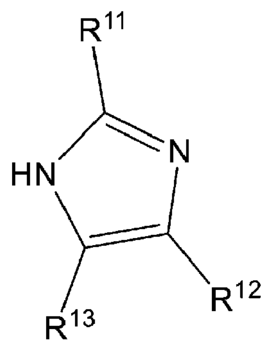

(II)

in the general formula (II), each of $R^{11}$, $R^{12}$ and $R^{13}$ independently represents a hydrogen atom or an alkyl group which may contain one or more substituents selected from the group consisting of a hydroxy group and an amino group, and a total number of carbon atoms of the $R^{11}$, $R^{12}$ and $R^{13}$ is 1 or more and 20 or less.

«Blocked polyisocyanate composition»

A blocked polyisocyanate composition of the present embodiment can be produced by a production method including a step of adding water to a mixture of a polyisocyanate obtained from an aliphatic isocyanate and/or an alicyclic isocyanate, a hydrophilic compound, and a blocked polyisocyanate compound (A) derived from an imidazole-based blocking agent (d) having a structure represented by the above general formula (II); and allowing the resulting mixture to stand within a temperature range of 10°C to 70°C for 1 to 240 hours. The above blocked polyisocyanate composition preferably contains a blocked polyisocyanate compound (A), water, and optionally a polyvalent hydroxy compound.

<Hydrophilic compound>

The hydrophilic compound used in the blocked polyisocyanate composition is not particularly limited as long as it is a compound capable of imparting hydrophilicity to the blocked polyisocyanate composition, but is preferably a nonionic hydrophilic compound, and more preferably a polyethylene glycol-based hydrophilic compound. Any one of these hydrophilic compounds may be used alone, or two or more types thereof may be used in combination.

These hydrophilic compounds have, in addition to a hydrophilic group, one or more active hydrogen groups per molecule of the hydrophilic compound for reacting with isocyanate groups. Specific examples of the active hydrogen group include a hydroxyl group, a mercapto group, a carboxylic acid group, an amino group and a thiol group.

Among them, as the nonionic hydrophilic compound, a polyethylene glycol monoalkyl ether obtained by adding ethylene oxide to a hydroxyl group of a monoalcohol is preferred because the water dispersibility of the blocked polyisocyanate composition can be improved with a small amount. Examples of the monoalcohol include methanol, ethanol and butanol.

The number of added ethylene oxides in the hydrophilic compound to which ethylene oxides have been added is preferably 4 or more and 30 or less, and more preferably 4 or more and 25 or less. When the number of added ethylene oxides is equal to or more than the above lower limit value, there is a tendency that water dispersibility can be more effectively imparted to the blocked polyisocyanate composition, and when the number of added ethylene oxides is equal

to or less than the above upper limit value, there is a tendency that precipitates of the blocked polyisocyanate composition are less likely to occur during low-temperature storage.
As the hydrophilic compound, nonionic hydrophilic compounds other than the polyethylene glycol-based hydrophilic compounds, cationic hydrophilic compounds, and anionic hydrophilic compounds may be used.

(Nonionic hydrophilic compound other than polyethylene glycol-based hydrophilic compound)

Examples of the nonionic hydrophilic compounds other than the polyethylene glycol-based hydrophilic compounds include partially polypropylene glycol-based hydrophilic compounds, copolymers of polyethylene glycol and polypropylene glycol, or blends thereof.

(Cationic hydrophilic compound)

Specific examples of the cationic hydrophilic compound include compounds having both a cationic hydrophilic group and an active hydrogen group. Further, a compound having an active hydrogen group such as a glycidyl group and a compound having a cationic hydrophilic group such as sulfide and phosphine may be combined to form a hydrophilic compound. In this case, a compound having an isocyanate group and a compound having an active hydrogen group are reacted in advance to add a functional group such as a glycidyl group, and then a compound such as sulfide and phosphine is allowed to react. From the viewpoint of ease of production, a compound having both a cationic hydrophilic group and an active hydrogen group is preferred.
Specific examples of the compound having both a cationic hydrophilic group and an active hydrogen group include dimethylethanolamine, diethylethanolamine, diethanolamine and methyldiethanolamine. Further, a tertiary amino group added by using these compounds can also be quaternized with, for example, dimethyl sulfate or diethyl sulfate.
The reaction between the cationic hydrophilic compound and an aliphatic isocyanate and/or an alicyclic isocyanate can be carried out in the presence of a solvent. The solvent in this case preferably does not contain an active hydrogen group, and specific examples thereof include ethyl acetate, propylene glycol monomethyl ether acetate and dipropylene glycol dimethyl ether.
The cationic hydrophilic group added to the blocked polyisocyanate is preferably neutralized with a compound having an anionic group. Specific examples of the anionic group include a carboxy group, a sulfonic acid group, a phosphoric acid group, a halogen group and a sulfuric acid group.
Specific examples of the compound having a carboxy group include formic acid, acetic acid, propionic acid, butyric acid and lactic acid.
Specific examples of the compound having a sulfonic acid group include ethanesulfonic acid and the like.
Specific examples of the compound having a phosphoric acid group include phosphoric acid and acidic phosphoric acid esters.
Specific examples of the compound having a halogen group include hydrochloric acid and the like.
Specific examples of the compound having a sulfuric acid group include sulfuric acid and the like.
Among them, the compound having an anionic group is preferably a compound having a carboxy group, and more preferably acetic acid, propionic acid or butyric acid.

(Anionic hydrophilic compound)

Specific examples of the anionic hydrophilic group include a carboxy group, a sulfonic acid group, a phosphoric acid group, a halogen group and a sulfuric acid group.
Specific examples of the anionic hydrophilic compound include a compound having both an anionic group and an active hydrogen group, and more specifically, for example, a monohydroxycarboxylic acid or a compound having a carboxy group of polyhydroxycarboxylic acid as an anionic group can be mentioned.
Examples of the monohydroxycarboxylic acid include 1-hydroxyacetic acid, 3-hydroxypropanoic acid, 12-hydroxy-9-octadecanoic acid, hydroxypivalic acid and lactic acid.
Examples of the compound having a carboxy group of polyhydroxycarboxylic acid as an anionic group include dimethylolacetic acid, 2,2-dimethylolbutyric acid, 2,2-dimethylolpentanoic acid, dihydroxysuccinic acid and dimethylolpropionic acid.
Further, a compound having both a sulfonic acid group and an active hydrogen group can also be exemplified, and more specifically, for example, isethionic acid and the like can be exemplified.
Among them, hydroxypivalic acid or dimethylolpropionic acid is preferred as the compound having both an anionic group and an active hydrogen group.
The anionic hydrophilic group added to the blocked polyisocyanate is preferably neutralized with an amine-based compound, which is a basic substance.

Specific examples of the amine-based compound include ammonia and water-soluble amino compounds.

Specific examples of the water-soluble amino compound include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine and morpholine. Further, examples also include tertiary amines such as triethylamine and dimethylethanolamine, and these can also be used. Any one of these amine-based compounds may be used alone, or two or more types thereof may be used in combination.

(Ratio of active hydrogen groups in nonionic hydrophilic compound)

The blocked polyisocyanate composition of the present embodiment preferably contains a nonionic hydrophilic group as the hydrophilic group. The amount of the nonionic hydrophilic group modification is preferably an amount such that the ratio of the active hydrogen groups of the hydrophilic compound with respect to 100 moles of isocyanate groups is 0.5 moles or more and 30 moles or less. This modification amount is more preferably 1 mole or more and 25 moles or less, still more preferably 3 moles or more and 20 moles or less, and most preferably 5 moles or more and 15 moles or less.

When this modification amount is equal to or more than 0.5 moles, the dispersibility of the water-based coating composition can be favorably maintained, and when this modification amount is equal to or less than 30 moles, the water resistance of the obtained coating film can be favorably maintained.

(Number average molecular weight of polyoxyethylene compound)

The hydrophilic compound used in the blocked polyisocyanate composition of the present embodiment is preferably a polyoxyethylene compound having a number average molecular weight of 200 or more and 2,000 or less.

The number average molecular weight is more preferably 300 or more and 1,500 or less, still more preferably 350 or more and 1,200 or less, and most preferably 400 or more and 1,000 or less.

When the number average molecular weight of the polyoxyethylene compound is equal to or more than 200, the dispersibility of the water-based coating composition can be maintained, and when the number average molecular weight is equal to or less than 2000, the water resistance of the obtained coating film can be favorably maintained.

The "polyoxyethylene compound" means a hydrophilic compound to which ethylene oxide is added, and is preferably a nonionic hydrophilic compound to which ethylene oxide is added.

<Blocking agent component>

The blocked polyisocyanate compound (A) is derived from a polyisocyanate, a hydrophilic compound, and an imidazole-based blocking agent (d) having a structure represented by the following general formula (II).

[Imidazole-based blocking agent (d)]

The blocked polyisocyanate compound (A) is formed by being blocked with an imidazole-based blocking agent (d) represented by the following general formula (II).

[Chemical Formula 9]

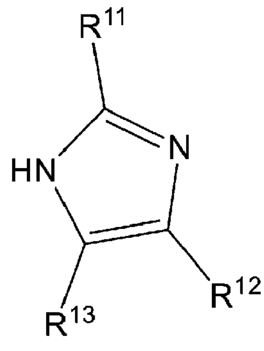

(II)

in the general formula (II), each of $R^{11}$, $R^{12}$ and $R^{13}$ independently represents a hydrogen atom or an alkyl group which

may contain one or more substituents selected from the group consisting of a hydroxy group and an amino group, and a total number of carbon atoms of $R^{11}$, $R^{12}$ and $R^{13}$ is 1 or more and 20 or less.

($R^{11}$, $R^{12}$ and $R^{13}$)

From the viewpoint of compatibility, the alkyl group represented by $R^{11}$, $R^{12}$ and $R^{13}$ preferably has 1 to 20 carbon atoms, more preferably 1 to 8 carbon atoms, still more preferably 1 to 6 carbon atoms, and particularly preferably 1 to 4 carbon atoms.

Specific examples of alkyl groups having no substituents include a methyl group, an ethyl group, a propyl group, an isopropyl group, an n-butyl group, a tert-butyl group, a sec-butyl group, an isobutyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a 2-ethylhexyl group, a nonyl group and a decyl group.

When $R^{11}$, $R^{12}$ and $R^{13}$ are alkyl groups having a substituent, the substituent is a hydroxy group or an amino group.

Examples of the alkyl group containing a hydroxy group as a substituent include a hydroxymethyl group, a hydroxyethyl group and a hydroxypropyl group.

Examples of the alkyl group containing an amino group as a substituent include an aminomethyl group, an aminoethyl group, an aminopropyl group and an aminobutyl group.

Examples of the alkyl group containing a hydroxy group and an amino group as substituents include a hydroxyaminomethyl group, a hydroxy aminoethyl group and a hydroxyaminopropyl group.

Among them, from the viewpoint of compatibility of the blocked polyisocyanate composition, at least one of $R^{11}$, $R^{12}$ and $R^{13}$ is preferably an alkyl group, and more preferably, only $R^{11}$ is an alkyl group from the viewpoint of low-temperature curability. Further, from the viewpoint of industrial availability, it is still more preferable that $R^{12}$ and $R^{13}$ are hydrogen atoms and $R^{11}$ is a methyl group or an ethyl group.

(Other blocking agents)

Blocking agents other than the imidazole-based compounds can also be used as the blocking agent used in the blocked polyisocyanate composition as long as the low-temperature curability, recoat adhesion, and the like are not deteriorated.

More specifically, the following can be exemplified.

1) Triazole-based compounds, 2) pyrazole-based compounds, 3) alcohol-based compounds, 4) active methylene-based compounds, 5) alkylphenol-based compounds, 6) phenol-based compounds, 7) mercaptan-based compounds, 8) acid amide-based compounds, 9) acid imide-based compounds, 10) urea-based compounds, 11) oxime-based compounds, 12) amine-based compounds, 13) imine-based compounds, 14) bisulfites, and the like can be mentioned. Any one of these blocking agents may be used alone, or two or more types thereof may be used in combination.

1) Triazole-based compounds: 1,2,4-triazole, 1,2,3-triazole.
2) Pyrazole-based compounds: pyrazole, 3-methylpyrazole, 3,5-dimethylpyrazole.
3) Alcohol-based compounds: alcohols such as methanol, ethanol, 2-propanol, n-butanol, sec-butanol, 2-ethyl-1-hexanol, 2-methoxyethanol, 2-ethoxyethanol and 2-butoxyethanol.
4) Active methylene-based compounds: malonic acid diesters (dimethyl malonate, diethyl malonate, diisopropyl malonate, di-tert-butyl malonate), acetoacetic acid esters (methyl acetoacetate, ethyl acetoacetate, methyl isobutanoylacetate, ethyl isobutanoylacetate), acetylacetone and the like.
5) Alkylphenol-based compounds: mono- and dialkylphenols having an alkyl group of 4 or more carbon atoms as a substituent. Specific examples of alkylphenol-based compounds include monoalkylphenols such as n-propylphenol, iso-propylphenol, n-butylphenol, sec-butylphenol, tert-butylphenol, n-hexylphenol, 2-ethylhexylphenol, n-octylphenol and n-nonylphenol; and dialkylphenols such as di-n-propylphenol, diisopropylphenol, isopropylcresol, di-n-butylphenol, di-tert-butylphenol, di-sec-butylphenol, di-n-octylphenol, di-2-ethylhexylphenol and di-n-nonylphenol.
6) Phenol-based compounds: phenol, cresol, ethylphenol, styrenated phenol, hydroxybenzoic acid esters and the like.
7) Mercaptan-based compounds: butyl mercaptan, dodecyl mercaptan and the like.
8) Acid amide-based compounds: acetanilide, acetic acid amide, ε-caprolactam, δ-valerolactam, γ-butyrolactam and the like.
9) Acid imide-based compounds: succinimide, maleimide and the like.

10) Urea-based compounds: urea, thiourea, ethylene urea and the like.
11) Oxime-based compounds: formaldoxime, acetaldoxime, acetoxime, methyl ethyl ketoxime, cyclohexanone oxime and the like.
12) Amine-based compounds: diphenylamine, aniline, carbazole, di-n-propylamine, diisopropylamine, isopropylethylamine and the like.
13) Imine-based compounds: ethyleneimine, polyethyleneimine and the like.
14) Bisulfite compounds: sodium bisulfite and the like.

Among them, from the viewpoint of low-temperature curability and recoat adhesion, 1) triazole-based compounds, 2) pyrazole-based compounds, 4) active methylene-based compounds and 11) oxime-based compounds are preferred, 2) pyrazole-based compounds and 4) active methylene-based compounds are more preferred, and 2) pyrazole-based compounds are still more preferred.

Among the pyrazole-based compounds, 3-methylpyrazole and 3,5-dimethylpyrazole are preferred, and 3,5-dimethylpyrazole is more preferred.

The blocked polyisocyanate composition of the present embodiment preferably contains, in addition to the above blocked polyisocyanate compound (A), a blocked polyisocyanate compound (E) different from the blocked polyisocyanate compound (A). As a result, the low-temperature curability can be improved, and the water resistance of the resin film can be improved. The above blocked polyisocyanate compound (E) is preferably derived from a blocking agent (e) different from the imidazole-based blocking agent (d) used in the production of the above blocked polyisocyanate compound (A). The above blocked polyisocyanate compound (E) is preferably derived from a polyisocyanate obtained from an aliphatic isocyanate and/or an alicyclic isocyanate, a hydrophilic compound, and the above blocking agent (e).

The above blocking agent (e) can be used without any particular limitations as long as it is different from the imidazole-based blocking agent (d). For example, the compounds described in the above 1) to 14) can be used. Among these compounds, since the low-temperature curability and the water resistance of the resin film can be further improved, the above blocking agent (e) is preferably an active methylene-based blocking agent, and examples thereof include a malonic acid ester compound having a primary, secondary or tertiary alkyl group. The above blocked polyisocyanate compound (E) more preferably has a structure represented by the following general formula (III) due to the reaction between the above blocking agent (e) and the isocyanate group of a polyisocyanate compound.

[Chemical Formula 10]

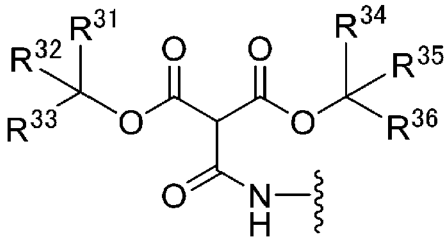

(III)

In the general formula (III), each of at least two or more of $R^{31}$, $R^{32}$ and $R^{33}$ independently represents an alkyl group which may contain one or more substituents selected from the group consisting of a hydroxy group and an amino group; and all of $R^{31}$, $R^{32}$ and $R^{33}$ are preferably the above alkyl groups which may contain substituents, and the total number of carbon atoms of $R^{31}$, $R^{32}$ and $R^{33}$ is 2 or more and 20 or less, each of $R^{34}$, $R^{35}$ and $R^{36}$ independently represents a hydrogen atom or an alkyl group which may contain one or more substituents selected from the group consisting of a hydroxy group and an amino group, and a wavy line represents a bond.

The alkyl group represented by $R^{31}$, $R^{32}$, $R^{31}$, $R^{34}$, $R^{35}$ and $R^{36}$ preferably has 1 or more and 20 or less carbon atoms, more preferably 1 or more and 8 or less carbon atoms, still more preferably 1 or more and 6 or less carbon atoms, and particularly preferably 1 or more and 4 or less carbon atoms. Specific examples of alkyl groups having no substituents include a methyl group, an ethyl group, a propyl group, an isopropyl group, an n-butyl group, a tert-butyl group, a sec-butyl group, an isobutyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a 2-ethylhexyl group, a nonyl group and a decyl group.

Further, when $R^{31}$, $R^{32}$, $R^{31}$, $R^{34}$, $R^{35}$ and $R^{36}$ are alkyl groups having a substituent, the substituent is preferably a hydroxy group or an amino group.

Examples of the alkyl group containing a hydroxy group as a substituent include a hydroxymethyl group, a hydroxyethyl group and a hydroxypropyl group.

Examples of the alkyl group containing an amino group as a substituent include an aminomethyl group, an aminoethyl group, an aminopropyl group and an aminobutyl group.

Examples of the alkyl group containing a hydroxy group and an amino group as substituents include a hydroxy aminomethyl group, a hydroxy aminoethyl group and a hydroxyaminopropyl group.

Among them, since the storage stability when forming a water-based resin composition and the low-temperature curability when forming a resin film are further improved, it is preferable that each of $R^{31}$, $R^{32}$ and $R^{33}$ independently represents an alkyl group, and the alkyl group is preferably a methyl group or an ethyl group. However, when at least one of $R^{31}$, $R^{32}$ and $R^{33}$ is a hydrogen atom and each of $R^{34}$, $R^{35}$ and $R^{36}$ independently represents an alkyl group, the above general formula (III) has a structure so that each of $R^{31}$, $R^{32}$ and $R^{33}$ independently represents an alkyl group, and at least one of $R^{34}$, $R^{35}$ and $R^{36}$ is a hydrogen atom.

The total number of carbon atoms of $R^{31}$, $R^{32}$ and $R^{33}$ is 2 or more and 20 or less, preferably 3 or more and 12 or less, more preferably 4 or more and 9 or less, and still more preferably 4 or more and 6 or less.

When the total number of carbon atoms of $R^{31}$, $R^{32}$ and $R^{33}$ is equal to or more than the above lower limit value, the storage stability can be brought about when forming a water-based resin composition. On the other hand, when the total number of carbon atoms is equal to or less than the above upper limit value, the low-temperature curability can be brought about.

Further, each of $R^{34}$, $R^{35}$ and $R^{36}$ independently represents a hydrogen atom or an alkyl group which may contain one or more substituents selected from the group consisting of a hydroxy group and an amino group. Among the various possibilities, it is preferable that at least one of $R^{34}$, $R^{35}$ and $R^{36}$ is a hydrogen atom, and it is more preferable that only one of them is a hydrogen atom.

When at least one of $R^{34}$, $R^{35}$ and $R^{36}$ is a hydrogen atom, it is possible to further improve the storage stability when forming a water-based resin composition while maintaining the low-temperature curability.

The total number of carbon atoms of $R^{34}$, $R^{35}$ and $R^{36}$ is preferably 2 or more and 20 or less, more preferably 3 or more and 12 or less, still more preferably 4 or more and 9 or less, and particularly preferably 4 or more and 6 or less.

Specific examples of the above malonic acid ester compounds include malonic acid ester compounds having a primary alkyl group, such as dimethyl malonate, diethyl malonate, dipropyl malonate, dibutyl malonate, dicyclohexyl malonate and diphenyl malonate; malonic acid ester compounds having a secondary alkyl group, such as di-sec-butyl malonate, diisopropyl malonate and isopropyl ethyl malonate; and malonic acid ester compounds having a tertiary alkyl group, such as di-tert-butyl malonate, di(2-methyl-2-butyl) malonate, di(2-methyl-2-pentyl) malonate, (tert-butyl)ethyl malonate, (2-methyl-2-butyl)ethyl malonate, (2-methyl-2-butyl)isopropyl malonate, (2-methyl-2-pentyl)ethyl malonate, (2-methyl-2-pentyl)isopropyl malonate and (2-methyl-2-pentyl)hexyl isopropyl malonate.

By adding an alcohol having a chain-like alkyl group to a reaction product of a polyisocyanate compound and an active methylene-based blocking agent having an ester moiety, it is also possible to introduce an alkyl group derived from the alcohol due to transesterification at the terminal ester moiety of the reaction product. The above alcohol having a chain-like alkyl group is not particularly limited, but is preferably a monoalcohol, and specific examples thereof include primary monoalcohols such as methanol, ethanol, propanol, butanol, hexanol and 2-ethylhexanol; secondary monoalcohols such as isopropanol, 2-butanol, 2-pentanol and 2-hexanol; and tertiary monoalcohols such as tert-butanol, 2-methyl-2-butanol, 2-methyl-2-pentanol, 2-methyl-2-hexanol, 2-methyl-2-heptanol, 2-methyl-2-octanol, 3-methyl-3-pentanol, 3-ethyl-3-hexanol and 3-ethyl-3-octanol.

A mixing ratio (A/E) of the above blocked polyisocyanate compound (A) and the above blocked polyisocyanate compound (E) is not particularly limited, but is preferably from 5/95 to 95/5 in mass ratio, more preferably from 10/90 to 90/10, still more preferably from 15/85 to 85/15, and still more preferably from 25/75 to 75/25.

Further, from the viewpoint of further improving the storage stability, a rate of modification of the above blocked polyisocyanate compound (A) with a hydrophilic compound is preferably higher than a rate of modification of the above blocked polyisocyanate compound (E) with a hydrophilic compound. The modification rate can also be referred to as the content of hydrophilic groups contained in the blocked polyisocyanate compound.

<Polyisocyanate>

A polyisocyanate used in the blocked polyisocyanate composition of the present embodiment is a reaction product obtained by reacting a plurality of monomer compounds (hereinafter may be referred to as "isocyanate monomers") having one or more isocyanate groups (-NCO).

The isocyanate monomer preferably has 4 or more and 30 or less carbon atoms. Specific examples of the isocyanate monomer include the following monomers. Any one of these isocyanate monomers may be used alone, or two or more types thereof may be used in combination.

(1) Aliphatic diisocyanates such as 1,4-tetramethylene diisocyanate, 1,6-hexamethylene diisocyanate (hereinafter, sometimes referred to as "HDI"), 2,2,4-trimethyl-1,6-diisocyanatohexane, 2,4,4-trimethyl-1,6-hexamethylene diisocyanate, 2-methylpentane-1,5-diisocyanate (MPDI) and lysine diisocyanate (hereinafter, sometimes referred to as "LDI").

(2) Alicyclic diisocyanates such as isophorone diisocyanate (hereinafter, sometimes referred to as "IPDI"), 1,3-bis(diisocyanate methyl) cyclohexane, 4,4'-dicyclohexylmethane diisocyanate, diisocyanate norbornane and di(isocyanate methyl) norbornane.

(3) Aliphatic triisocyanates and/or alicyclic triisocyanates such as 4-isocyanate methyl-1,8-octamethylene diisocyanate (hereinafter, sometimes referred to as "NTI"), 1,3,6-hexamethylene triisocyanate (hereinafter, sometimes referred to as "HTI"), bis(2-isocyanatoethyl)2-isocyanatoglutarate (hereinafter, sometimes referred to as "GTI") and lysine triisocyanate (hereinafter, sometimes referred to as "LTI").

In the present embodiment, the isocyanate monomer is an aliphatic isocyanate and/or an alicyclic isocyanate, and preferably an aliphatic diisocyanate and/or an alicyclic diisocyanate. By using an aliphatic isocyanate and/or an alicyclic isocyanate as the isocyanate monomer, a coating film excellent in weather resistance can be obtained. Further, as the isocyanate monomer, HDI or IPDI is more preferred from the viewpoint of industrial availability. Moreover, as the isocyanate monomer, HDI is still more preferred from the viewpoint of lowering the viscosity of the blocked polyisocyanate component.

Further, as the isocyanate monomer used for producing the polyisocyanate, although either an aliphatic isocyanate or an alicyclic isocyanate may be used alone, either an aliphatic diisocyanate or an alicyclic diisocyanate may be used alone, or a combination thereof may be used, it is preferable to use an aliphatic diisocyanate and an alicyclic diisocyanate in combination, and it is particularly preferable to use HDI and IPDI. By using an aliphatic diisocyanate and an alicyclic diisocyanate, it is possible to further improve the toughness and hardness when forming a coating film.

In the polyisocyanate, from the viewpoint of improving the coating film hardness and strength, a mass ratio of the structural unit derived from an aliphatic isocyanate with respect to the structural unit derived from an alicyclic isocyanate (structural unit derived from an aliphatic isocyanate / structural unit derived from an alicyclic isocyanate) is preferably 50/50 or more and 95/5 or less, more preferably 55/45 or more and 93/7 or less, still more preferably 60/40 or more and 91/9 or less, and still more preferably 65/35 or more and 90/10 or less.

When the mass ratio of the structural unit derived from an aliphatic isocyanate with respect to the structural unit derived from an alicyclic isocyanate is equal to or more than the above lower limit value, it is possible to suppress the decrease in flexibility more effectively when forming a coating film. On the other hand, when the mass ratio is equal to or less than the above upper limit value, the hardness when forming a coating film can be further improved.

The mass ratio of the structural unit derived from an aliphatic isocyanate with respect to the structural units derived from an alicyclic isocyanate can be calculated using, for example, the following method. First, from the mass of the unreacted isocyanate after reaction and the concentrations of the aliphatic isocyanate and the alicyclic isocyanate in this unreacted isocyanate obtained by gas chromatographic measurement, the mass of the unreacted aliphatic isocyanate and the mass of the unreacted alicyclic isocyanate are calculated. Then, after subtracting the mass of the unreacted aliphatic isocyanate and the mass of the unreacted alicyclic isocyanate calculated above from the mass of the charged aliphatic isocyanate and the mass of the alicyclic isocyanate, respectively, each of the obtained differences is defined as the mass of the structural unit derived from an aliphatic isocyanate and the mass of the structural unit derived from an alicyclic isocyanate. Then, by dividing the mass of the structural unit derived from an aliphatic isocyanate by the mass of the structural unit derived from an alicyclic isocyanate, the mass ratio of the structural unit derived from an aliphatic isocyanate with respect to the structural unit derived from an alicyclic isocyanate is obtained.

(Polyol)

The polyisocyanate is preferably derived from the isocyanate monomer described above and a polyol having an average number of hydroxyl functional groups of 3.0 or more and 8.0 or less. This makes it possible to increase the average number of isocyanate groups in the obtained polyisocyanate. In this polyisocyanate, a urethane group is formed by the reaction between the hydroxyl group of the polyol and the isocyanate group of the isocyanate monomer.

The average number of hydroxyl functional groups in the polyol is preferably 3.0 or more and 8.0 or less, more preferably 3 or more and 6 or less, still more preferably 3 or more and 5 or less, and particularly preferably 3 or 4. It should be noted that the average number of hydroxyl functional groups in the polyol mentioned here is the number of hydroxyl groups present in one molecule of the polyol.

The number average molecular weight of the polyol is preferably 100 or more and 1,000 or less, more preferably 100 or more and 900 or less, still more preferably 100 or more and 600 or less, still more preferably 100 or more and 570 or less, still more preferably 100 or more and 500 or less, still more preferably 100 or more and 400 or less, particularly preferably 100 or more and 350 or less, and most preferably 100 or more and 250 or less, from the viewpoint of improving

the coating film hardness and strength.

When the number average molecular weight of the polyol is within the above range, the blocked polyisocyanate composition is excellent in low-temperature curability when forming a coating film, and is particularly excellent in hardness and strength. The number average molecular weight Mn of the polyol is, for example, a number average molecular weight based on polystyrene measured by GPC.

Examples of such polyols include trimethylolpropane, glycerol, and polycaprolactone polyols derived from trihydric or higher polyhydric alcohols and ε-caprolactone.

Examples of commercially available products of the polycaprolactone polyol include "Placcel 303" (number average molecular weight: 300), "Placcel 305" (number average molecular weight: 550), "Placcel 308" (number average molecular weight: 850) and "Placcel 309" (number average molecular weight: 900) manufactured by Daicel Corporation.

(Method for producing polyisocyanate)

A method for producing a polyisocyanate will be described in detail below.

The polyisocyanate can be obtained, for example, by carrying out an allophanate-forming reaction for forming an allophanate group, a uretdione-forming reaction for forming a uretdione group, an iminooxadiazinedione-forming reaction for forming an iminooxadiazinedione group, an isocyanurate-forming reaction for forming an isocyanurate group, a urethane-forming reaction for forming a urethane group and a biuret-forming reaction for forming a biuret group at once in the presence of an excess of an isocyanate monomer, and removing the unreacted isocyanate monomer after the completion of the reaction. That is, the polyisocyanate obtained by the above reactions is a reaction product in which a plurality of the above isocyanate monomers are bonded, and having one or more members selected from the group consisting of an allophanate group, a uretdione group, an iminooxadiazinedione group, an isocyanurate group, a urethane group and a biuret group.

Alternatively, the above reactions may be carried out separately, and each of the separately obtained polyisocyanates may be mixed in a specific ratio.

From the viewpoint of ease of production, it is preferable to carry out the above reactions at once to obtain the polyisocyanate, and from the viewpoint of freely adjusting the molar ratio of each functional group, it is preferable to produce them separately and then mix them.

(1) Method for producing allophanate group-containing polyisocyanate

An allophanate group-containing polyisocyanate can be obtained by adding an alcohol to an isocyanate monomer and using an allophanate-forming reaction catalyst.

The alcohol used for forming the allophanate group is preferably an alcohol formed only with carbon, hydrogen and oxygen.

Specific examples of the alcohol include, but are not limited to, a monoalcohol and a dialcohol. Any one of these alcohols may be used alone, or two or more types thereof may be used in combination.

Examples of the monoalcohol include methanol, ethanol, propanol, butanol, pentanol, hexanol, heptanol, octanol, and nonanol.

Examples of the dialcohol include ethylene glycol, 1,3-butanediol, neopentyl glycol and 2-ethylhexanediol.

Among them, the alcohol is preferably a monoalcohol, and more preferably a monoalcohol having a molecular weight of 200 or less.

Examples of the allophanate-forming reaction catalyst include, but are not limited to, an alkyl carboxylic acid salt of tin, lead, zinc, bismuth, zirconium, zirconyl and the like.

Examples of the alkyl carboxylic acid salt of tin (organic tin compound) include tin 2-ethylhexanoate and dibutyltin dilaurate.

Examples of the alkyl carboxylic acid salt of lead (organic lead compound) include lead 2-ethylhexanoate and the like.

Examples of the alkyl carboxylic acid salt of zinc (organic zinc compound) include zinc 2-ethylhexanoate and the like.

Examples of the alkyl carboxylic acid salt of bismuth include bismuth 2-ethylhexanoate and the like.

Examples of the alkyl carboxylic acid salt of zirconium include zirconium 2-ethylhexanoate and the like.

Examples of the alkyl carboxylic acid salt of zirconyl include zirconyl 2-ethylhexanoate and the like. Any one of these catalysts can be used alone, or two or more types thereof can be used in combination.

Further, an isocyanurate-forming reaction catalyst which will be described later can also be used as the allophanate-forming reaction catalyst. When the allophanate-forming reaction is carried out using the isocyanurate-forming reaction catalyst described later, not surprisingly, an isocyanurate group-containing polyisocyanate (hereinafter sometimes referred to as "isocyanurate-type polyisocyanate") is also produced.

Among the catalysts, from the viewpoint of economical production, it is preferable to carry out the allophanate-forming reaction and the isocyanurate-forming reaction by using the isocyanurate-forming reaction catalyst described later as the allophanate-forming reaction catalyst.

The lower limit value of the amount of the above-mentioned allophanate-forming reaction catalyst to be used is preferably 10 ppm by mass, more preferably 20 ppm by mass, still more preferably 40 ppm by mass, and particularly preferably 80 ppm by mass with respect to the mass of the charged isocyanate monomer.

The upper limit value of the amount of the above-mentioned allophanate-forming reaction catalyst to be used is preferably 1,000 ppm by mass, more preferably 800 ppm by mass, still more preferably 600 ppm by mass, and particularly preferably 500 ppm by mass with respect to the mass of the charged isocyanate monomer.

That is, the amount of the above-mentioned allophanate-forming reaction catalyst to be used is preferably 10 ppm by mass or more and 1,000 ppm by mass or less, more preferably 20 ppm by mass or more and 800 ppm by mass or less, still more preferably 40 ppm by mass or more and 600 ppm by mass or less, and particularly preferably 80 ppm by mass or more and 500 ppm by mass or less with respect to the mass of the charged isocyanate monomer.

In addition, the lower limit value of the allophanate-forming reaction temperature is preferably 40°C, more preferably 60°C, still more preferably 80°C, and particularly preferably 100°C.

In addition, the upper limit value of the allophanate-forming reaction temperature is preferably 180°C, more preferably 160°C, and still more preferably 140°C.

That is, the allophanate-forming reaction temperature is preferably 40°C or higher and 180°C or lower, more preferably 60°C or higher and 160°C or lower, still more preferably 80°C or higher and 140°C or lower, and particularly preferably 100°C or higher and 140°C or lower.

When the allophanate-forming reaction temperature is equal to or more than the above lower limit value, the reaction rate can be further improved. When the allophanate-forming reaction temperature is equal to or less than the above upper limit value, there is a tendency that coloration or the like of the polyisocyanate can be suppressed more effectively.

(2) Method for producing uretdione group-containing polyisocyanate

When a polyisocyanate having a uretdione group is derived from an isocyanate monomer, it can be produced, for example, by polymerizing the isocyanate monomer using a uretdione-forming reaction catalyst or by heating.

Examples of the uretdione-forming reaction catalyst include, but are not particularly limited to, tertiary phosphines such as trialkylphosphines, tris(dialkylamino)phosphines and cycloalkylphosphines, and Lewis acids.

Examples of the trialkylphosphine include tri-n-butylphosphine and tri-n-octylphosphine.

Examples of the tris(dialkylamino)phosphine include tris-(dimethylamino)phosphine and the like.

Examples of the cycloalkylphosphine include cyclohexyl-di-n-hexylphosphine and the like.

Examples of the Lewis acid include boron trifluoride and zinc oxychloride.

Many of the uretdione-forming reaction catalysts can also promote the isocyanurate-forming reaction at the same time.

When a uretdione-forming reaction catalyst is used, it is preferable to stop the uretdione-forming reaction by adding a deactivator of the uretdione-forming reaction catalyst such as phosphoric acid or methyl p-toluenesulfonate at the time when the desired yield is reached.

In addition, in the case of obtaining a polyisocyanate having a uretdione group by heating one or more diisocyanates selected from the group consisting of the above aliphatic diisocyanates and the above alicyclic diisocyanates without using a uretdione-forming reaction catalyst, the heating temperature is preferably 120°C or higher, and more preferably 150°C or higher and 170°C or lower. Further, the heating time is preferably 1 hour or more and 4 hours or less.

(3) Method for producing iminooxadiazinedione group-containing polyisocyanate

When an iminooxadiazinedione group-containing polyisocyanate is derived from an isocyanate monomer, an iminooxadiazinedione-forming reaction catalyst is usually used.

Examples of the iminooxadiazinedione-forming reaction catalyst include those shown in 1) or 2) below.

1) A (poly)hydrogen fluoride compound represented by a general formula $M[F_n]$ or a general formula $M[F_n(HF)_m]$. (In the formula, m and n are integers that satisfy a relationship of $m/n > 0$, M is an n-charged cation (mixture) or one or more radicals having a valence of n in total.)

2) A compound composed of a compound represented by a general formula $R^1$-$CR'_2$-C(O)O- or a general formula $R^2$=CR'-C(O)O-, and a quaternary ammonium cation or a quaternary phosphonium cation.
(In the formula, $R^1$ represents a linear, branched or cyclic saturated or unsaturated perfluoroalkyl group having 1 to 30 carbon atoms; $R^2$ represents a linear, branched or cyclic saturated or unsaturated perfluoroalkylidene group

having 1 to 30 carbon atoms, and each of a plurality of R's independently represents a hydrogen atom, or an alkyl group or aryl group having 1 to 20 carbon atoms which may contain a hetero atom.)

Specific examples of the compound 1) ((poly)hydrogen fluoride compound) include tetramethylammonium fluoride hydrate and tetraethylammonium fluoride.

Specific examples of the compound 2) include 3,3,3-trifluorocarboxylic acid, 4,4,4,3,3-pentafluorobutanoic acid, 5,5,5,4,4,3,3-heptafluoropentanoic acid and 3,3-difluoroprop-2-enoic acid.

Among them, as the iminooxadiazinedione-forming reaction catalyst, the compound 1) is preferable from the viewpoint of availability, and the compound 2) is preferable from the viewpoint of safety.

Although the lower limit value of the amount of the iminooxadiazinedione-forming reaction catalyst to be used is not particularly limited, from the viewpoint of reactivity, it is preferably 5 ppm, more preferably 10 ppm, and still more preferably 20 ppm, in mass ratio, with respect to the isocyanate monomer such as HDI as a raw material.

The upper limit value of the amount of the iminooxadiazinedione-forming reaction catalyst to be used is preferably 5,000 ppm, more preferably 2,000 ppm, and still more preferably 500 ppm, in mass ratio, with respect to the isocyanate monomer such as HDI as a raw material from the viewpoint of suppressing the coloration and discoloration of the product and controlling the reaction.

That is, the amount of the iminooxadiazinedione-forming reaction catalyst to be used is preferably 5 ppm or more and 5,000 ppm or less, more preferably 10 ppm or more and 2,000 ppm or less, and still more preferably 20 ppm or more and 500 ppm or less, in mass ratio, with respect to the isocyanate monomer such as HDI as a raw material.

Although the lower limit value of the reaction temperature for the iminooxadiazinedione-forming reaction is not particularly limited, from the viewpoint of reaction rate, it is preferably 40°C, more preferably 50°C, and still more preferably 60°C.

The upper limit value of the reaction temperature for the iminooxadiazinedione-forming reaction is preferably 150°C, more preferably 120°C, and still more preferably 110°C from the viewpoint of suppressing the coloration and discoloration of the product.

That is, the reaction temperature for the iminooxadiazinedione-forming reaction is preferably 40°C or higher and 150°C or lower, more preferably 50°C or higher and 120°C or lower, and still more preferably 60°C or higher and 110°C or lower.

The iminooxadiazinedione-forming reaction can be stopped at the time when the iminooxadiazinedione-forming reaction reaches the desired content of the iminooxadiazinedione group. The iminooxadiazinedione-forming reaction can be stopped, for example, by adding an acidic compound to the reaction solution. Examples of the acidic compound include phosphoric acid, acidic phosphoric acid esters, sulfuric acid, hydrochloric acid and sulfonic acid compounds. As a result, the iminooxadiazinedione-forming reaction catalyst is neutralized or deactivated by thermal decomposition, chemical decomposition or the like. After stopping the reaction, filtration is performed if necessary.

(4) Method for producing isocyanurate group-containing polyisocyanate

Examples of the catalyst for deriving the polyisocyanate containing an isocyanurate group from an isocyanate monomer include a commonly used isocyanurate-forming reaction catalyst.

Although the isocyanurate-forming reaction catalyst is not particularly limited, it is generally preferable to have basicity. Specific examples of the isocyanurate-forming reaction catalyst include those shown below.

1) Hydroxides of tetraalkylammoniums such as tetramethylammonium, tetraethylammonium and tetrabutylammonium, and weak organic acid salts such as acetates, propionates, octylates, caprates, myristates and benzoates of the above tetraalkylammoniums.
2) Hydroxides of aryltrialkylammoniums such as benzyltrimethylammonium and trimethylphenylammonium, and weak organic acid salts such as acetates, propionates, octylates, caprates, myristates and benzoates of the above aryltrialkylammoniums.
3) Hydroxides of hydroxyalkylammoniums such as trimethylhydroxyethylammonium, trimethylhydroxypropylammonium, triethylhydroxyethylammonium and triethylhydroxypropylammonium, and weak organic acid salts such as acetates, propionates, octylates, caprates, myristates and benzoates of the above hydroxyalkylammoniums.
4) Salts of metals such as tin, zinc and lead of alkylcarboxylic acids such as acetic acid, propionic acid, caproic acid, octylic acid, capric acid and myristic acid.
5) Alcoholates of metals such as sodium and potassium.
6) Aminosilyl group-containing compounds such as hexamethylenedisilazane and the like.
7) Mannich bases.
8) Mixtures of tertiary amines and epoxy compounds.
9) Phosphorus-based compounds such as tributylphosphine and the like.

Among them, from the viewpoint of hardly generating unnecessary byproducts, the isocyanurate-forming reaction catalyst is preferably a quaternary ammonium hydroxide or a weak organic acid salt of quaternary ammonium, and more preferably a hydroxide of tetraalkylammonium, a weak organic acid salt of tetraalkylammonium, a hydroxide of aryltrialkylammonium, or a weak organic acid salt of aryltrialkylammonium.

The upper limit value of the amount of the above-mentioned isocyanurate-forming reaction catalyst to be used is preferably 1,000 ppm by mass, more preferably 500 ppm by mass, and still more preferably 100 ppm by mass with respect to the mass of the charged isocyanate monomer.

On the other hand, although the lower limit value of the amount of the above-mentioned isocyanurate-forming reaction catalyst to be used is not particularly limited, it may be, for example, 10 ppm by mass.

The isocyanurate-forming reaction temperature is preferably 50°C or higher and 120°C or lower, and more preferably 60°C or higher and 90°C or lower. When the isocyanurate-forming reaction temperature is equal to or less than the above upper limit value, there is a tendency that coloration or the like of the polyisocyanate can be suppressed more effectively.

At the time when the desired conversion rate (ratio of the mass of the polyisocyanate produced in the isocyanurate-forming reaction with respect to the mass of the charged isocyanate monomer) is reached, the isocyanurate-forming reaction is stopped by adding an acidic compound (for example, phosphoric acid, acidic phosphoric acid esters or the like).

It should be noted that in order to obtain the polyisocyanate, it is necessary to stop the progress of the reaction at an initial stage. However, since the reaction rate at the initial stage of the isocyanurate-forming reaction is very fast, it is difficult to stop the progress of the reaction at the initial stage, and it is necessary to carefully select the reaction conditions, especially the amount of the catalyst added and the addition method thereof. For example, a method of adding the catalyst in divided portions at regular intervals or the like is recommended as a suitable method.

Therefore, the conversion rate of the isocyanurate-forming reaction for obtaining the polyisocyanate is preferably 10% or more and 60% or less, more preferably 15% or more and 55% or less, and still more preferably 20% or more and 50% or less.

When the conversion rate of the isocyanurate-forming reaction is equal to or less than the above upper limit value, it is possible to allow the blocked polyisocyanate component to have a lower viscosity. Further, when the conversion rate of the isocyanurate-forming reaction is equal to or more than the above lower limit value, the operation to stop the reaction can be performed more easily.

Further, when deriving a polyisocyanate containing an isocyanurate group, an alcohol having a valence of 1 or more and 6 or less can be used in addition to the above isocyanate monomer.

Examples of the alcohols having a valence of 1 or more and 6 or less that can be used include non-polymerizable alcohols and polymerizable alcohols. The term "non-polymerizable alcohol" as used herein means an alcohol having no polymerizable groups. On the other hand, the term "polymerizable alcohol" means an alcohol obtained by polymerizing a monomer having a polymerizable group and a hydroxyl group.

Examples of the non-polymerizable alcohol include polyhydric alcohols such as monoalcohols, diols, triols and tetraols.

Examples of the monoalcohols include methanol, ethanol, n-propanol, isopropanol, n-butanol, isobutanol, sec-butanol, n-pentanol, n-hexanol, n-octanol, n-nonanol, 2-ethylbutanol, 2,2-dimethylhexanol, 2-ethylhexanol, cyclohexanol, methylcyclohexanol and ethylcyclohexanol.

Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethyl pentanediol, 2-butyl-2-ethyl-1,3-propanediol and 2,2-diethyl-1,3-propanediol.

Examples of the triols include glycerin and trimethylolpropane.

Examples of the tetraols include pentaerythritol and the like.

Examples of the polymerizable alcohol include, but are not particularly limited to, polyester polyols, polyether polyols, acrylic polyols and polyolefin polyols.

Examples of the polyester polyols include, but are not particularly limited to, a product obtained by a condensation reaction of a single dibasic acid or a mixture of dibasic acids with a single polyhydric alcohol or a mixture of polyhydric alcohols.

Examples of the dibasic acid include, but are not particularly limited to, at least one dibasic acid selected from the group consisting of carboxylic acids such as succinic acid, adipic acid, sebacic acid, dimer acid, maleic anhydride, phthalic anhydride, isophthalic acid and terephthalic acid.

Examples of the polyhydric alcohol include, but are not particularly limited to, at least one polyhydric alcohol selected from the group consisting of ethylene glycol, propylene glycol, diethylene glycol, neopentyl glycol, trimethylolpropane and glycerin.

Further, examples of the polyester polyols include polycaprolactones obtained by ring-opening polymerization of ε-caprolactone using the above polyhydric alcohol.

Examples of the polyether polyols include, but are not particularly limited to, polyether polyols obtained by adding a single alkylene oxide or a mixture of alkylene oxides to a single polyhydric alcohol or a mixture of polyhydric alcohols using an alkali metal hydroxide or a strongly basic catalyst, polyether polyols obtained by reacting a polyamine compound with an alkylene oxide, and so-called polymer polyols obtained by polymerizing an acrylamide and the like using the above polyethers as a medium.

Examples of the alkali metal include lithium, sodium and potassium.

Examples of the strongly basic catalyst include alcoholates and alkylamines.

Examples of the polyhydric alcohol include the same as those exemplified in the above polyester polyols.

Examples of the alkylene oxide include ethylene oxide, propylene oxide, butylene oxide, cyclohexene oxide and styrene oxide.

Examples of the polyamine compound include ethylenediamines and the like.

Examples of the acrylic polyol include, but are not particularly limited to, acrylic polyols obtained by copolymerizing a single ethylenically unsaturated bond-containing monomer having a hydroxyl group or a mixture thereof with another single ethylenically unsaturated bond-containing monomer copolymerizable therewith or a mixture thereof.

Examples of the ethylenically unsaturated bond-containing monomer having a hydroxyl group include, but are not particularly limited to, hydroxyethyl acrylate, hydroxypropyl acrylate, hydroxybutyl acrylate, hydroxyethyl methacrylate, hydroxypropyl methacrylate and hydroxybutyl methacrylate.

Examples of the other ethylenically unsaturated bond-containing monomers copolymerizable with the ethylenically unsaturated bond-containing monomer having a hydroxyl group include, but are not particularly limited to, acrylic acid esters, methacrylic acid esters, unsaturated carboxylic acids, unsaturated amides, vinyl-based monomers, and vinyl-based monomers having a hydrolyzable silyl group.

Examples of the acrylic acid ester include methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate and phenyl acrylate.

Examples of the methacrylic acid ester include methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate and phenyl methacrylate.

Examples of the unsaturated carboxylic acid include acrylic acid, methacrylic acid, maleic acid and itaconic acid.

Examples of the unsaturated amide include acrylamide, methacrylamide, N,N-methylenebisacrylamide, diacetone acrylamide, diacetone methacrylamide, maleic acid amide and maleimide.

Examples of the vinyl-based monomer include glycidyl methacrylate, styrene, vinyltoluene, vinyl acetate, acrylonitrile and dibutyl fumarate.

Examples of the vinyl-based monomer having a hydrolyzable silyl group include vinyltrimethoxysilane, vinylmethyldimethoxysilane and γ-(meth)acryloxypropyltrimethoxysilane.

Examples of the polyolefin polyols include hydroxyl-terminated polybutadiene and hydrogenated products thereof.

(5) Method for producing urethane group-containing polyisocyanate

In the case of deriving a polyisocyanate containing a urethane group from an isocyanate monomer, for example, the polyisocyanate containing a urethane group can be produced by mixing an excess isocyanate monomer, the above polyol and, if necessary, an alcohol other than the above polyol, and adding a urethane-forming reaction catalyst if necessary.

Examples of the polyol include the same as those exemplified in the above section entitled "polyol".

Examples of the alcohol other than the polyol include those exemplified in the above section entitled "method for producing isocyanurate group-containing polyisocyanate" but excluding those exemplified in the above section entitled "polyol".

Examples of the urethane-forming reaction catalyst include, but are not particularly limited to, tin-based compounds, zinc-based compounds and amine-based compounds.

The urethane-forming reaction temperature is preferably 50°C or higher and 160°C or lower, and more preferably 60°C or higher and 120°C or lower.

When the urethane-forming reaction temperature is equal to or less than the above upper limit value, there is a tendency that coloration or the like of the polyisocyanate can be suppressed more effectively.

Further, the urethane-forming reaction time is preferably 30 minutes or more and 4 hours or less, more preferably 1 hour or more and 3 hours or less, and still more preferably 1 hour or more and 2 hours or less.

A ratio of the molar amount of the isocyanate group of the isocyanate monomer with respect to the molar

amount of the hydroxyl group of the polyol (and the alcohols other than the polyol, if necessary) is preferably 2/1 or more and 50/1 or less. When this molar ratio is equal to or more than the above lower limit value, it is possible to further reduce the viscosity of the polyisocyanate. When this molar ratio is equal to or less than the above upper limit value, the yield of the urethane group-containing polyisocyanate can be further increased.

(6) Method for producing biuret group-containing polyisocyanate

Examples of the biuretizing agent for deriving a polyisocyanate containing a biuret group from an isocyanate monomer include, but are not particularly limited to, water, monohydric tertiary alcohols, formic acid, organic primary monoamines and organic primary diamines.

The isocyanate group is preferably 6 moles or more, more preferably 10 moles or more, and still more preferably 10 moles or more and 80 moles or less with respect to 1 mole of the biuretizing agent. If the molar amount of the isocyanate group with respect to 1 mole of the biuretizing agent is equal to or more than the above lower limit value, the polyisocyanate will have a sufficiently low viscosity, and if this molar amount is equal to or less than the above upper limit value, the low-temperature curability when forming a resin film will be further improved.

Further, a solvent may be used during the biuret-forming reaction. Any solvent may be used as long as it dissolves the isocyanate monomer and the biuretizing agent such as water and forms a uniform phase under the reaction conditions.

Specific examples of the solvent include ethylene glycol-based solvents and phosphoric acid-based solvents.

Examples of the ethylene glycol-based solvent include ethylene glycol monomethyl ether acetate, ethylene glycol monoethyl ether acetate, ethylene glycol mono-n-propyl ether acetate, ethylene glycol monoisopropyl ether acetate, ethylene glycol mono-n-butyl ether acetate, ethylene glycol diacetate, ethylene glycol dimethyl ether, ethylene glycol diethyl ether, ethylene glycol di-n-propyl ether, ethylene glycol diisopropyl ether, ethylene glycol di-n-butyl ether, ethylene glycol methyl ethyl ether, ethylene glycol methyl isopropyl ether, ethylene glycol methyl-n-butyl ether, ethylene glycol ethyl-n-propyl ether, ethylene glycol ethyl isopropyl ether, ethylene glycol ethyl-n-butyl ether, ethylene glycol-n-propyl-n-butyl ether, ethylene glycol isopropyl-n-butyl ether, diethylene glycol monomethyl ether acetate, diethylene glycol monoethyl ether acetate, diethylene glycol mono-n-propyl ether acetate, diethylene glycol monoisopropyl ether acetate, diethylene glycol mono-n-butyl ether acetate, diethylene glycol diacetate, diethylene glycol dimethyl ether, diethylene glycol diethyl ether, diethylene glycol di-n-propyl ether, diethylene glycol diisopropyl ether, diethylene glycol di-n-butyl ether, diethylene glycol methyl ethyl ether, diethylene glycol methyl isopropyl ether, diethylene glycol methyl-n-propyl ether, diethylene glycol methyl-n-butyl ether, diethylene glycol ethyl isopropyl ether, diethylene glycol ethyl-n-propyl ether, diethylene glycol ethyl-n-butyl ether, diethylene glycol-n-propyl-n-butyl ether and diethylene glycol isopropyl-n-butyl ether.

Examples of the phosphoric acid-based solvent include trimethyl phosphate, triethyl phosphate, tripropyl phosphate and tributyl phosphate.

These solvents may be used alone or by mixing two or more of them.

Among them, ethylene glycol monomethyl ether acetate, ethylene glycol monoethyl ether acetate, ethylene glycol diacetate or diethylene glycol dimethyl ether is preferred as the ethylene glycol-based solvent.

Further, as the phosphoric acid-based solvent, trimethyl phosphate or triethyl phosphate is preferred.

The biuret-forming reaction temperature is preferably 70°C or higher and 200°C or lower, and more preferably 90°C or higher and 180°C or lower. When this reaction temperature is equal to or less than the above upper limit value, there is a tendency that coloration or the like of the polyisocyanate can be prevented more effectively.

Each of the above-mentioned allophanate-forming reaction, uretdione-forming reaction, iminooxadiazinedione-forming reaction, isocyanurate-forming reaction, urethane-forming reaction and biuret-forming reaction may be carried out sequentially, or some of them may be carried out in parallel.

The polyisocyanate can be obtained by removing the unreacted isocyanate monomer from the reaction solution after the completion of the reaction by thin film distillation, extraction or the like.

Further, an antioxidant or an ultraviolet absorber may be added to the obtained polyisocyanate for the purpose of, for example, suppressing the coloration during storage.

Examples of the antioxidant include hindered phenols such as 2,6-di-tert-butyl-p-cresol and the like. Examples of the ultraviolet absorber include benzotriazole and benzophenone. Any one of these antioxidants and ultraviolet absorbers may be used alone, or two or more types thereof may be used in combination. The amount thereof added is preferably 10 ppm by mass or more and 500 ppm by mass or less with respect to the mass of the polyisocyanate.

(Average number of isocyanate groups of polyisocyanate)

An average number of isocyanate groups of the polyisocyanate used in the present embodiment is preferably 2.0 or more in view of improving the low-temperature curability when forming a resin film, and more preferably 3.0 or

more and 20.0 or less, still more preferably 3.2 or more and 10.0 or less, particularly preferably 3.4 or more and 8.0 or less, and most preferably 3.5 or more and 6.0 or less, from the viewpoint of achieving both the low-temperature curability when forming a resin film and the compatibility with the polyvalent hydroxy compound.

The average number of isocyanate functional groups of the polyisocyanate can be measured using the method described in Examples below.

<Polyvalent hydroxy compound>

In the present specification, the term "polyvalent hydroxy compound" means a compound having at least two hydroxy groups (hydroxyl groups) in one molecule, and is also called a "polyol".

Specific examples of the polyvalent hydroxy compound include aliphatic hydrocarbon polyols, polyether polyols, polyester polyols, epoxy resins, fluorine-containing polyols, and acrylic polyols.

Among them, the polyvalent hydroxy compound is preferably a polyester polyol, a fluorine-containing polyol or an acrylic polyol.

[Aliphatic hydrocarbon polyols]

Examples of the aliphatic hydrocarbon polyols include hydroxyl-terminated polybutadiene and hydrogenated products thereof.

[Polyether polyols]

Examples of the polyether polyols include those obtained by using any one of the following methods (1) to (3) and the like.

(1) Polyether polyols or polytetramethylene glycols obtained by adding a single alkylene oxide or a mixture of alkylene oxides to a single polyhydric alcohol or a mixture of polyhydric alcohols.
(2) Polyether polyols obtained by reacting a polyfunctional compound with an alkylene oxide.
(3) So-called polymer polyols obtained by polymerizing acrylamide or the like using the polyether polyols obtained in (1) or (2) as a medium.

Examples of the polyhydric alcohol include glycerol and propylene glycol.

Examples of the alkylene oxide include ethylene oxide and propylene oxide.

Examples of the polyfunctional compound include ethylenediamine and ethanolamines.

[Polyester polyols]

Examples of the polyester polyols include polyester polyols of either (1) or (2) below.

(1) Polyester polyol resins obtained by condensation reaction of a single dibasic acid or a mixture of two or more dibasic acids with a single polyhydric alcohol or a mixture of two or more polyhydric alcohols.
(2) Polycaprolactones obtained by ring-opening polymerization of ε-caprolactone with a polyhydric alcohol.

Examples of the dibasic acid include carboxylic acids such as succinic acid, adipic acid, dimer acid, maleic anhydride, phthalic anhydride, isophthalic acid, terephthalic acid and 1,4-cyclohexanedicarboxylic acid.

Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerol, and pentaerythritol, 2-methylolpropanediol and ethoxylated trimethylolpropane.

[Epoxy resins]

Examples of the epoxy resins include epoxy resins such as novolac type epoxy resins, β-methyl epichloro type epoxy resins, cyclic oxirane type epoxy resins, glycidyl ether type epoxy resins, glycol ether type epoxy resins, epoxy type unsaturated aliphatic compounds, epoxidized fatty acid esters, ester type polycarboxylic acids, aminoglycidyl type epoxy resins, halogenated epoxy resins and resorcinol type epoxy resins, and resins obtained by modifying these epoxy resins with amino compounds, polyamide compounds and the like.

[Fluorine-containing polyols]

Examples of the fluorine-containing polyols include copolymers of fluoroolefins, cyclohexyl vinyl ethers, hydroxyalkyl vinyl ethers, monocarboxylic acid vinyl esters and the like disclosed in Reference Document 1 (Japanese Unexamined Patent Application, First Publication No. Sho 57-34107), Reference Document 2 (Japanese Unexamined Patent Application, First Publication No. Sho 61-275311) and the like.

[Acrylic polyols]

The acrylic polyols can be obtained, for example, by polymerizing a polymerizable monomer having one or more active hydrogens in one molecule, or by copolymerizing a polymerizable monomer having one or more active hydrogens in one molecule and, if necessary, another monomer copolymerizable with this polymerizable monomer.

Examples of the polymerizable monomer having one or more active hydrogens in one molecule include those shown in (i) to (iii) below. Any one of these may be used alone, or two or more types thereof may be used in combination.

(i) Acrylic acid esters having an active hydrogen, such as 2-hydroxyethyl acrylate, 2-hydroxypropyl acrylate and 2-hydroxybutyl acrylate.
(ii) Methacrylic acid esters having an active hydrogen, such as 2-hydroxyethyl methacrylate, 2-hydroxypropyl methacrylate and 2-hydroxybutyl methacrylate.
(iii) (Meth)acrylic acid esters having polyvalent active hydrogen, such as an acrylic acid monoester or methacrylic acid monoester of glycerol, and an acrylic acid monoester or methacrylic acid monoester of trimethylolpropane.

Examples of other monomers copolymerizable with the polymerizable monomer include those shown in (i) to (v) below. Any one of these may be used alone, or two or more types thereof may be used in combination.

(i) Acrylic acid esters such as methyl acrylate, ethyl acrylate, isopropyl acrylate, n-butyl acrylate and 2-ethylhexyl acrylate.
(ii) Methacrylic acid esters such as methyl methacrylate, ethyl methacrylate, isopropyl methacrylate, n-butyl methacrylate, isobutyl methacrylate, n-hexyl methacrylate, cyclohexyl methacrylate, lauryl methacrylate and glycidyl methacrylate.
(iii) Unsaturated carboxylic acids such as acrylic acid, methacrylic acid, maleic acid and itaconic acid.
(iv) Unsaturated amides such as acrylamide, N-methylol acrylamide and diacetone acrylamide.
(v) Styrene, vinyltoluene, vinyl acetate, acrylonitrile and the like.

In addition, acrylic polyols obtained by copolymerizing polymerizable UV-stable monomers disclosed in Reference Document 3 (Japanese Unexamined Patent Application, First Publication No. Hei 1-261409) and Reference Document 4 (Japanese Unexamined Patent Application, First Publication No. Hei 3-006273), and the like may also be exemplified.

Specific examples of the polymerizable UV-stable monomer include 4-(meth)acryloyloxy-2,2,6,6-tetramethylpiperidine, 4-(meth)acryloylamino-2,2,6,6-tetramethylpiperidine, 1-crotonoyl-4-crotonoyloxy-2,2,6,6-tetramethylpiperidine and 2-hydroxy-4-(3-methacryloxy-2-hydroxypropoxy)benzophenone.

The acrylic polyol can be obtained, for example, by solution-polymerizing the above monomer component in the presence of a radical polymerization initiator such as a known peroxide and azo compound, and if necessary, diluting with an organic solvent or the like.

In the case of obtaining a water-based acrylic polyol, it can be produced by a method of solution-polymerizing an olefinically unsaturated compound and converting it into an aqueous layer, or a known method such as emulsion polymerization. In that case, water solubility or water dispersibility can be imparted by neutralizing the acidic moieties of carboxylic acid-containing monomers such as acrylic acid and methacrylic acid, sulfonic acid-containing monomers or the like with amines or ammonia.

[Hydroxyl value and acid value of polyvalent hydroxy compound]

A hydroxyl value of the polyvalent hydroxy compound contained in the resin composition of the present embodiment is preferably 5 mgKOH/g or more and 300 mgKOH/g or less, more preferably 10 mgKOH/g or more and 280 mgKOH/g or less, and still more preferably 30 mgKOH/g or more and 250 mgKOH/g or less. When the hydroxyl value of the polyvalent hydroxy compound is within the above range, it is possible to obtain a resin film that is even more excellent in various physical properties such as tensile strength. More specifically, when the hydroxyl value of the polyvalent hydroxy compound is equal to or more than the above lower limit value, the crosslinking density of urethane

due to the reaction with polyisocyanate is further increased, and the function of urethane bonds is more easily exhibited. On the other hand, when the hydroxyl value of the polyvalent hydroxy compound is equal to or less than the above upper limit value, the crosslinking density does not increase excessively, and the mechanical properties of the resin film can be further improved. The hydroxyl value of the polyvalent hydroxy compound is measured, for example, by potentiometric titration, and calculated as a value with respect to the solid content in the polyvalent hydroxy compound.

[Glass transition temperature Tg of polyvalent hydroxy compound]

A glass transition temperature Tg of the polyvalent hydroxy compound contained in the resin composition of the present embodiment is preferably 0°C or higher and 100°C or lower, more preferably 0°C or higher and 90°C or lower, still more preferably 0°C or higher and 80°C or lower, and particularly preferably 5°C or higher and 70°C or lower. When the glass transition temperature of the polyvalent hydroxy compound is within the above range, a resin film with superior tensile strength can be obtained. The glass transition temperature of the polyvalent hydroxy compound can be measured using, for example, a differential scanning calorimeter (DSC).

[Weight average molecular weight Mw of polyvalent hydroxy compound]

The weight average molecular weight Mw of the polyvalent hydroxy compound is preferably $5.0 \times 10^3$ or more and $2.0 \times 10^5$ or less, more preferably $5.0 \times 10^3$ or more and $1.5 \times 10^5$ or less, and still more preferably $5.0 \times 10^3$ or more and $1.0 \times 10^5$ or less. When the weight average molecular weight Mw of the polyvalent hydroxy compound is within the above range, it is possible to obtain a resin film that is even more excellent in various physical properties such as tensile strength. The weight average molecular weight Mw of the polyvalent hydroxy compound is a weight average molecular weight based on polystyrene measured by gel permeation chromatography (GPC).

[NCO/OH]

A molar equivalent ratio (NCO/OH) of the isocyanate group of the blocked polyisocyanate composition with respect to the hydroxyl group of the polyvalent hydroxy compound contained in the resin composition of the present embodiment is determined according to the required physical properties of the resin film, but is usually 0.01 or more and 10.0 or less, preferably 0.1 or more and 5.0 or less, more preferably 0.2 or more and 3.0 or less, and still more preferably 0.25 or more and 2.0 or less.

[Method for producing blocked polyisocyanate compound]

The blocked polyisocyanate compound (A) is not particularly limited, but can be obtained by reacting the above polyisocyanate, a hydrophilic compound (for example, a polyethylene glycol-based hydrophilic compound) and an imidazole-based blocking agent (d), respectively. Further, the blocked polyisocyanate compound (E) is not particularly limited, but can be obtained by reacting the above polyisocyanate, a hydrophilic compound (for example, a polyethylene glycol-based hydrophilic compound) and the above blocking agent (e), respectively.

A reaction between the polyisocyanate and the hydrophilic compound and a reaction between the polyisocyanate and the imidazole-based blocking agent (d) or the above blocking agent (e) can be carried out at the same time, or it is also possible to carry out either of the reactions in advance and then carry out the second and subsequent reactions. Among them, it is preferable to carry out the reaction between the polyisocyanate and the hydrophilic compound first to obtain a hydrophilic compound-modified polyisocyanate modified with the hydrophilic compound, and then carry out the reaction between the obtained hydrophilic compound-modified polyisocyanate and the imidazole-based blocking agent (d) or the above blocking agent (e).

For the reaction between the polyisocyanate and the hydrophilic compound, an organic metal salt, a tertiary amine-based compound or an alkali metal alcoholate may be used as a catalyst. Examples of the metal constituting the organic metal salt include tin, zinc, and lead. Examples of the alkali metal include sodium and the like.

The reaction temperature between the polyisocyanate and the hydrophilic compound is preferably -20°C or higher and 150°C or lower, and more preferably 30°C or higher and 130°C or lower. When the reaction temperature is equal to or higher than the above lower limit value, the reactivity tends to be higher. Further, when the reaction temperature is equal to or lower than the above upper limit value, side reactions tend to be suppressed more effectively.

It is preferable to completely react the hydrophilic compound with the polyisocyanate so that the hydrophilic compound does not remain in an unreacted state. When the hydrophilic compound does not remain in an unreacted state, there is a tendency to more effectively suppress the decrease in the water dispersion stability of the blocked polyisocyanate composition and in the low-temperature curability when forming a resin film.

The amount of the blocking agent added may be usually 80 mol% or more and 200 mol% or less, and is

preferably 90 mol% or more and 150 mol% or less with respect to the total molar amount of the isocyanate groups of the polyisocyanate after modifying the hydrophilic group compound.

Further, when using a solvent, a solvent inert to the isocyanate group may be used.

When a solvent is used, the content of the non-volatile component derived from the polyisocyanate and the blocking agent may be usually 10 parts by mass or more and 95 parts by mass or less, preferably 20 parts by mass or more and 80 parts by mass or less, and more preferably 30 parts by mass or more and 75 parts by mass or less with respect to 100 parts by mass of the blocked polyisocyanate compound.

In the blocking reaction, organic metal salts of tin, zinc, lead and the like, tertiary amine-based compounds and alcoholates of alkali metals such as sodium may be used as catalysts.

Although the amount of the catalyst to be added varies depending on the temperature of the blocking reaction and the like, it may be usually 0.05 parts by mass or more and 1.5 parts by mass or less, and is preferably 0.1 parts by mass or more and 1.0 part by mass or less with respect to 100 parts by mass of the polyisocyanate.

The blocking reaction can generally be carried out at -20°C or higher and 120°C or lower, preferably 0°C or higher and 100°C or lower, more preferably 10°C or higher and 80°C or lower, and still more preferably 30°C or higher and 70°C or lower. When the temperature of the blocking reaction is equal to or higher than the above lower limit value, the reaction rate can be further increased, and when this temperature is equal to or lower than the above upper limit value, side reactions can be further suppressed.

After the blocking reaction, a neutralization treatment may be performed by adding an acidic compound or the like.

An inorganic acid or an organic acid may be used as the acidic compound. Examples of the inorganic acid include hydrochloric acid, phosphorous acid and phosphoric acid. Examples of the organic acid include methanesulfonic acid, p-toluenesulfonic acid, dioctyl phthalate and dibutyl phthalate.

In the blocking reaction, organic metal salts of tin, zinc, lead and the like, tertiary amine-based compounds and alcoholates of alkali metals such as sodium may be used as catalysts.

(Average number of isocyanate groups of blocked polyisocyanate compound)

An average number of isocyanate groups of the blocked polyisocyanate compound used in the present embodiment is preferably 2.0 or more in view of improving the low-temperature curability when forming a resin film, and more preferably 2.4 or more and 20.0 or less, still more preferably 2.6 or more and 10.0 or less, particularly preferably 2.7 or more and 8.0 or less, and most preferably 3.0 or more and 6.0 or less, from the viewpoint of achieving both the low-temperature curability when forming a resin film and the compatibility with the polyvalent hydroxy compound.

The average number of isocyanate functional groups of the blocked polyisocyanate compound can be measured using the method described in Examples below.

(Effective NCO content of blocked polyisocyanate compound)

An effective NCO content of the blocked polyisocyanate compound used in the present embodiment is, as a value at 70% by mass of solid content (nonvolatile content), preferably 3% by mass or more and 15.0% by mass or less, more preferably 3.5% by mass or more and 13.0% by mass or less, still more preferably 4.0% by mass or more and 11.5% by mass or less, and particularly preferably 5.0% by mass or more and 10.0% by mass or less from the viewpoint of achieving both the water resistance when forming a resin film and the compatibility with the polyvalent hydroxy compound.

The effective NCO content of the blocked polyisocyanate compound can be measured using the method described in Examples below.

<Other components>

The blocked polyisocyanate composition of the present embodiment can further contain an additive such as a solvent or the like in addition to the blocked polyisocyanate compound.

Examples of the solvent include 1-methylpyrrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, 3-methoxy-3-methyl-1-butanol, ethylene glycol diethyl ether, diethylene glycol diethyl ether, ethylene glycol dimethyl ether, diethylene glycol dimethyl ether, dipropylene glycol dimethyl ether (DPDM), propylene glycol dimethyl ether, methyl ethyl ketone, acetone, methyl isobutyl ketone, propylene glycol monomethyl ether acetate, ethanol, methanol, iso-propanol, 1-propanol, iso-butanol, 1-butanol, tert-butanol, 2-ethylhexanol, cyclohexanol, ethylene glycol, diethylene glycol, triethylene glycol, propylene glycol, dipropylene glycol, 1,4-butanediol, 1,3-butanediol, ethyl acetate, isopropyl acetate, butyl acetate, toluene, xylene, pentane, iso-pentane, hexane, iso-hexane,

cyclohexane, solvent naphtha and mineral spirits. These solvents may be used alone, or two or more types thereof may be used in combination. From the viewpoint of dispersibility in water, a solvent having a solubility in water of 5% by mass or more is preferred, and more specifically, DPDM is preferred.

<<Resin composition>>

A resin composition of the present embodiment contains the above-mentioned blocked polyisocyanate composition and a polyvalent hydroxy compound. The resin composition of the present embodiment can also be said to be a one-pack type resin composition containing a curing agent component and a main agent component.

By containing the above-described blocked polyisocyanate composition, the resin composition of the present embodiment exhibits excellent curability immediately after production and when baked at a low temperature of 90°C or less after storage immediately after production, and exhibits excellent coating film appearance, water resistance and recoat adhesion when forming a coating film.

Further, the resin composition of the present embodiment is particularly suitable for use as a water-based resin composition because it exhibits excellent storage stability when forming a water-based resin composition.

The constituent components of the resin composition of the present embodiment will be described in detail below.

[Content of blocked polyisocyanate composition]

In the resin composition of the present embodiment, a content of the blocked polyisocyanate may be any amount as long as the molar equivalent ratio of the isocyanate group of the blocked polyisocyanate with respect to the hydroxyl group of the polyvalent hydroxy compound is within the above range. For example, it is preferably 1 part by mass or more and 200 parts by mass or less, more preferably 5 parts by mass or more and 180 parts by mass or less, and still more preferably 10 parts by mass or more and 150 parts by mass or less with respect to 100 parts by mass of the polyvalent hydroxy compound. When the content of the blocked polyisocyanate is within the above range, it is possible to obtain a resin film that is even more excellent in various physical properties such as tensile strength. The content of the blocked polyisocyanate can be calculated, for example, from the added amount, or can also be calculated by identification and quantification using a nuclear magnetic resonance (NMR) method and gas chromatography/mass spectrometry (GC/MS method).

<Other additives>

The resin composition of the present embodiment may further contain other additives.

Examples of these other additives include curing agents capable of reacting with a crosslinkable functional group in the polyvalent hydroxy compound, curing catalysts, solvents, pigments (such as extender pigments, color pigments and metallic pigments), ultraviolet absorbers, light stabilizers, radical stabilizers, anti-yellowing agents for suppressing coloration during a baking step, coating surface modifiers, flow modifiers, pigment dispersants, antifoaming agents, thickeners and film-forming aids.

Examples of the curing agent include melamine resins, urea resins, epoxy group-containing compounds or resins, carboxyl group-containing compounds or resins, acid anhydrides, alkoxysilane group-containing compounds or resins, and hydrazide compounds.

The curing catalyst may be a basic compound or a Lewis acid compound.

Examples of the basic compound include metal hydroxides, metal alkoxides, metal carboxylates, metal acetylacetonates, hydroxides of onium salts, onium carboxylates, halides of onium salts, metal salts of active methylene-based compounds, onium salts of active methylene-based compounds, aminosilanes, amines and phosphines. The onium salt is preferably an ammonium salt, a phosphonium salt or a sulfonium salt.

Examples of the Lewis acid compound include organic tin compounds, organic zinc compounds, organic titanium compounds and organic zirconium compounds.

Examples of the solvent include the same as those exemplified in the above-mentioned blocked polyisocyanate composition.

Further, as the pigments (such as extender pigments, color pigments and metallic pigments), ultraviolet absorbers, light stabilizers, radical stabilizers, anti-yellowing agents for suppressing coloration during a baking step, coating surface modifiers, flow modifiers, pigment dispersants, antifoaming agents, thickeners and film-forming aids, known agents can be appropriately selected and used.

<Method for producing resin composition>

The resin composition of the present embodiment can be used both as a solvent-based resin composition and

as a water-based resin composition, but is preferably used as a water-based resin composition.

At this time, the blocked polyisocyanate composition contained in the above resin composition is produced by a method including a pretreatment step in which a pretreatment is performed within a temperature range of 10 to 70°C for 1 to 240 hours in a state of adding water to a mixture of the blocked polyisocyanate compound (A) derived from a polyisocyanate, a hydrophilic compound and an imidazole-based blocking agent (d) having a structure represented by the above general formula (I). The mixture may further contain the above blocked polyisocyanate compound (E). In the present embodiment, the term "pretreatment" means that after obtaining a mixture of the above blocked polyisocyanate composition and water, the mixture is left standing (allowed to stand).

Further, this pretreatment step may be performed before or after mixing the polyvalent hydroxy compound, but from the viewpoint of ease of the process, it is preferably performed after mixing the polyvalent hydroxy compound.

The amount of water added in the pretreatment step is not particularly limited, but the mass ratio of water with respect to the resin solid component of the blocked polyisocyanate compound is preferably 0.1 times or more and 10 times or less, more preferably 0.3 times or more and 7.5 times or less, and still more preferably 0.5 times or more and 5 times or less.

When this mass ratio is 0.1 times or more, there is a tendency that urea bonds are formed in the resin film and recoat adhesion improves, and when this mass ratio is 10 times or less, the coating film appearance of the resin film tends to improve.

Further, the temperature condition of the pretreatment step is 10°C or higher and 70°C or lower, preferably 20°C or higher and 60°C or lower, more preferably 30°C or higher and 50°C or lower, and still more preferably 40°C.

When the treatment temperature is 10°C or higher, there is a tendency that urea bonds are formed in the resin film and recoat adhesion improves, and when this treatment temperature is 70°C or lower, the coating film appearance tends to improve.

The duration of the pretreatment step is 1 hour or more and 240 hours or less, preferably 2 hours or more and 120 hours or less, more preferably 4 hours or more and 72 hours or less, and still more preferably 8 hours or more and 48 hours or less.

When the duration of the pretreatment step is 1 hour or more, there is a tendency that urea bonds are formed in the resin film and recoat adhesion improves, and when this duration is 240 hours or less, the coating film appearance tends to improve.

If necessary, other components such as a solvent may be added respectively to the polyvalent hydroxy compound serving as a main agent.

Among them, it is preferable to prepare a mixture of a polyisocyanate, a hydrophilic compound and an imidazole-based blocking agent (d) having a structure represented by the above general formula (II), and if necessary, other components such as a solvent in advance, and add this mixture to the polyvalent hydroxy compound serving as a main agent.

In the case of producing a water-based resin composition (aqueous resin composition), first, additives such as a curing agent capable of reacting with a crosslinkable functional group in the polyvalent hydroxy compound, a curing catalyst, a solvent, a pigment (such as an extender pigment, a color pigment and a metallic pigment), an ultraviolet absorber, a light stabilizer, a radical stabilizer, an anti-yellowing agent for suppressing coloration during a baking step, a coating surface modifier, a flow modifier, a pigment dispersant, an antifoaming agent, a thickener and a film-forming aid are added to the polyvalent hydroxy compound, or a water dispersion or aqueous solution thereof according to need. Then, the above blocked polyisocyanate composition or water dispersion thereof is added as a curing agent, and if necessary, water or a solvent is further added thereto to adjust the viscosity. Then, a water-based resin composition (aqueous resin composition) can be obtained by forcibly stirring with a stirrer.

In the case of producing a solvent-based resin composition, first, additives such as a curing agent capable of reacting with a crosslinkable functional group in the polyvalent hydroxy compound, a curing catalyst, a solvent, a pigment (such as an extender pigment, a color pigment and a metallic pigment), an ultraviolet absorber, a light stabilizer, a radical stabilizer, an anti-yellowing agent for suppressing coloration during a baking step, a coating surface modifier, a flow modifier, a pigment dispersant, an antifoaming agent, a thickener and a film-forming aid are added to the polyvalent hydroxy compound, or a solvent-dilution thereof according to need. Then, the above blocked polyisocyanate composition is added as a curing agent, and if necessary, a solvent is further added to adjust the viscosity. Then, a solvent-based resin composition can be obtained by stirring manually or by stirring using a stirring device such as a Mazelar or the like.

<<Resin film>>

A resin film of the present embodiment is obtained by curing the above resin composition by baking at a temperature of 90°C or less. The resin film of the present embodiment is excellent in coating film appearance, water resistance and recoat adhesion.

The resin film of the present embodiment can be obtained by coating the above resin composition on a base

material using a known method such as roll coating, curtain flow coating, spray coating, bell coating and electrostatic coating, and curing by heating.

The baking temperature is a temperature of 90°C or lower, preferably 70°C or higher and 90°C or lower, and more preferably 75°C or higher and 90°C or lower, from the viewpoint of energy saving and heat resistance of the base material.

The baking time is preferably about 1 minute or more and about 60 minutes or less, and more preferably about 2 minutes or more and about 40 minutes or less from the viewpoint of energy saving and heat resistance of the base material.

The base material is not particularly limited, and examples thereof include outer panels of automobile bodies such as passenger cars, trucks, motorcycles and buses; automobile parts such as bumpers and the like; outer panels of home electric appliances such as mobile phones and audio equipment, and various films, and among them, outer panels of automobile bodies or automobile parts are preferred.

The material of the base material is not particularly limited, and examples thereof include metal materials such as iron, aluminum, brass, copper, tinplate, stainless steel, galvanized steel and zinc alloy (such as Zn-Al, Zn-Ni and Zn-Fe) plated steel; resins such as polyethylene resins, polypropylene resins, acrylonitrile-butadiene-styrene (ABS) resins, polyamide resins, acrylic resins, vinylidene chloride resins, polycarbonate resins, polyurethane resins and epoxy resins, and various plastic materials such as FRP and the like; inorganic materials such as glass, cement and concrete; wood; and fibrous materials such as paper and cloth, and among them, metal materials or plastic materials are preferred.

The base material may be a base material in which a surface treatment such as a phosphate treatment, a chromate treatment and a complex oxide treatment has been performed on a surface of the above-described metal material or a metal surface of a vehicle body or the like molded from the above-described metal material, and may also be a base material on which a coating film is further formed. The base material on which a coating film is formed may be a base material on which a surface treatment is performed as necessary, and an undercoat coating film is formed thereon, for example, a vehicle body on which an undercoat coating film formed with an electrodeposition paint. The base material may be a base material in which a desired surface treatment has been performed on a surface of the above-described plastic material or a plastic surface of an automobile part or the like molded from the above-described metal material. Further, the base material may be a base material obtained by combining a plastic material and a metal material.

Since the resin film of the present embodiment is excellent in low-temperature curability, it is suitably used as a coating film for products in various fields where energy saving is required and for materials with low heat resistance.

<<Laminate>>

A laminate of the present embodiment is obtained by laminating one or more layers of the above-described resin film on a base material.

The thickness of each layer of the resin film is 1 μm or more and 50 μm or less.

The laminate of the present embodiment may include two or more layers of the above-described resin films having the same composition, or may include two or more layers of the above-described resin films having different compositions.

Further, examples of the base material include the same as those exemplified in the above section entitled "resin film".

The laminate of the present embodiment can be obtained by coating each of the above resin compositions on a base material using a known method such as roll coating, curtain flow coating, spray coating, bell coating and electrostatic coating, and curing by heating; or by heating and curing all the layers together after coating.

In addition to the above-described base material and the above-described resin film, the laminate of the present embodiment can include, for example, other layers composed of known components, such as a primer layer, an adhesive layer, and a decorative layer.

[Blocked polyisocyanate composition, resin composition, resin film and laminate]

«Blocked polyisocyanate composition»

A blocked polyisocyanate composition of the present embodiment contains a blocked polyisocyanate component (X) (hereinafter, may be simply referred to as "component (X)") and a blocked polyisocyanate component (Y) (hereinafter, may be simply referred to as "component (Y)").

The blocked polyisocyanate composition contains a hydrophilic group. Specifically, one or more components selected from the group consisting of the component (X) and the component (Y) contain a hydrophilic group. More specifically, a hydrophilic group is introduced into a blocked polyisocyanate contained in one or more components

selected from the group consisting of the component (X) and the component (Y). That is, the blocked polyisocyanate contained in one or more components selected from the group consisting of the component (X) and the component (Y) can be said to be a reaction product of a polyisocyanate, a blocking agent and a hydrophilic compound.

The blocked polyisocyanate composition of the present embodiment preferably contains a nonionic hydrophilic group as the hydrophilic group. A content of the nonionic hydrophilic group is 0.1% by mass or more and 25.0% by mass or less, preferably 1.0% by mass or more and 20.0% by mass or less, more preferably 3.0% by mass or more and 15.0% by mass or less, and still more preferably 5.0% by mass or more and 12.0% by mass or less with respect to the total mass of the solid content of the blocked polyisocyanate composition. When the content of the nonionic hydrophilic group is within the above numerical range, there is a tendency that the dispersibility improves when forming a water-based coating composition, and the low-temperature curability after storage immediately after production of the water-based coating composition further improves.

A content of the nonionic hydrophilic group in the blocked polyisocyanate composition of the present embodiment can be calculated, for example, from a content of the nonionic hydrophilic group in the component (X) and the component (Y), and a mixing ratio of the component (X) and the component (Y).

It is preferable to satisfy a relationship of $0 \leq (y) < (x)$ when a content of the nonionic hydrophilic group with respect to the total mass of the solid content of the component (X) is defined as (x)% by mass, and a content of the nonionic hydrophilic group with respect to the total mass of the solid content of the component (Y) is defined as (y)% by mass.

That is, it can also be said that it is preferable that the content of the nonionic hydrophilic group in the component (X) is greater than the content of the nonionic hydrophilic group in the component (Y), and is a value greater than 0.

From the viewpoint of the water dispersion stability of the blocked polyisocyanate composition, the lower limit value of the content of the nonionic hydrophilic group in the component (X) is preferably 15.0% by mass, more preferably 17.0% by mass, and particularly preferably 20.0% by mass with respect to the mass of the solid content of the component (X).

On the other hand, from the viewpoint of the water resistance of the obtained resin film, the upper limit value of the content of the nonionic hydrophilic group in the component (X) is preferably 65.0% by mass, more preferably 45.0% by mass, and particularly preferably 35.0% by mass with respect to the mass of the solid content of the component (X).

That is, the content of the nonionic hydrophilic group in the component (X) is preferably 15.0% by mass or more and 65.0% by mass or less, more preferably 17.0% by mass or more and 45.0% by mass or less, and particularly preferably 20.0% by mass or more and 35.0% by mass or less with respect to the mass of the solid content of the component (X).

When the content of the nonionic hydrophilic group in the component (X) is within the above numerical range, there is a tendency that the water dispersibility of the obtained blocked polyisocyanate composition further improves, and a homogeneous film is obtained.

From the viewpoint of suppressing a decrease in the hardness and strength of the obtained resin film, the content of the nonionic hydrophilic group added to the blocked polyisocyanate contained in the component (X) is, when expressed in molar ratio, preferably 1 mol% or more and 50 mol% or less, more preferably 4 mol% or more and 45 mol% or less, still more preferably 6 mol% or more and 40 mol% or less, still more preferably 8 mol% or more and 35 mol% or less, and most preferably 10 mol% or more and 30 mol% or less with respect to 100 mol% of the isocyanate group of the raw material polyisocyanate.

The lower limit value of the content of the nonionic hydrophilic group in the component (Y) is not particularly limited, but from the viewpoint of the water dispersion stability of the blocked polyisocyanate composition, the lower limit value is preferably 0.0% by mass, more preferably 0.1% by mass, still more preferably 1.0% by mass, and particularly preferably 2.0% by mass with respect to the mass of the solid content of the component (Y).

On the other hand, from the viewpoint of the water resistance of the obtained resin film, the upper limit value of the content of the nonionic hydrophilic group in the component (Y) is preferably 20.0% by mass, more preferably 15.0% by mass, still more preferably 10.0% by mass, and particularly preferably 5.0% by mass with respect to the mass of the solid content of the component (Y).

That is, the content of the nonionic hydrophilic group in the component (Y) is preferably 0.0% by mass or more and 20.0% by mass or less, more preferably 0.1% by mass or more and 15.0% by mass or less, still more preferably 1.0% by mass or more and 10.0% by mass or less, and particularly preferably 2.0% by mass or more and 5.0% by mass or less with respect to the mass of the solid content of the component (Y).

When the content of the nonionic hydrophilic group in the component (Y) is within the above numerical range, the obtained blocked polyisocyanate composition tends to exhibit better water dispersibility and better storage stability.

From the viewpoint of suppressing a decrease in the hardness and strength of the obtained resin film, the content of the nonionic hydrophilic group added to the blocked polyisocyanate is, when expressed in molar ratio, preferably 0 mol% or more and 20 mol% or less, more preferably 0.25 mol% or more and 15 mol% or less, still more preferably

0.5 mol% or more and 10 mol% or less, still more preferably 0.75 mol% or more and 5 mol% or less, and most preferably 1 mol% or more and 3 mol% or less with respect to 100 mol% of the isocyanate group of the raw material polyisocyanate.

The contents of the nonionic hydrophilic groups in the component (X) and in the component (Y) can be obtained, for example, by calculating a ratio of the mass of the nonionic hydrophilic compound with respect to the total mass of the solid content of each component in percentage (% by mass), assuming that all the used nonionic hydrophilic compounds have reacted with the isocyanate groups of the polyisocyanate.

The mixing ratio of the component (X) and the component (Y) can be expressed by a mass ratio (X)/(Y) of the component (X) with respect to the component (Y), and is preferably 1/99 or more and 99/1 or less, more preferably 3/97 or more and 90/10 or less, still more preferably 5/95 or more and 75/25 or less, and particularly preferably 7/93 or more and 60/40 or less. When the mass ratio (X)/(Y) is within the above numerical range, it becomes possible to achieve both the low-temperature curability immediately after production and after storage immediately after production when forming a water-based coating composition, and the suppression of a decrease in pH when stored immediately after production.

A blocking agent (x1) is a compound having a heterocyclic ring containing one or more nitrogen atoms.

In the component (Y), the structure of an isocyanate group blocked by a blocking agent (y2) is a structure represented by the following general formula (IV) (hereinafter sometimes referred to as "structure (IV)").

[Chemical Formula 11]

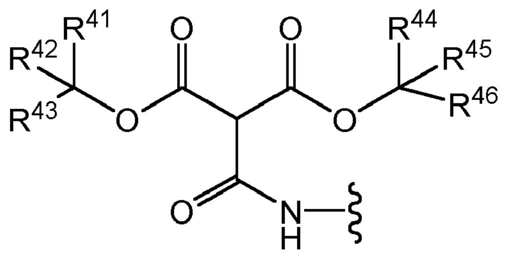

( IV )

in the general formula (IV), each of $R^{41}$, $R^{42}$ and $R^{43}$ independently represents an alkyl group which may contain one or more substituents selected from the group consisting of a hydroxy group and an amino group, a total number of carbon atoms of $R^{41}$, $R^{42}$ and $R^{43}$ is 3 or more and 20 or less, each of $R^{44}$, $R^{45}$ and $R^{46}$ independently represents a hydrogen atom or an alkyl group which may contain one or more substituents selected from the group consisting of a hydroxy group and an amino group, and a wavy line represents a bond.

By having the above configuration, the blocked polyisocyanate composition of the present embodiment exhibits excellent curability when baked at a low temperature of 90°C or less immediately after being formed into a water-based resin composition and immediately after being stored as a water-based resin composition, and can suppress a decrease in pH when stored immediately after being formed into a water-based resin composition.

Hereinafter, each component contained in the blocked polyisocyanate composition of the present embodiment will be described in detail.

<Blocked polyisocyanate component>

The component (X) and the component (Y) are different from each other.

The component (X) is derived from a polyisocyanate (x1) and one or more blocking agents (x2). That is, the component (X) is a reaction product of the polyisocyanate (x1) and one or more blocking agents (x2).

The component (Y) is derived from a polyisocyanate (y1) and one or more blocking agents (y2). That is, the component (Y) is a reaction product of the polyisocyanate (y1) and one or more blocking agents (y2).

The blocked polyisocyanate contained in one or more components selected from the group consisting of the component (X) and the component (Y) has a hydrophilic group, and preferably has a nonionic hydrophilic group.

Only the blocked polyisocyanate contained in the component (X) may have a hydrophilic group, only the blocked polyisocyanate contained in component (Y) may have a hydrophilic group, or both the blocked polyisocyanates contained in the component (X) and the component (Y) may have a hydrophilic group. Among them, it is preferable that only the blocked polyisocyanate contained in the component (X) has a hydrophilic group, or that both the blocked polyisocyanates contained in the component (X) and the component (Y) have a hydrophilic group.

In the above case, one or more components selected from the group consisting of the component (X) and the component (Y) are reaction products of a polyisocyanate, a hydrophilic compound (preferably a nonionic hydrophilic compound), and a blocking agent.

In the component (X) and the component (Y), the above hydrophilic compounds (preferably nonionic hydrophilic

compounds) may be the same as or different from each other.
Further, like the above case, the polyisocyanate (x1) and the polyisocyanate (y1) used in the component (X) and the component (Y) may be the same as or different from each other.

<Blocked polyisocyanate component (X)>

The component (X) is derived from a polyisocyanate and one or more blocking agents composed of a compound having a heterocyclic ring containing one or more nitrogen atoms. That is, the component (X) is a reaction product of a polyisocyanate and one or more blocking agents composed of a compound having a heterocyclic ring containing one or more nitrogen atoms.

[Structure (IIa)]

The component (X) preferably contains a blocked isocyanate having a structure represented by the following general formula (IIa) (hereinafter sometimes referred to as "structure (IIa)"). The structure (IIa) is a structure formed by blocking the isocyanate group of the polyisocyanate (x1) with the blocking agent (x2).

[Chemical Formula 12]

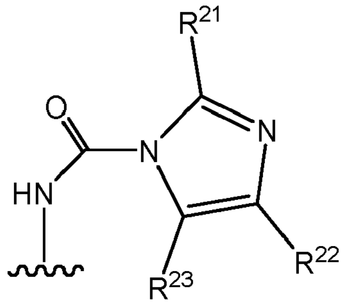

( IIa )

in the general formula (IIa), each of $R^{21}$, $R^{22}$ and $R^{23}$ independently represents a hydrogen atom or an alkyl group which may contain one or more substituents selected from the group consisting of a hydroxy group and an amino group, a total number of carbon atoms of $R^{21}$, $R^{22}$ and $R^{23}$ is 1 or more and 20 or less, and a wavy line represents a bond.

($R^{21}$, $R^{22}$ and $R^{23}$)

From the viewpoint of compatibility, the alkyl group represented by $R^{21}$, $R^{22}$ and $R^{23}$ preferably has 1 to 20 carbon atoms, more preferably 1 to 8 carbon atoms, still more preferably 1 to 6 carbon atoms, and particularly preferably 1 to 4 carbon atoms.
Specific examples of alkyl groups having no substituents include a methyl group, an ethyl group, a propyl group, an isopropyl group, an n-butyl group, a tert-butyl group, a sec-butyl group, an isobutyl group, an n-pentyl group, an isopentyl group, a neopentyl group, a tert-pentyl group, a 1-methylbutyl group, an n-hexyl group, a 2-methylpentyl group, a 3-methylpentyl group, a 2,2-dimethylbutyl group, a 2,3-dimethylbutyl group, an n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, an n-octyl group, an isooctyl group, a 2-ethylhexyl group, a nonyl group and a decyl group.
When $R^{21}$, $R^{22}$ and $R^{23}$ are alkyl groups having a substituent, the substituent is a hydroxy group or an amino group.
Examples of the alkyl group containing a hydroxy group as a substituent include a hydroxymethyl group, a hydroxyethyl group and a hydroxypropyl group.
Examples of the alkyl group containing an amino group as a substituent include an aminomethyl group, an aminoethyl group, an aminopropyl group and an aminobutyl group.
Examples of the alkyl group containing a hydroxy group and an amino group as substituents include a hydroxyaminomethyl group, a hydroxy aminoethyl group and a hydroxyaminopropyl group.
Among them, from the viewpoint of compatibility of the blocked polyisocyanate composition, at least one of $R^{21}$, $R^{22}$ and $R^{23}$ is preferably an alkyl group, and more preferably, only $R^{21}$ is an alkyl group from the viewpoint of low-temperature curability. Further, from the viewpoint of industrial availability, it is still more preferable that $R^{22}$ and $R^{23}$ are

hydrogen atoms and $R^{21}$ is a methyl group or an ethyl group.

<Blocked polyisocyanate component (Y)>

The component (Y) is derived from a polyisocyanate and a blocking agent containing one or more malonic acid diesters. That is, the component (Y) is a reaction product of a polyisocyanate and a blocking agent containing one or more malonic acid diesters.

[Structure (IV)]

The component (Y) contains a blocked polyisocyanate having a structure (IV). The structure (IV) is a structure formed by blocking the isocyanate group of the polyisocyanate (y1) with the blocking agent (y2).

[Chemical Formula 13]

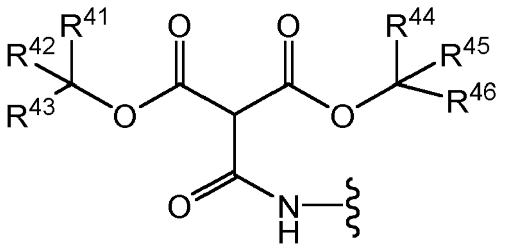

( IV )

in the general formula (IV), each of $R^{41}$, $R^{42}$ and $R^{43}$ independently represents an alkyl group which may contain one or more substituents selected from the group consisting of a hydroxy group and an amino group, a total number of carbon atoms of $R^{41}$, $R^{42}$ and $R^{43}$ is 3 or more and 20 or less, each of $R^{44}$, $R^{45}$ and $R^{46}$ independently represents a hydrogen atom or an alkyl group which may contain one or more substituents selected from the group consisting of a hydroxy group and an amino group, and a wavy line represents a bond.

($R^{41}$, $R^{42}$, $R^{43}$, $R^{44}$, $R^{45}$ and $R^{46}$)

The alkyl group represented by $R^{41}$, $R^{42}$, $R^{43}$, $R^{44}$, $R^{45}$ and $R^{46}$ preferably has 1 or more and 20 or less carbon atoms, more preferably 1 or more and 8 or less carbon atoms, still more preferably 1 or more and 6 or less carbon atoms, and particularly preferably 1 or more and 4 or less carbon atoms.

Specific examples of the alkyl groups having no substituents and the alkyl groups having a substituent that are represented by $R^{41}$, $R^{42}$, $R^{43}$, $R^{44}$, $R^{45}$ and $R^{46}$ include the same as those exemplified in the above section entitled "structure (IIa)".

The total number of carbon atoms of $R^{41}$, $R^{42}$ and $R^{43}$ is 3 or more and 20 or less, preferably 4 or more and 20 or less, more preferably 4 or more and 12 or less, still more preferably 4 or more and 9 or less, and particularly preferably 4 or more and 6 or less.

When the total number of carbon atoms of $R^{41}$, $R^{42}$ and $R^{43}$ is equal to or more than the above lower limit value, the storage stability can be brought about when forming a water-based resin composition. On the other hand, when the total number of carbon atoms is equal to or less than the above upper limit value, the low-temperature curability can be brought about.

Further, from the viewpoint of solvent resistance when forming a coating film, the total number of carbon atoms of $R^{41}$, $R^{42}$ and $R^{43}$ is most preferably 4.

Among them, the alkyl group represented by $R^{41}$, $R^{42}$, $R^{41}$, $R^{44}$, $R^{45}$ and $R^{46}$ is preferably an unsubstituted alkyl group, and more preferably an unsubstituted alkyl group having 1 to 4 carbon atoms.

Since the storage stability when forming a water-based resin composition and the low-temperature curability when forming a resin film are further improved, each of $R^{41}$, $R^{42}$ and $R^{43}$ independently and preferably represents an unsubstituted alkyl group, more preferably an unsubstituted alkyl group having 1 to 4 carbon atoms, and still more preferably a methyl group or an ethyl group.

It is preferable that at least one of $R^{41}$, $R^{42}$ and $R^{43}$ is an ethyl group.

Each of $R^{44}$, $R^{45}$ and $R^{46}$ independently and preferably represents a hydrogen atom or an unsubstituted alkyl group, more preferably a hydrogen atom or an unsubstituted alkyl group having 1 to 4 carbon atoms, and still more preferably a hydrogen atom, a methyl group or an ethyl group.

It is preferable that at least one of $R^{44}$, $R^{45}$ and $R^{46}$ is a hydrogen atom, and it is more preferable that only one of them is a hydrogen atom.

When at least one of $R^{44}$, $R^{45}$ and $R^{46}$ is a hydrogen atom, it is possible to further improve the storage stability when forming a water-based resin composition while maintaining the low-temperature curability.

The total number of carbon atoms of $R^{44}$, $R^{45}$ and $R^{46}$ is preferably 2 or more and 20 or less, more preferably 3 or more and 12 or less, still more preferably 4 or more and 9 or less, and particularly preferably 4 or more and 6 or less.

The blocked polyisocyanate contained in the component (Y) (or the structure of the isocyanate group of the polyisocyanate (y1) blocked with the blocking agent (y2)) preferably contains a structure represented by the following general formula (IV-1) (hereinafter sometimes referred to as "structure (IV-1)") as the structure (IV).

[Chemical Formula 14]

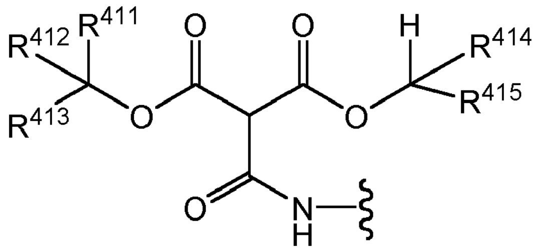

( IV -1)

In the general formula (IV-1), $R^{411}$, $R^{412}$ and $R^{413}$ are the same as the above $R^{41}$, $R^{42}$ and $R^{43}$, respectively; $R^{414}$ and $R^{415}$ are the same as the above $R^{45}$ and $R^{46}$, respectively; and a wavy line represents a bond.

The total number of carbon atoms of $R^{411}$, $R^{412}$ and $R^{413}$ is 3 or more and 20 or less, preferably 4 or more and 20 or less, more preferably 4 or more and 12 or less, still more preferably 4 or more and 9 or less, and particularly preferably 4 or more and 6 or less.

When the total number of carbon atoms of $R^{411}$, $R^{412}$ and $R^{413}$ is equal to or more than the above lower limit value, the storage stability can be brought about when forming a water-based resin composition. On the other hand, when the total number of carbon atoms is equal to or less than the above upper limit value, the low-temperature curability can be brought about.

Further, from the viewpoint of solvent resistance when forming a coating film, the total number of carbon atoms of $R^{411}$, $R^{412}$ and $R^{413}$ is most preferably 4.

Among them, the alkyl group represented by $R^{411}$, $R^{412}$, $R^{413}$, $R^{414}$ and $R^{415}$ is preferably an unsubstituted alkyl group, and more preferably an unsubstituted alkyl group having 1 to 4 carbon atoms.

Since the storage stability when forming a water-based resin composition and the low-temperature curability when forming a resin film are further improved, each of $R^{411}$, $R^{412}$ and $R^{413}$ independently and preferably represents an unsubstituted alkyl group, more preferably an unsubstituted alkyl group having 1 to 4 carbon atoms, and still more preferably a methyl group or an ethyl group.

It is preferable that at least one of $R^{411}$, $R^{412}$ and $R^{413}$ is an ethyl group.

Each of $R^{414}$ and $R^{415}$ independently and preferably represents a hydrogen atom or an unsubstituted alkyl group, more preferably a hydrogen atom or an unsubstituted alkyl group having 1 to 4 carbon atoms, and still more preferably a hydrogen atom, a methyl group or an ethyl group.

The content of the structure (IV-1) is preferably 1 mol% or more, more preferably 5 mol% or more, still more preferably 10 mol% or more, still more preferably 20 mol% or more, particularly preferably 40 mol% or more, and most preferably 50 mol% or more with respect to the total molar amount of the structure (IV). When the content of the structure (IV-1) is equal to or more than the above lower limit value, the low-temperature curability when forming a water-based resin composition further improves. On the other hand, the upper limit value of the content of the structure (IV-1) can be set to: for example, 100 mol% with respect to the total molar amount of the structure (IV), that is, the entire structure (IV) can be composed of the structure (IV-1); or can be set to 90 mol% or 80 mol% with respect to the total molar amount of the structure (IV).

[Structure (V)]

The blocked polyisocyanate contained in the component (Y) (or the structure of the isocyanate group of the polyisocyanate (y1) blocked with the blocking agent (y2)) preferably further contains a structure represented by the following general formula (V) (hereinafter sometimes referred to as "structure (V)") in addition to the above structure (IV).

[Chemical Formula 15]

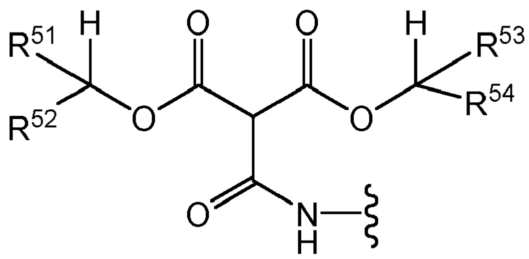

(V)

In the general formula (V), $R^{51}$, $R^{52}$, $R^{53}$ and $R^{54}$ are the same as the above $R^{45}$ and $R^{46}$, respectively, and a wavy line represents a bond.

($R^{51}$, $R^{52}$, $R^{53}$ and $R^{54}$)

$R^{51}$, $R^{52}$, $R^{53}$ and $R^{54}$ are preferably a hydrogen atom or an alkyl group having 1 to 4 carbon atoms and having no substituent, and more preferably a hydrogen atom, a methyl group or an ethyl group since the storage stability improves when forming a water-based resin composition, and still more preferably a methyl group or an ethyl group since the low-temperature curability improves.

When $R^{51}$, $R^{52}$, $R^{53}$ and $R^{54}$ are all methyl groups, two ester moieties of the malonic acid ester of the structure (V) are both isopropyl groups. Further, when either one of $R^{51}$ and $R^{52}$ is a hydrogen atom and the other is a methyl group, and either one of $R^{53}$ and $R^{54}$ is a hydrogen atom and the other is a methyl group, two ester moieties of the malonic acid ester of the structure (V) are both ethyl groups.

Among them, it is particularly preferable that all of $R^{51}$, $R^{52}$, $R^{53}$ and $R^{54}$ are methyl groups, that is, both of the two ester moieties of the malonic acid ester of the structure (V) are isopropyl groups.

A molar ratio of the structure (V) with respect to the structure (IV) (structure (V)/structure (IV)) is preferably 4/96 or more and 96/4 or less, more preferably 5/95 or more and 95/5 or less, still more preferably 7/93 or more and 93/7 or less, still more preferably 10/90 or more and 90/10 or less, still more preferably 20/80 or more and 85/15 or less, still more preferably 30/70 or more and 85/15 or less, particularly preferably 35/65 or more and 85/15 or less, and most preferably 50/50 or more and 70/30 or less. When this structure (V)/structure (IV) molar ratio is equal to or more than the above lower limit value, the storage stability can be further improved when forming a resin composition, and when this molar ratio is equal to or less than the above upper limit value, the low-temperature curability can be further improved when forming a resin film.

The molar ratio of the structure (V) with respect to the structure (IV) can be calculated, for example, by measuring a composition ratio of the structure (V) with respect to the structure (IV) in the blocked polyisocyanate composition by $^{1}H$-NMR and $^{13}C$-NMR

[Polyisocyanate]

The polyisocyanate (x1) and the polyisocyanate (y1) used in the component (X) and the component (Y) (hereinafter may be collectively referred to simply as "polyisocyanate") are reaction products obtained by reacting a plurality of monomer compounds (hereinafter may be referred to as "isocyanate monomers") having one or more isocyanate groups (-NCO).

The isocyanate monomer preferably has 4 or more and 30 or less carbon atoms. Specific examples of the isocyanate monomer include the following monomers. Any one of these isocyanate monomers may be used alone, or two or more types thereof may be used in combination.

(1) Aromatic diisocyanates such as diphenylmethane-4,4'-diisocyanate (MDI), 1,5-naphthalene diisocyanate, tolylene diisocyanate (TDI), xylylene diisocyanate and m-tetramethylxylylene diisocyanate (TMXDI).

(2) Aliphatic diisocyanates such as 1,4-tetramethylene diisocyanate, 1,6-hexamethylene diisocyanate (hereinafter, sometimes referred to as "HDI"), 2,2,4-trimethyl-1,6-diisocyanatohexane, 2,4,4-trimethyl-1,6-hexamethylene diisocyanate, 2-methylpentane-1,5-diisocyanate (MPDI) and lysine diisocyanate (hereinafter, sometimes referred to as "LDI").

(3) Alicyclic diisocyanates such as isophorone diisocyanate (hereinafter, sometimes referred to as "IPDI"), 1,3-bis(diisocyanate methyl) cyclohexane, 4,4'-dicyclohexylmethane diisocyanate, diisocyanate norbornane and di(isocyanate methyl) norbornane.

(4) Triisocyanates such as 4-isocyanate methyl-1,8-octamethylene diisocyanate (hereinafter, sometimes referred to as "NTI"), 1,3,6-hexamethylene triisocyanate (hereinafter, sometimes referred to as "HTI"), bis(2-isocyanatoethyl)2-isocyanatoglutarate (hereinafter, sometimes referred to as "GTI") and lysine triisocyanate (hereinafter, sometimes referred to as "LTI").

Among them, the isocyanate monomer is preferably one or more diisocyanates selected from the group consisting of an aliphatic diisocyanate and an alicyclic diisocyanate because the weather resistance improves. Further, as the isocyanate monomer, HDI or IPDI is more preferred from the viewpoint of industrial availability. Moreover, as the isocyanate monomer, HDI is still more preferred from the viewpoint of lowering the viscosity of the blocked polyisocyanate component.

Further, as the isocyanate monomer used for producing the polyisocyanate, although either an aliphatic diisocyanate or an alicyclic diisocyanate may be used alone, or a combination thereof may be used, it is preferable to use an aliphatic diisocyanate and an alicyclic diisocyanate in combination, and it is particularly preferable to use HDI and IPDI. By using an aliphatic diisocyanate and an alicyclic diisocyanate, it is possible to further improve the toughness and hardness when forming a coating film.

In the polyisocyanate, from the viewpoint of improving the coating film hardness and strength, a mass ratio of the structural unit derived from an aliphatic diisocyanate with respect to the structural unit derived from an alicyclic diisocyanate (structural unit derived from an aliphatic diisocyanate / structural unit derived from an alicyclic diisocyanate) is preferably from 50/50 or more and 95/5 or less, more preferably from 55/45 or more and 93/7 or less, still more preferably from 60/40 or more and 91/9 or less, and still more preferably from 65/35 or more and 90/10 or less.

When the mass ratio of the structural unit derived from an aliphatic diisocyanate with respect to the structural unit derived from an alicyclic diisocyanate is equal to or more than the above lower limit value, it is possible to suppress the decrease in flexibility more effectively when forming a coating film. On the other hand, when the mass ratio is equal to or less than the above upper limit value, the hardness when forming a coating film can be further improved.

The mass ratio of the structural unit derived from an aliphatic diisocyanate with respect to the structural units derived from an alicyclic diisocyanate can be calculated using, for example, the following method. First, from the mass of the unreacted diisocyanate after reaction and the concentrations of the aliphatic diisocyanate and the alicyclic diisocyanate in the unreacted diisocyanate obtained by gas chromatographic measurement, the mass of the unreacted aliphatic diisocyanate and the mass of the unreacted alicyclic diisocyanate are calculated. Then, after subtracting the mass of the unreacted aliphatic diisocyanate and the mass of the unreacted alicyclic diisocyanate calculated above from the mass of the charged aliphatic diisocyanate and the mass of the alicyclic diisocyanate, respectively, each of the obtained differences is defined as the mass of the structural unit derived from an aliphatic diisocyanate and the mass of the structural unit derived from an alicyclic diisocyanate. Then, by dividing the mass of the structural unit derived from an aliphatic diisocyanate by the mass of the structural unit derived from an alicyclic diisocyanate, the mass ratio of the structural unit derived from an aliphatic diisocyanate with respect to the structural unit derived from an alicyclic diisocyanate is obtained.

(Polyol)

The polyisocyanate is preferably derived from the diisocyanate monomer described above and a polyol having an average number of hydroxyl functional groups of 3.0 or more and 8.0 or less. This makes it possible to increase the average number of isocyanate groups in the obtained polyisocyanate. In this polyisocyanate, a urethane group is formed by the reaction between the hydroxyl group of the polyol and the isocyanate group of the diisocyanate monomer.

The average number of hydroxyl functional groups in the polyol is preferably 3.0 or more and 8.0 or less, more preferably 3 or more and 6 or less, still more preferably 3 or more and 5 or less, and particularly preferably 3 or 4. It should be noted that the average number of hydroxyl functional groups in the polyol mentioned here is the number of hydroxyl groups present in one molecule of the polyol.

The number average molecular weight of the polyol is preferably 100 or more and 1,000 or less, more preferably 100 or more and 900 or less, still more preferably 100 or more and 600 or less, still more preferably 100 or more and 570 or less, still more preferably 100 or more and 500 or less, still more preferably 100 or more and 400 or less, particularly preferably 100 or more and 350 or less, and most preferably 100 or more and 250 or less, from the viewpoint of improving the coating film hardness and strength.

When the number average molecular weight of the polyol is within the above range, the blocked polyisocyanate composition is excellent in low-temperature curability when forming a coating film, and is particularly excellent in hardness and strength. The number average molecular weight Mn of the polyol is, for example, a number average molecular weight based on polystyrene measured by GPC.

Examples of such polyols include trimethylolpropane, glycerol, and polycaprolactone polyols derived from

trihydric or higher polyhydric alcohols and ε-caprolactone.

Examples of commercially available products of the polycaprolactone polyol include "Placcel 303" (number average molecular weight: 300), "Placcel 305" (number average molecular weight: 550), "Placcel 308" (number average molecular weight: 850) and "Placcel 309" (number average molecular weight: 900) manufactured by Daicel Corporation.

(Method for producing polyisocyanate)

A method for producing a polyisocyanate will be described in detail below.

The polyisocyanate can be obtained, for example, by carrying out an allophanate-forming reaction for forming an allophanate group, a uretdione-forming reaction for forming a uretdione group, an iminooxadiazinedione-forming reaction for forming an iminooxadiazinedione group, an isocyanurate-forming reaction for forming an isocyanurate group, a urethane-forming reaction for forming a urethane group and a biuret-forming reaction for forming a biuret group at once in the presence of an excess of an isocyanate monomer, and removing the unreacted isocyanate monomer after the completion of the reaction. That is, the polyisocyanate obtained by the above reactions is a reaction product in which a plurality of the above isocyanate monomers are bonded, and having one or more members selected from the group consisting of an allophanate group, a uretdione group, an iminooxadiazinedione group, an isocyanurate group, a urethane group and a biuret group.

Alternatively, the above reactions may be carried out separately, and each of the separately obtained polyisocyanates may be mixed in a specific ratio.

From the viewpoint of ease of production, it is preferable to carry out the above reactions at once to obtain the polyisocyanate, and from the viewpoint of freely adjusting the molar ratio of each functional group, it is preferable to produce them separately and then mix them.

(1) Method for producing allophanate group-containing polyisocyanate

An allophanate group-containing polyisocyanate can be obtained by adding an alcohol to an isocyanate monomer and using an allophanate-forming reaction catalyst.

The alcohol used for forming the allophanate group is preferably an alcohol formed only with carbon, hydrogen and oxygen.

Specific examples of the alcohol include, but are not limited to, a monoalcohol and a dialcohol. Any one of these alcohols may be used alone, or two or more types thereof may be used in combination.

Examples of the monoalcohol include methanol, ethanol, propanol, butanol, pentanol, hexanol, heptanol, octanol, and nonanol.

Examples of the dialcohol include ethylene glycol, 1,3-butanediol, neopentyl glycol and 2-ethylhexanediol.

Among them, the alcohol is preferably a monoalcohol, and more preferably a monoalcohol having a molecular weight of 200 or less.

Examples of the allophanate-forming reaction catalyst include, but are not limited to, an alkyl carboxylic acid salt of tin, lead, zinc, bismuth, zirconium, zirconyl and the like.

Examples of the alkyl carboxylic acid salt of tin (organic tin compound) include tin 2-ethylhexanoate and dibutyltin dilaurate.

Examples of the alkyl carboxylic acid salt of lead (organic lead compound) include lead 2-ethylhexanoate and the like.

Examples of the alkyl carboxylic acid salt of zinc (organic zinc compound) include zinc 2-ethylhexanoate and the like.

Examples of the alkyl carboxylic acid salt of bismuth include bismuth 2-ethylhexanoate and the like.

Examples of the alkyl carboxylic acid salt of zirconium include zirconium 2-ethylhexanoate and the like.

Examples of the alkyl carboxylic acid salt of zirconyl include zirconyl 2-ethylhexanoate and the like. Any one of these catalysts can be used alone, or two or more types thereof can be used in combination.

Further, an isocyanurate-forming reaction catalyst which will be described later can also be used as the allophanate-forming reaction catalyst. When the allophanate-forming reaction is carried out using the isocyanurate-forming reaction catalyst described later, not surprisingly, an isocyanurate group-containing polyisocyanate (hereinafter sometimes referred to as "isocyanurate-type polyisocyanate") is also produced.

Among the catalysts, from the viewpoint of economical production, it is preferable to carry out the allophanate-forming reaction and the isocyanurate-forming reaction by using the isocyanurate-forming reaction catalyst described later as the allophanate-forming reaction catalyst.

The lower limit value of the amount of the above-mentioned allophanate-forming reaction catalyst to be used is preferably 10 ppm by mass, more preferably 20 ppm by mass, still more preferably 40 ppm by mass, and particularly preferably 80 ppm by mass with respect to the mass of the charged isocyanate monomer.

The upper limit value of the amount of the above-mentioned allophanate-forming reaction catalyst to be used is preferably 1,000 ppm by mass, more preferably 800 ppm by mass, still more preferably 600 ppm by mass, and particularly preferably 500 ppm by mass with respect to the mass of the charged isocyanate monomer.

That is, the amount of the above-mentioned allophanate-forming reaction catalyst to be used is preferably 10 ppm by mass or more and 1,000 ppm by mass or less, more preferably 20 ppm by mass or more and 800 ppm by mass or less, still more preferably 40 ppm by mass or more and 600 ppm by mass or less, and particularly preferably 80 ppm by mass or more and 500 ppm by mass or less with respect to the mass of the charged isocyanate monomer.

In addition, the lower limit value of the allophanate-forming reaction temperature is preferably 40°C, more preferably 60°C, still more preferably 80°C, and particularly preferably 100°C.

In addition, the upper limit value of the allophanate-forming reaction temperature is preferably 180°C, more preferably 160°C, and still more preferably 140°C.

That is, the allophanate-forming reaction temperature is preferably 40°C or higher and 180°C or lower, more preferably 60°C or higher and 160°C or lower, still more preferably 80°C or higher and 140°C or lower, and particularly preferably 100°C or higher and 140°C or lower.

When the allophanate-forming reaction temperature is equal to or more than the above lower limit value, the reaction rate can be further improved. When the allophanate-forming reaction temperature is equal to or less than the above upper limit value, there is a tendency that coloration or the like of the polyisocyanate can be suppressed more effectively.

(2) Method for producing uretdione group-containing polyisocyanate

When a polyisocyanate having a uretdione group is derived from an isocyanate monomer, it can be produced, for example, by polymerizing the isocyanate monomer using a uretdione-forming reaction catalyst or by heating.

Examples of the uretdione-forming reaction catalyst include, but are not particularly limited to, tertiary phosphines such as trialkylphosphines, tris(dialkylamino)phosphines and cycloalkylphosphines, and Lewis acids.

Examples of the trialkylphosphine include tri-n-butylphosphine and tri-n-octylphosphine.

Examples of the tris(dialkylamino)phosphine include tris-(dimethylamino)phosphine and the like.

Examples of the cycloalkylphosphine include cyclohexyl-di-n-hexylphosphine and the like.

Examples of the Lewis acid include boron trifluoride and zinc oxychloride.

Many of the uretdione-forming reaction catalysts can also promote the isocyanurate-forming reaction at the same time.

When a uretdione-forming reaction catalyst is used, it is preferable to stop the uretdione-forming reaction by adding a deactivator of the uretdione-forming reaction catalyst such as phosphoric acid or methyl p-toluenesulfonate at the time when the desired yield is reached.

In addition, in the case of obtaining a polyisocyanate having a uretdione group by heating one or more diisocyanates selected from the group consisting of the above aliphatic diisocyanates and the above alicyclic diisocyanates without using a uretdione-forming reaction catalyst, the heating temperature is preferably 120°C or higher, and more preferably 150°C or higher and 170°C or lower. Further, the heating time is preferably 1 hour or more and 4 hours or less.

(3) Method for producing iminooxadiazinedione group-containing polyisocyanate

When an iminooxadiazinedione group-containing polyisocyanate is derived from an isocyanate monomer, an iminooxadiazinedione-forming reaction catalyst is usually used.

Examples of the iminooxadiazinedione-forming reaction catalyst include those shown in 1) or 2) below.

1) A (poly)hydrogen fluoride compound represented by a general formula $M[F_n]$ or a general formula $M[F_n(HF)_m]$. (In the formula, m and n are integers that satisfy a relationship of $m/n > 0$, M is an n-charged cation (mixture) or one or more radicals having a valence of n in total.)

2) A compound composed of a compound represented by a general formula $R^1\text{-}CR'_2\text{-}C(O)O^-$ or a general formula $R^2\text{=}CR'\text{-}C(O)O^-$, and a quaternary ammonium cation or a quaternary phosphonium cation.
(In the formula, $R^1$ represents a linear, branched or cyclic saturated or unsaturated perfluoroalkyl group having 1 to 30 carbon atoms; $R^2$ represents a linear, branched or cyclic saturated or unsaturated perfluoroalkylidene group having 1 to 30 carbon atoms, and each of a plurality of R's independently represents a hydrogen atom, or an alkyl group or aryl group having 1 to 20 carbon atoms which may contain a hetero atom.)

Specific examples of the compound 1) ((poly)hydrogen fluoride) include tetramethylammonium fluoride hydrate and tetraethylammonium fluoride.

Specific examples of the compound 2) include 3,3,3-trifluorocarboxylic acid, 4,4,4,3,3-pentafluorobutanoic acid,

5,5,5,4,4,3,3-heptafluoropentanoic acid and 3,3-difluoroprop-2-enoic acid.

Among them, as the iminooxadiazinedione-forming reaction catalyst, the compound 1) is preferable from the viewpoint of availability, and the compound 2) is preferable from the viewpoint of safety.

Although the lower limit value of the amount of the iminooxadiazinedione-forming reaction catalyst to be used is not particularly limited, from the viewpoint of reactivity, it is preferably 5 ppm, more preferably 10 ppm, and still more preferably 20 ppm, in mass ratio, with respect to the isocyanate monomer such as HDI as a raw material.

The upper limit value of the amount of the iminooxadiazinedione-forming reaction catalyst to be used is preferably 5,000 ppm, more preferably 2,000 ppm, and still more preferably 500 ppm, in mass ratio, with respect to the isocyanate monomer such as HDI as a raw material from the viewpoint of suppressing the coloration and discoloration of the product and controlling the reaction.

That is, the amount of the iminooxadiazinedione-forming reaction catalyst to be used is preferably 5 ppm or more and 5,000 ppm or less, more preferably 10 ppm or more and 2,000 ppm or less, and still more preferably 20 ppm or more and 500 ppm or less, in mass ratio, with respect to the isocyanate monomer such as HDI as a raw material.

Although the lower limit value of the reaction temperature for the iminooxadiazinedione-forming reaction is not particularly limited, from the viewpoint of reaction rate, it is preferably 40°C, more preferably 50°C, and still more preferably 60°C.

The upper limit value of the reaction temperature for the iminooxadiazinedione-forming reaction is preferably 150°C, more preferably 120°C, and still more preferably 110°C from the viewpoint of suppressing the coloration and discoloration of the product.

That is, the reaction temperature for the iminooxadiazinedione-forming reaction is preferably 40°C or higher and 150°C or lower, more preferably 50°C or higher and 120°C or lower, and still more preferably 60°C or higher and 110°C or lower.

The iminooxadiazinedione-forming reaction can be stopped at the time when the iminooxadiazinedione-forming reaction reaches the desired content of the iminooxadiazinedione group. The iminooxadiazinedione-forming reaction can be stopped, for example, by adding an acidic compound to the reaction solution. Examples of the acidic compound include phosphoric acid, acidic phosphoric acid esters, sulfuric acid, hydrochloric acid and sulfonic acid compounds. As a result, the iminooxadiazinedione-forming reaction catalyst is neutralized or deactivated by thermal decomposition, chemical decomposition or the like. After stopping the reaction, filtration is performed if necessary.

(4) Method for producing isocyanurate group-containing polyisocyanate

Examples of the catalyst for deriving the polyisocyanate containing an isocyanurate group from an isocyanate monomer include a commonly used isocyanurate-forming reaction catalyst.

Although the isocyanurate-forming reaction catalyst is not particularly limited, it is generally preferable to have basicity. Specific examples of the isocyanurate-forming reaction catalyst include those shown below.

1) Hydroxides of tetraalkylammoniums such as tetramethylammonium, tetraethylammonium and tetrabutylammonium, and weak organic acid salts such as acetates, propionates, octylates, caprates, myristates and benzoates of the above tetraalkylammoniums.
2) Hydroxides of aryltrialkylammoniums such as benzyltrimethylammonium and trimethylphenylammonium, and weak organic acid salts such as acetates, propionates, octylates, caprates, myristates and benzoates of the above aryltrialkylammoniums.
3) Hydroxides of hydroxyalkylammoniums such as trimethylhydroxyethylammonium, trimethylhydroxypropylammonium, triethylhydroxyethylammonium and triethylhydroxypropylammonium, and weak organic acid salts such as acetates, propionates, octylates, caprates, myristates and benzoates of the above hydroxyalkylammoniums.
4) Salts of metals such as tin, zinc and lead of alkylcarboxylic acids such as acetic acid, propionic acid, caproic acid, octylic acid, capric acid and myristic acid.
5) Alcoholates of metals such as sodium and potassium.
6) Aminosilyl group-containing compounds such as hexamethylenedisilazane and the like.
7) Mannich bases.
8) Mixtures of tertiary amines and epoxy compounds.
9) Phosphorus-based compounds such as tributylphosphine and the like.

Among them, from the viewpoint of hardly generating unnecessary byproducts, the isocyanurate-forming reaction catalyst is preferably a quaternary ammonium hydroxide or a weak organic acid salt of quaternary ammonium, and more preferably a hydroxide of tetraalkylammonium, a weak organic acid salt of tetraalkylammonium, a hydroxide of aryltrialkylammonium, or a weak organic acid salt of aryltrialkylammonium.

The upper limit value of the amount of the above-mentioned isocyanurate-forming reaction catalyst to be used

is preferably 1,000 ppm by mass, more preferably 500 ppm by mass, and still more preferably 100 ppm by mass with respect to the mass of the charged isocyanate monomer.

On the other hand, although the lower limit value of the amount of the above-mentioned isocyanurate-forming reaction catalyst to be used is not particularly limited, it may be, for example, 10 ppm by mass.

The isocyanurate-forming reaction temperature is preferably 50°C or higher and 120°C or lower, and more preferably 60°C or higher and 90°C or lower. When the isocyanurate-forming reaction temperature is equal to or less than the above upper limit value, there is a tendency that coloration or the like of the polyisocyanate can be suppressed more effectively.

At the time when the desired conversion rate (ratio of the mass of the polyisocyanate produced in the isocyanurate-forming reaction with respect to the mass of the charged isocyanate monomer) is reached, the isocyanurate-forming reaction is stopped by adding an acidic compound (for example, phosphoric acid, acidic phosphoric acid esters or the like).

It should be noted that in order to obtain the polyisocyanate, it is necessary to stop the progress of the reaction at an initial stage. However, since the reaction rate at the initial stage of the isocyanurate-forming reaction is very fast, it is difficult to stop the progress of the reaction at the initial stage, and it is necessary to carefully select the reaction conditions, especially the amount of the catalyst added and the addition method thereof. For example, a method of adding the catalyst in divided portions at regular intervals or the like is recommended as a suitable method.

Therefore, the conversion rate of the isocyanurate-forming reaction for obtaining the polyisocyanate is preferably 10% or more and 60% or less, more preferably 15% or more and 55% or less, and still more preferably 20% or more and 50% or less.

When the conversion rate of the isocyanurate-forming reaction is equal to or less than the above upper limit value, it is possible to allow the blocked polyisocyanate component to have a lower viscosity. Further, when the conversion rate of the isocyanurate-forming reaction is equal to or more than the above lower limit value, the operation to stop the reaction can be performed more easily.

Further, when deriving a polyisocyanate containing an isocyanurate group, an alcohol having a valence of 1 or more and 6 or less can be used in addition to the above isocyanate monomer.

Examples of the alcohols having a valence of 1 or more and 6 or less that can be used include non-polymerizable alcohols and polymerizable alcohols. The term "non-polymerizable alcohol" as used herein means an alcohol having no polymerizable groups. On the other hand, the term "polymerizable alcohol" means an alcohol obtained by polymerizing a monomer having a polymerizable group and a hydroxyl group.

Examples of the non-polymerizable alcohol include polyhydric alcohols such as monoalcohols, diols, triols and tetraols.

Examples of the monoalcohols include methanol, ethanol, n-propanol, isopropanol, n-butanol, isobutanol, sec-butanol, n-pentanol, n-hexanol, n-octanol, n-nonanol, 2-ethylbutanol, 2,2-dimethylhexanol, 2-ethylhexanol, cyclohexanol, methylcyclohexanol and ethylcyclohexanol.

Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethyl pentanediol, 2-butyl-2-ethyl-1,3-propanediol and 2,2-diethyl-1,3-propanediol.

Examples of the triols include glycerin and trimethylolpropane.

Examples of the tetraols include pentaerythritol and the like.

Examples of the polymerizable alcohol include, but are not particularly limited to, polyester polyols, polyether polyols, acrylic polyols and polyolefin polyols.

Examples of the polyester polyols include, but are not particularly limited to, a product obtained by a condensation reaction of a single dibasic acid or a mixture of dibasic acids with a single polyhydric alcohol or a mixture of polyhydric alcohols.

Examples of the dibasic acid include, but are not particularly limited to, at least one dibasic acid selected from the group consisting of carboxylic acids such as succinic acid, adipic acid, sebacic acid, dimer acid, maleic anhydride, phthalic anhydride, isophthalic acid and terephthalic acid.

Examples of the polyhydric alcohol include, but are not particularly limited to, at least one polyhydric alcohol selected from the group consisting of ethylene glycol, propylene glycol, diethylene glycol, neopentyl glycol, trimethylolpropane and glycerin.

Further, examples of the polyester polyols include polycaprolactones obtained by ring-opening polymerization of ε-caprolactone using the above polyhydric alcohol.

Examples of the polyether polyols include, but are not particularly limited to, polyether polyols obtained by adding a single alkylene oxide or a mixture of alkylene oxides to a single polyhydric alcohol or a mixture of polyhydric alcohols using an alkali metal hydroxide or a strongly basic catalyst, polyether polyols obtained by reacting a polyamine

compound with an alkylene oxide, and so-called polymer polyols obtained by polymerizing an acrylamide and the like using the above polyethers as a medium.

Examples of the alkali metal include lithium, sodium and potassium.

Examples of the strongly basic catalyst include alcoholates and alkylamines.

Examples of the polyhydric alcohol include the same as those exemplified in the above polyester polyols.

Examples of the alkylene oxide include ethylene oxide, propylene oxide, butylene oxide, cyclohexene oxide and styrene oxide.

Examples of the polyamine compound include ethylenediamines and the like.

Examples of the acrylic polyol include, but are not particularly limited to, acrylic polyols obtained by copolymerizing a single ethylenically unsaturated bond-containing monomer having a hydroxyl group or a mixture thereof with another single ethylenically unsaturated bond-containing monomer copolymerizable therewith or a mixture thereof.

Examples of the ethylenically unsaturated bond-containing monomer having a hydroxyl group include, but are not particularly limited to, hydroxyethyl acrylate, hydroxypropyl acrylate, hydroxybutyl acrylate, hydroxyethyl methacrylate, hydroxypropyl methacrylate and hydroxybutyl methacrylate.

Examples of the other ethylenically unsaturated bond-containing monomers copolymerizable with the ethylenically unsaturated bond-containing monomer having a hydroxyl group include, but are not particularly limited to, acrylic acid esters, methacrylic acid esters, unsaturated carboxylic acids, unsaturated amides, vinyl-based monomers, and vinyl-based monomers having a hydrolyzable silyl group.

Examples of the acrylic acid ester include methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate and phenyl acrylate.

Examples of the methacrylic acid ester include methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate and phenyl methacrylate.

Examples of the unsaturated carboxylic acid include acrylic acid, methacrylic acid, maleic acid and itaconic acid.

Examples of the unsaturated amide include acrylamide, methacrylamide, N,N-methylenebisacrylamide, diacetone acrylamide, diacetone methacrylamide, maleic acid amide and maleimide.

Examples of the vinyl-based monomer include glycidyl methacrylate, styrene, vinyltoluene, vinyl acetate, acrylonitrile and dibutyl fumarate.

Examples of the vinyl-based monomer having a hydrolyzable silyl group include vinyltrimethoxysilane, vinylmethyldimethoxysilane and $\gamma$-(meth)acryloxypropyltrimethoxysilane.

Examples of the polyolefin polyols include hydroxyl-terminated polybutadiene and hydrogenated products thereof.

(5) Method for producing urethane group-containing polyisocyanate

In the case of deriving a polyisocyanate containing a urethane group from an isocyanate monomer, for example, the polyisocyanate containing a urethane group can be produced by mixing an excess isocyanate monomer, the above polyol and, if necessary, an alcohol other than the above polyol, and adding a urethane-forming reaction catalyst if necessary.

Examples of the polyol include the same as those exemplified in the above section entitled "polyol".

Examples of the alcohol other than the polyol include those exemplified in the above section entitled "method for producing isocyanurate group-containing polyisocyanate" but excluding those exemplified in the above section entitled "polyol".

Examples of the urethane-forming reaction catalyst include, but are not particularly limited to, tin-based compounds, zinc-based compounds and amine-based compounds.

The urethane-forming reaction temperature is preferably 50°C or higher and 160°C or lower, and more preferably 60°C or higher and 120°C or lower.

When the urethane-forming reaction temperature is equal to or less than the above upper limit value, there is a tendency that coloration or the like of the polyisocyanate can be suppressed more effectively.

Further, the urethane-forming reaction time is preferably 30 minutes or more and 4 hours or less, more preferably 1 hour or more and 3 hours or less, and still more preferably 1 hour or more and 2 hours or less.

A ratio of the molar amount of the isocyanate group of the isocyanate monomer with respect to the molar amount of the hydroxyl group of the polyol (and the alcohols other than the polyol, if necessary) is preferably 2/1 or more and 50/1 or less. When this molar ratio is equal to or more than the above lower limit value, it is possible to further reduce the viscosity of the polyisocyanate. When this molar ratio is equal to or less than the above upper limit value, the yield of the urethane group-containing polyisocyanate can be further increased.

(6) Method for producing biuret group-containing polyisocyanate

Examples of the biuretizing agent for deriving a polyisocyanate containing a biuret group from an isocyanate monomer include, but are not particularly limited to, water, monohydric tertiary alcohols, formic acid, organic primary monoamines and organic primary diamines.

The isocyanate group is preferably 6 moles or more, more preferably 10 moles or more, and still more preferably 10 moles or more and 80 moles or less with respect to 1 mole of the biuretizing agent. If the molar amount of the isocyanate group with respect to 1 mole of the biuretizing agent is equal to or more than the above lower limit value, the polyisocyanate will have a sufficiently low viscosity, and if this molar amount is equal to or less than the above upper limit value, the low-temperature curability when forming a resin film will be further improved.

Further, a solvent may be used during the biuret-forming reaction. Any solvent may be used as long as it dissolves the isocyanate monomer and the biuretizing agent such as water and forms a uniform phase under the reaction conditions.

Specific examples of the solvent include ethylene glycol-based solvents and phosphoric acid-based solvents.

Examples of the ethylene glycol-based solvent include ethylene glycol monomethyl ether acetate, ethylene glycol monoethyl ether acetate, ethylene glycol mono-n-propyl ether acetate, ethylene glycol monoisopropyl ether acetate, ethylene glycol mono-n-butyl ether acetate, ethylene glycol diacetate, ethylene glycol dimethyl ether, ethylene glycol diethyl ether, ethylene glycol di-n-propyl ether, ethylene glycol diisopropyl ether, ethylene glycol di-n-butyl ether, ethylene glycol methyl ethyl ether, ethylene glycol methyl isopropyl ether, ethylene glycol methyl-n-butyl ether, ethylene glycol ethyl-n-propyl ether, ethylene glycol ethyl isopropyl ether, ethylene glycol ethyl-n-butyl ether, ethylene glycol-n-propyl-n-butyl ether, ethylene glycol isopropyl-n-butyl ether, diethylene glycol monomethyl ether acetate, diethylene glycol monoethyl ether acetate, diethylene glycol mono-n-propyl ether acetate, diethylene glycol monoisopropyl ether acetate, diethylene glycol mono-n-butyl ether acetate, diethylene glycol diacetate, diethylene glycol dimethyl ether, diethylene glycol diethyl ether, diethylene glycol di-n-propyl ether, diethylene glycol diisopropyl ether, diethylene glycol di-n-butyl ether, diethylene glycol methyl ethyl ether, diethylene glycol methyl isopropyl ether, diethylene glycol methyl-n-propyl ether, diethylene glycol methyl-n-butyl ether, diethylene glycol ethyl isopropyl ether, diethylene glycol ethyl-n-propyl ether, diethylene glycol ethyl-n-butyl ether, diethylene glycol-n-propyl-n-butyl ether and diethylene glycol isopropyl-n-butyl ether.

Examples of the phosphoric acid-based solvent include trimethyl phosphate, triethyl phosphate, tripropyl phosphate and tributyl phosphate.

These solvents may be used alone or by mixing two or more of them.

Among them, ethylene glycol monomethyl ether acetate, ethylene glycol monoethyl ether acetate, ethylene glycol diacetate or diethylene glycol dimethyl ether is preferred as the ethylene glycol-based solvent.

Further, as the phosphoric acid-based solvent, trimethyl phosphate or triethyl phosphate is preferred.

The biuret-forming reaction temperature is preferably 70°C or higher and 200°C or lower, and more preferably 90°C or higher and 180°C or lower. When this reaction temperature is equal to or less than the above upper limit value, there is a tendency that coloration or the like of the polyisocyanate can be prevented more effectively.

Each of the above-mentioned allophanate-forming reaction, uretdione-forming reaction, iminooxadiazinedione-forming reaction, isocyanurate-forming reaction, urethane-forming reaction and biuret-forming reaction may be carried out sequentially, or some of them may be carried out in parallel.

The polyisocyanate can be obtained by removing the unreacted isocyanate monomer from the reaction solution after the completion of the reaction by thin film distillation, extraction or the like.

Further, an antioxidant or an ultraviolet absorber may be added to the obtained polyisocyanate for the purpose of, for example, suppressing the coloration during storage.

Examples of the antioxidant include hindered phenols such as 2,6-di-tert-butyl-p-cresol and the like. Examples of the ultraviolet absorber include benzotriazole and benzophenone. Any one of these antioxidants and ultraviolet absorbers may be used alone, or two or more types thereof may be used in combination. The amount thereof added is preferably 10 ppm by mass or more and 500 ppm by mass or less with respect to the mass of the polyisocyanate.

(Average number of isocyanate groups of polyisocyanate)

An average number of isocyanate groups of the polyisocyanate used in the component (Y) is preferably 2 or more in view of improving the low-temperature curability when forming a resin film, and more preferably 3.0 or more and 20.0 or less, still more preferably 3.2 or more and 10.0 or less, particularly preferably 3.4 or more and 8.0 or less, and most preferably 3.5 or more and 6.0 or less, from the viewpoint of achieving both the low-temperature curability when forming a resin film and the compatibility with the polyvalent hydroxy compound.

The average number of isocyanate functional groups of the polyisocyanate can be measured using the method described in Examples below.

[Blocking agent]

(Blocking agent (x2))

The blocking agent (x2) used in the component (X) is a blocking agent composed of a compound having a heterocyclic ring containing one or more nitrogen atoms. Specific examples of such blocking agents include pyrazole-based compounds, triazole-based compounds and imidazole-based compounds. More specifically, pyrazole, 3-methylpyrazole, 3,5-dimethylpyrazole, 3,5-dimethyl-1,2,4-triazole, 1,2,4-triazole, 1,2,3-triazole, imidazole, 2-methylimidazole, 4-methylimidazole, 2-ethylimidazole, 2-isopropylimidazole, 2,4-dimethylimidazole, 2-ethyl-4-methylimidazole, 2-phenylimidazole, 4-methyl-2-phenylimidazole and the like can be mentioned. Among these, imidazole-based compounds are preferred, and 2-ethylimidazole is more preferred, from the viewpoint of low-temperature curability. Any one of these blocking agents may be used alone, or two or more types thereof may be used in combination.

(Blocking agent (y2))

A malonic acid diester is used as the blocking agent (y2) used in the component (Y). Although the malonic acid ester is not particularly limited, it is preferable to contain a malonic acid ester having a secondary alkyl group, a malonic acid ester having a primary alkyl group or a malonic acid ester having a tertiary alkyl group, and it is more preferable to contain a malonic acid ester having a secondary alkyl group or a malonic acid ester having a tertiary alkyl group. The blocking agent may contain each one of a malonic acid ester having a secondary alkyl group, a malonic acid ester having a primary alkyl group and a malonic acid ester having a tertiary alkyl group, or may contain two or more types thereof in combination.

The malonic acid ester having a primary alkyl group is not particularly limited, and examples thereof include dimethyl malonate, diethyl malonate, dipropyl malonate, dibutyl malonate, dicyclohexyl malonate and diphenyl malonate. Among them, diethyl malonate is preferred as the malonic acid ester having a primary alkyl group.

The malonic acid ester having a secondary alkyl group is not particularly limited, and examples thereof include di-sec-butyl malonate, diisopropyl malonate and isopropylethyl malonate. Among them, diisopropyl malonate is preferred as the malonic acid ester having a secondary alkyl group.

The malonic acid ester having a tertiary alkyl group is not particularly limited, and examples thereof include di-tert-butyl malonate, di(2-methyl-2-butyl) malonate, di(2-methyl-2-pentyl) malonate, (tert-butyl)ethyl malonate, (2-methyl-2-butyl)ethyl malonate, (2-methyl-2-butyl) isopropyl malonate, (2-methyl-2-pentyl)ethyl malonate, (2-methyl-2-pentyl)isopropyl malonate and (2-methyl-2-pentyl)hexylisopropyl malonate. Among them, di(2-methyl-2-butyl) malonate, di(2-methyl-2-pentyl) malonate, (2-methyl-2-butyl)isopropyl malonate, (2-methyl-2-pentyl)ethyl malonate and (2-methyl-2-pentyl)isopropyl malonate are preferred, (2-methyl-2-butyl)ethyl malonate, (2-methyl-2-butyl)isopropyl malonate, (2-methyl-2-pentyl)ethyl malonate and (2-methyl-2-pentyl)hexyl isopropyl malonate are preferred, or di-tert-butyl malonate, (2-methyl-2-butyl)isopropyl malonate or (2-methyl-2-pentyl)isopropyl malonate is preferred.

A commercially available malonic acid ester having a tertiary alkyl group may be used, or a malonic acid ester having a tertiary alkyl group which is synthesized using the method of Japanese Unexamined Patent Application, First Publication No. Hei 11-130728 (Reference Document 5) may be used.

(Other blocking agents)

As the blocking agent, in addition to the blocking agent (x2) and the blocking agent (y2) described above, other blocking agents may be further included within a range that does not impair the storage stability when forming a resin composition and the low-temperature curability when forming a resin film.

Examples of other blocking agents include 1) alcohol-based compounds, 2) alkylphenol-based compounds, 3) phenol-based compounds, 4) active methylene-based compounds, 5) mercaptan-based compounds, 6) acid amide-based compounds, 7) acid imide-based compounds, 8) urea-based compounds, 9) oxime-based compounds, 10) amine-based compounds, 11) imine-based compounds and 12) bisulfites. More specific examples of the blocking agent include those shown below. Any one of these blocking agents may be used alone, or two or more types thereof may be used in combination.

1) Alcohol-based compounds: alcohols such as methanol, ethanol, 2-propanol, n-butanol, sec-butanol, 2-ethyl-1-hexanol, 2-methoxyethanol, 2-ethoxyethanol and 2-butoxyethanol.

2) Alkylphenol-based compounds: mono- and dialkylphenols having an alkyl group of 4 or more carbon atoms as a substituent. Specific examples of alkylphenol-based compounds include monoalkylphenols such as n-propylphenol, iso-propylphenol, n-butylphenol, sec-butylphenol, tert-butylphenol, n-hexylphenol, 2-ethylhexylphenol, n-octylphenol and n-nonylphenol; and dialkylphenols such as di-n-propylphenol, diisopropylphenol, isopropylcresol, di-n-butylphenol, di-tert-butylphenol, di-sec-butylphenol, di-n-octylphenol, di-2-ethylhexylphenol and di-n-nonylphenol.

3) Phenol-based compounds: phenol, cresol, ethylphenol, styrenated phenol, hydroxybenzoic acid esters and the like.

4) Active methylene-based compounds: acetoacetic acid esters (methyl acetoacetate, ethyl acetoacetate, methyl isobutanoylacetate, ethyl isobutanoylacetate), acetylacetone and the like.

5) Mercaptan-based compounds: butyl mercaptan, dodecyl mercaptan and the like.

6) Acid amide-based compounds: acetanilide, acetic acid amide, ε-caprolactam, δ-valerolactam, γ-butyrolactam and the like.

7) Acid imide-based compounds: succinimide, maleimide and the like.

8) Urea-based compounds: urea, thiourea, ethylene urea and the like.

9) Oxime-based compounds: formaldoxime, acetaldoxime, acetoxime, methyl ethyl ketoxime, cyclohexanone oxime and the like.

10) Amine-based compounds: diphenylamine, aniline, carbazole, di-n-propylamine, diisopropylamine, isopropylethylamine and the like.

11) Imine-based compounds: ethyleneimine, polyethyleneimine and the like.

12) Bisulfite compounds: sodium bisulfite and the like.

[Hydrophilic compound]

Examples of hydrophilic compounds used in the component (X) and the component (Y) include nonionic hydrophilic compounds, cationic hydrophilic compounds and anionic hydrophilic compounds. Any one of these hydrophilic compounds may be used alone, or two or more types thereof may be used in combination. Among them, nonionic hydrophilic compounds are preferred because the dispersibility improves when forming a water-based resin composition.

Further, as the hydrophilic compound, an anionic hydrophilic compound is preferred from the viewpoint of suppressing a decrease in the hardness and strength of the obtained resin film and from the viewpoint of improving the emulsifiability.

These hydrophilic compounds have, in addition to a hydrophilic group, one or more active hydrogen groups per molecule of the hydrophilic compound for reacting with isocyanate groups. Specific examples of the active hydrogen group include a hydroxyl group, a mercapto group, a carboxylic acid group, an amino group and a thiol group.

(Nonionic hydrophilic compound)

Specific examples of the nonionic hydrophilic compound include a monoalcohol and a compound obtained by adding ethylene oxide to a hydroxyl group of an alcohol. Examples of the monoalcohol include methanol, ethanol and butanol. Examples of the compound obtained by adding ethylene oxide to a hydroxyl group of an alcohol include ethylene glycol, diethylene glycol and polyethylene glycol.

Among them, as the nonionic hydrophilic compound, a polyethylene glycol monoalkyl ether obtained by adding ethylene oxide to a hydroxyl group of a monoalcohol is preferred because the water dispersibility of the blocked polyisocyanate composition can be improved with a small amount. Examples of the monoalcohol include methanol, ethanol and butanol.

The number of added ethylene oxides in the compound to which ethylene oxides have been added is preferably 4 or more and 30 or less, and more preferably 4 or more and 25 or less. When the number of added ethylene oxides is equal to or more than the above lower limit value, there is a tendency that water dispersibility can be more effectively imparted to the blocked polyisocyanate composition, and when the number of added ethylene oxides is equal to or less than the above upper limit value, there is a tendency that precipitates of the blocked polyisocyanate composition are less likely to occur during low-temperature storage.

(Cationic hydrophilic compound)

Specific examples of the cationic hydrophilic compound include compounds having both a cationic hydrophilic group and an active hydrogen group. Further, a compound having an active hydrogen group such as a glycidyl group and a compound having a cationic hydrophilic group such as sulfide and phosphine may be combined to form a hydrophilic compound. In this case, a compound having an isocyanate group and a compound having an active hydrogen group are reacted in advance to add a functional group such as a glycidyl group, and then a compound such as sulfide and phosphine is allowed to react. From the viewpoint of ease of production, a compound having both a cationic hydrophilic group and an active hydrogen group is preferred.

Specific examples of the compound having both a cationic hydrophilic group and an active hydrogen group include dimethylethanolamine, diethylethanolamine, diethanolamine and methyldiethanolamine. Further, a tertiary amino

group added by using these compounds can also be quaternized with, for example, dimethyl sulfate or diethyl sulfate.

The reaction between the cationic hydrophilic compound and the polyisocyanate can be carried out in the presence of a solvent. The solvent in this case preferably does not contain an active hydrogen group, and specific examples thereof include ethyl acetate, propylene glycol monomethyl ether acetate and dipropylene glycol dimethyl ether.

The cationic hydrophilic group added to the blocked polyisocyanate is preferably neutralized with a compound having an anionic group. Specific examples of the anionic group include a carboxy group, a sulfonic acid group, a phosphoric acid group, a halogen group and a sulfuric acid group.

Specific examples of the compound having a carboxy group include formic acid, acetic acid, propionic acid, butyric acid and lactic acid.

Specific examples of the compound having a sulfonic acid group include ethanesulfonic acid and the like.

Specific examples of the compound having a phosphoric acid group include phosphoric acid and acidic phosphoric acid esters.

Specific examples of the compound having a halogen group include hydrochloric acid and the like.

Specific examples of the compound having a sulfuric acid group include sulfuric acid and the like.

Among them, the compound having an anionic group is preferably a compound having a carboxy group, and more preferably acetic acid, propionic acid or butyric acid.

(Anionic hydrophilic compound)

Specific examples of the anionic hydrophilic group include a carboxy group, a sulfonic acid group, a phosphoric acid group, a halogen group and a sulfuric acid group.

Specific examples of the anionic hydrophilic compound include a compound having both an anionic group and an active hydrogen group, and more specifically, for example, a monohydroxycarboxylic acid or a compound having a carboxy group of polyhydroxycarboxylic acid as an anionic group can be mentioned.

Examples of the monohydroxycarboxylic acid include 1-hydroxyacetic acid, 3-hydroxypropanoic acid, 12-hydroxy-9-octadecanoic acid, hydroxypivalic acid and lactic acid.

Examples of the compound having a carboxy group of polyhydroxycarboxylic acid as an anionic group include dimethylolacetic acid, 2,2-dimethylolbutyric acid, 2,2-dimethylolpentanoic acid, dihydroxysuccinic acid and dimethylolpropionic acid.

Further, a compound having both a sulfonic acid group and an active hydrogen group can also be exemplified, and more specifically, for example, isethionic acid and the like can be exemplified.

Among them, hydroxypivalic acid or dimethylolpropionic acid is preferred as the compound having both an anionic group and an active hydrogen group.

The anionic hydrophilic group added to the blocked polyisocyanate is preferably neutralized with an amine-based compound, which is a basic substance.

Specific examples of the amine-based compound include ammonia and water-soluble amino compounds.

Specific examples of the water-soluble amino compound include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine and morpholine. Further, examples also include tertiary amines such as triethylamine and dimethylethanolamine, and these can also be used. Any one of these amine-based compounds may be used alone, or two or more types thereof may be used in combination.

[Method for producing component (X)]

Although the component (X) is not particularly limited, it can be obtained by reacting the above polyisocyanate (or a hydrophilic compound (preferably a nonionic hydrophilic compound)-modified polyisocyanate) with the above blocking agent.

When a hydrophilic compound-modified polyisocyanate is used as the polyisocyanate, a reaction between the polyisocyanate and the hydrophilic compound and a reaction between the polyisocyanate and the blocking agent can be carried out at the same time, or it is also possible to carry out either of the reactions in advance and then carry out the second and subsequent reactions. Among them, it is preferable to carry out the reaction between the polyisocyanate and the hydrophilic compound first to obtain a hydrophilic compound-modified polyisocyanate modified with the hydrophilic compound, and then carry out the reaction between the obtained hydrophilic compound-modified polyisocyanate and the blocking agent.

For the reaction between the polyisocyanate and the hydrophilic compound, an organic metal salt, a tertiary amine-based compound or an alkali metal alcoholate may be used as a catalyst. Examples of the metal constituting the organic metal salt include tin, zinc, and lead. Examples of the alkali metal include sodium and the like.

The reaction temperature between the polyisocyanate and the hydrophilic compound is preferably -20°C or higher and 150°C or lower, and more preferably 30°C or higher and 130°C or lower. When the reaction temperature is equal to or higher than the above lower limit value, the reactivity tends to be higher. Further, when the reaction temperature is equal to or lower than the above upper limit value, side reactions tend to be suppressed more effectively.
It is preferable to completely react the hydrophilic compound with the polyisocyanate so that the hydrophilic compound does not remain in an unreacted state. When the hydrophilic compound does not remain in an unreacted state, there is a tendency to more effectively suppress the decrease in the water dispersion stability of the blocked polyisocyanate composition and in the low-temperature curability when forming a resin film.
It is preferable to completely react the hydrophilic compound with the polyisocyanate so that the hydrophilic compound does not remain in an unreacted state. When the hydrophilic compound does not remain in an unreacted state, there is a tendency to more effectively suppress the decrease in the water dispersion stability of the blocked polyisocyanate composition and in the low-temperature curability when forming a resin film.
The reaction between the polyisocyanate (or the hydrophilic compound-modified polyisocyanate) and the blocking agent can be carried out regardless of the presence or absence of a solvent to obtain a blocked polyisocyanate.
It should be noted that one type of each blocking agent may be used, or two or more types thereof may be used in combination.
The amount of the blocking agent added may be usually 80 mol% or more and 200 mol% or less, and is preferably 90 mol% or more and 150 mol% or less with respect to the total molar amount of the isocyanate group. Further, when using a solvent, a solvent inert to the isocyanate group may be used.
When a solvent is used, the content of the non-volatile component derived from the polyisocyanate and the blocking agent may be usually 10 parts by mass or more and 95 parts by mass or less, preferably 20 parts by mass or more and 80 parts by mass or less, and more preferably 30 parts by mass or more and 75 parts by mass or less with respect to 100 parts by mass of the blocked polyisocyanate composition.
In the blocking reaction, organic metal salts of tin, zinc, lead and the like, tertiary amine-based compounds and alcoholates of alkali metals such as sodium may be used as catalysts.
Although the amount of the catalyst to be added varies depending on the temperature of the blocking reaction and the like, it may be usually 0.05 parts by mass or more and 1.5 parts by mass or less, and is preferably 0.1 parts by mass or more and 1.0 part by mass or less with respect to 100 parts by mass of the polyisocyanate.
The blocking reaction can generally be carried out at -20°C or higher and 150°C or lower, preferably 0°C or higher and 100°C or lower, and more preferably 10°C or higher and 80°C or lower. When the temperature of the blocking reaction is equal to or higher than the above lower limit value, the reaction rate can be further increased, and when this temperature is equal to or lower than the above upper limit value, side reactions can be further suppressed.
After the blocking reaction, a neutralization treatment may be performed by adding an acidic compound or the like.
An inorganic acid or an organic acid may be used as the acidic compound. Examples of the inorganic acid include hydrochloric acid, phosphorous acid and phosphoric acid. Examples of the organic acid include methanesulfonic acid, p-toluenesulfonic acid, dioctyl phthalate and dibutyl phthalate.

(Effective NCO content of component (X))

An effective NCO content of the blocked polyisocyanate component (X) used in the present embodiment is, as a value at 70% by mass of solid content (nonvolatile component), preferably 2.0% by mass or more and 10.0% by mass or less, more preferably 2.5% by mass or more and 9.0% by mass or less, still more preferably 2.7% by mass or more and 7.9% by mass or less, and particularly preferably 2.9% by mass or more and 6.9% by mass or less from the viewpoint of achieving both the water resistance when forming a resin film and the compatibility with the polyvalent hydroxy compound.
The effective NCO content of the blocked polyisocyanate component (X) can be measured using the method described in Examples below.

[Method for producing component (Y)]

Although the component (Y) is not particularly limited, it can be obtained by reacting the above polyisocyanate (or a hydrophilic compound (preferably a nonionic hydrophilic compound)-modified polyisocyanate) with the above blocking agent.
When a hydrophilic compound-modified polyisocyanate is used as the polyisocyanate, it can be produced by the same method as the method for producing the component (X) described above.
The method for producing the component (Y) is not particularly limited, and examples thereof include the following two methods.

1) Method of reacting the above polyisocyanate (or hydrophilic compound-modified polyisocyanate) with the above malonic acid ester having a tertiary alkyl group, and the above malonic acid ester having a secondary alkyl group or the above malonic acid ester having a primary alkyl group.

2) Method of reacting the above polyisocyanate (or hydrophilic compound-modified polyisocyanate) with at least one blocking agent selected from the group consisting of the above malonic acid ester having a tertiary alkyl group, the above malonic acid ester having a secondary alkyl group and the above malonic acid ester having a primary alkyl group, and adding an alcohol having a chain-like alkyl group to the obtained reaction product to transesterify the terminal ester moiety of the reaction product, thereby introducing an alkyl group derived from the alcohol.

Among the above two methods, the method 2) is preferred from the viewpoint of reaction control.

The blocking reaction between the polyisocyanate and the blocking agent can be carried out regardless of the presence or absence of a solvent to obtain a blocked polyisocyanate.

Among the malonic acid ester-based compounds, diisopropyl malonate, di-tert-butyl malonate or di(2-methyl-2-butyl) malonate is preferred as the blocking agent. Each of these blocking agents may be used singly, or two or more types thereof may be used in combination.

The amount of the blocking agent added may be usually 80 mol% or more and 200 mol% or less, and is preferably 90 mol% or more and 150 mol% or less with respect to the total molar amount of the isocyanate group.

When using a solvent, a solvent inert to the isocyanate group may be used.

When a solvent is used, the content of the non-volatile component derived from the polyisocyanate and the blocking agent with respect to 100 parts by mass of the blocked polyisocyanate composition is as described in the section for the component (X).

In the blocking reaction, organic metal salts of tin, zinc, lead and the like, tertiary amine-based compounds and alcoholates of alkali metals such as sodium may be used as catalysts.

The amount of the catalyst added and the blocking reaction temperature are as described above in the section for the blocked polyisocyanate composition (X).

After the blocking reaction, a neutralization treatment may be performed by adding an acidic compound or the like. As the acidic compound, the same as those described in the section for the component (X) can be used.

Further, also when a hydrophilic compound including a nonionic hydrophilic compound is used, it can be reacted using the same method as that described for the component (X).

In the case of production by the method 2) described above, the transesterification reaction is carried out following the above blocking reaction.

The alcohol having a chain-like alkyl group used in the transesterification reaction in the method 2) may be any alcohol having a chain-like alkyl group, and examples thereof include tertiary alcohols such as tert-butanol and tert-amyl alcohol (2-methyl-2- butanol).

Further, the chain-like alkyl group included in the alcohol may have the same chain-like alkyl group as that of the blocking agent, or may have a different chain-like alkyl group from that of the blocking agent. When it has a chain-like alkyl group different from that of the blocking agent, it is preferable to use a monoalcohol having a chain-like alkyl group with a different number of alkyl substitutions from that of the blocking agent. More specifically, for example, when a malonic acid ester having a secondary alkyl group is used alone as the blocking agent, a monoalcohol having a tertiary alkyl group can be used.

In the case of production by the method 2), during or after the transesterification reaction, the alcohol produced or the residue of the added alcohol is preferably removed by distillation or the like under normal pressure or reduced pressure.

Among them, in order to allow the transesterification reaction to proceed efficiently, it is preferable to remove the generated alcohol by carrying out operations such as distillation during the transesterification reaction. In this case, in order to efficiently remove the alcohol component generated by the transesterification reaction, it is more preferable that the boiling point of the added alcohol component is higher than the boiling point of the generated alcohol component.

The transesterification reaction can generally be carried out at 0°C or higher and 150°C or lower, preferably 30°C or higher and 120°C or lower, and more preferably 50°C or higher and 100°C or lower. When the temperature of the transesterification reaction is equal to or higher than the above lower limit value, the reaction rate can be further increased, and when this temperature is equal to or lower than the above upper limit value, side reactions can be further suppressed.

The amount of the alcohol component in the component (Y) (that is, the content of the blocked isocyanate structure substituted with the chain-like alkyl group of the alcohol by transesterification) is preferably 0.05 parts by mass or more and 41 parts by mass or less, more preferably 0.1 parts by mass or more and 30 parts by mass or less, and still more preferably 0.5 parts by mass or more and 10 parts by mass or less with respect to 100 parts by mass of the solid content of the component (Y). When the amount of the alcohol component is equal to or more than the above lower limit value, the storage stability is improved when forming a water-based resin composition, and when this amount is

equal to or less than the above upper limit value, thickening can be further suppressed at the time of adding a water-based coating material.

(Average number of isocyanate groups of component (Y))

An average number of isocyanate groups of the blocked polyisocyanate component (Y) used in the present embodiment is preferably 2.0 or more in view of improving the low-temperature curability when forming a resin film, and more preferably 2.4 or more and 20.0 or less, still more preferably 2.6 or more and 10.0 or less, particularly preferably 2.7 or more and 8.0 or less, and most preferably 3.0 or more and 6.0 or less, from the viewpoint of achieving both the low-temperature curability when forming a resin film and the compatibility with the polyvalent hydroxy compound.
The average number of isocyanate functional groups of the blocked polyisocyanate component (Y) can be measured using the method described in Examples below.

(Effective NCO content of component (Y))

An effective NCO content of the blocked polyisocyanate component (Y) used in the present embodiment is, as a value at 70% by mass of solid content (nonvolatile component), preferably 3.0% by mass or more and 10.0% by mass or less, more preferably 3.5% by mass or more and 9.0% by mass or less, still more preferably 4.0% by mass or more and 8.0% by mass or less, and particularly preferably 5.0% by mass or more and 7.0% by mass or less from the viewpoint of achieving both the water resistance when forming a resin film and the compatibility with the polyvalent hydroxy compound.
The effective NCO content of the blocked polyisocyanate component (Y) can be measured using the method described in Examples below.

<Other components>

The blocked polyisocyanate composition of the present embodiment can further contain an additive such as a solvent or the like in addition to the above components (X) and (Y).
Examples of the solvent include 1-methylpyrrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, 3-methoxy-3-methyl-1-butanol, ethylene glycol diethyl ether, diethylene glycol diethyl ether, ethylene glycol dimethyl ether, diethylene glycol dimethyl ether, dipropylene glycol dimethyl ether (DPDM), propylene glycol dimethyl ether, methyl ethyl ketone, acetone, methyl isobutyl ketone, propylene glycol monomethyl ether acetate, ethanol, methanol, iso-propanol, 1-propanol, iso-butanol, 1-butanol, tert-butanol, 2-ethylhexanol, cyclohexanol, ethylene glycol, diethylene glycol, triethylene glycol, propylene glycol, dipropylene glycol, 1,4-butanediol, 1,3-butanediol, ethyl acetate, isopropyl acetate, butyl acetate, toluene, xylene, pentane, iso-pentane, hexane, iso-hexane, cyclohexane, solvent naphtha and mineral spirits. These solvents may be used alone, or two or more types thereof may be used in combination. From the viewpoint of dispersibility in water, a solvent having a solubility in water of 5% by mass or more is preferred, and more specifically, DPDM is preferred.

<Method for producing blocked polyisocyanate composition>

The blocked polyisocyanate composition of the present embodiment is obtained by mixing the component (X) and the component (Y) and, if necessary, other components such as a solvent.
Alternatively, the blocked polyisocyanate composition may be produced by mixing each of the component (X) and the component (Y), and other components such as a solvent, if necessary, at the time of adding a coating material.
Above all, it is preferable to mix the component (X) and the component (Y) and, if necessary, other components such as a solvent in advance to produce a blocked polyisocyanate composition.

<<Resin composition>>

A resin composition of the present embodiment contains the above-mentioned blocked polyisocyanate composition and a polyvalent hydroxy compound. The resin composition of the present embodiment can also be said to be a one-pack type resin composition containing a curing agent component and a main agent component.
By containing the above-described blocked polyisocyanate composition, the resin composition of the present embodiment exhibits excellent curability when baked at a low temperature of 90°C or less immediately after production and after storage immediately after production, and a decrease in pH when stored immediately after production is suppressed.

Further, the resin composition of the present embodiment is particularly suitable for use as a water-based resin composition because it exhibits excellent storage stability when forming a water-based resin composition.
The constituent components of the resin composition of the present embodiment will be described in detail below.

<Polyvalent hydroxy compound>

In the present specification, the term "polyvalent hydroxy compound" means a compound having at least two hydroxy groups (hydroxyl groups) in one molecule, and is also called a "polyol".
Specific examples of the polyvalent hydroxy compound include aliphatic hydrocarbon polyols, polyether polyols, polyester polyols, epoxy resins, fluorine-containing polyols, and acrylic polyols.
Among them, the polyvalent hydroxy compound is preferably a polyester polyol, a fluorine-containing polyol or an acrylic polyol.

[Aliphatic hydrocarbon polyols]

Examples of the aliphatic hydrocarbon polyols include hydroxyl-terminated polybutadiene and hydrogenated products thereof.

[Polyether polyols]

Examples of the polyether polyols include those obtained by using any one of the following methods (1) to (3) and the like.

(1) Polyether polyols or polytetramethylene glycols obtained by adding a single alkylene oxide or a mixture of alkylene oxides to a single polyhydric alcohol or a mixture of polyhydric alcohols.
(2) Polyether polyols obtained by reacting a polyfunctional compound with an alkylene oxide.
(3) So-called polymer polyols obtained by polymerizing acrylamide or the like using the polyether polyols obtained in (1) or (2) as a medium.

Examples of the polyhydric alcohol include glycerol and propylene glycol.
Examples of the alkylene oxide include ethylene oxide and propylene oxide.
Examples of the polyfunctional compound include ethylenediamine and ethanolamines.

[Polyester polyols]

Examples of the polyester polyols include polyester polyols of either (1) or (2) below.

(1) Polyester polyol resins obtained by condensation reaction of a single dibasic acid or a mixture of two or more dibasic acids with a single polyhydric alcohol or a mixture of two or more polyhydric alcohols.
(2) Polycaprolactones obtained by ring-opening polymerization of ε-caprolactone with a polyhydric alcohol.

Examples of the dibasic acid include carboxylic acids such as succinic acid, adipic acid, dimer acid, maleic anhydride, phthalic anhydride, isophthalic acid, terephthalic acid and 1,4-cyclohexanedicarboxylic acid.
Examples of the polyhydric alcohol include ethylene glycol, propylene glycol, diethylene glycol, 1,4-butanediol, neopentyl glycol, 1,6-hexanediol, trimethylpentanediol, cyclohexanediol, trimethylolpropane, glycerol, and pentaerythritol, 2-methylolpropanediol and ethoxylated trimethylolpropane.

[Epoxy resins]

Examples of the epoxy resins include epoxy resins such as novolac type epoxy resins, β-methyl epichloro type epoxy resins, cyclic oxirane type epoxy resins, glycidyl ether type epoxy resins, glycol ether type epoxy resins, epoxy type unsaturated aliphatic compounds, epoxidized fatty acid esters, ester type polycarboxylic acids, aminoglycidyl type epoxy resins, halogenated epoxy resins and resorcinol type epoxy resins, and resins obtained by modifying these epoxy resins with amino compounds, polyamide compounds and the like.

[Fluorine-containing polyols]

Examples of the fluorine-containing polyols include copolymers of fluoroolefins, cyclohexyl vinyl ethers, hydroxyalkyl vinyl ethers, monocarboxylic acid vinyl esters and the like disclosed in Reference Document 1 (Japanese Unexamined Patent Application, First Publication No. Sho 57-34107), Reference Document 2 (Japanese Unexamined Patent Application, First Publication No. Sho 61-275311) and the like.

[Acrylic polyols]

The acrylic polyols can be obtained, for example, by polymerizing a polymerizable monomer having one or more active hydrogens in one molecule, or by copolymerizing a polymerizable monomer having one or more active hydrogens in one molecule and, if necessary, another monomer copolymerizable with this polymerizable monomer.

Examples of the polymerizable monomer having one or more active hydrogens in one molecule include those shown in (i) to (iii) below. Any one of these may be used alone, or two or more types thereof may be used in combination.

(i) Acrylic acid esters having an active hydrogen, such as 2-hydroxyethyl acrylate, 2-hydroxypropyl acrylate and 2-hydroxybutyl acrylate.
(ii) Methacrylic acid esters having an active hydrogen, such as 2-hydroxyethyl methacrylate, 2-hydroxypropyl methacrylate and 2-hydroxybutyl methacrylate.
(iii) (Meth)acrylic acid esters having polyvalent active hydrogen, such as an acrylic acid monoester or methacrylic acid monoester of glycerol, and an acrylic acid monoester or methacrylic acid monoester of trimethylolpropane.

Examples of others monomer copolymerizable with the polymerizable monomer include those shown in (i) to (v) below. Any one of these may be used alone, or two or more types thereof may be used in combination.

(i) Acrylic acid esters such as methyl acrylate, ethyl acrylate, isopropyl acrylate, n-butyl acrylate and 2-ethylhexyl acrylate.
(ii) Methacrylic acid esters such as methyl methacrylate, ethyl methacrylate, isopropyl methacrylate, n-butyl methacrylate, isobutyl methacrylate, n-hexyl methacrylate, cyclohexyl methacrylate, lauryl methacrylate and glycidyl methacrylate.
(iii) Unsaturated carboxylic acids such as acrylic acid, methacrylic acid, maleic acid and itaconic acid.
(iv) Unsaturated amides such as acrylamide, N-methylol acrylamide and diacetone acrylamide.
(v) Styrene, vinyltoluene, vinyl acetate, acrylonitrile and the like.

In addition, acrylic polyols obtained by copolymerizing polymerizable UV-stable monomers disclosed in Reference Document 3 (Japanese Unexamined Patent Application, First Publication No. Hei 1-261409) and Reference Document 4 (Japanese Unexamined Patent Application, First Publication No. Hei 3-006273), and the like may also be exemplified.

Specific examples of the polymerizable UV-stable monomer include 4-(meth)acryloyloxy-2,2,6,6-tetramethylpiperidine, 4-(meth)acryloylamino-2,2,6,6-tetramethylpiperidine, 1-crotonoyl-4-crotonoyloxy-2,2,6,6-tetramethylpiperidine and 2-hydroxy-4-(3-methacryloxy-2-hydroxypropoxy)benzophenone.

The acrylic polyol can be obtained, for example, by solution-polymerizing the above monomer component in the presence of a radical polymerization initiator such as a known peroxide and azo compound, and if necessary, diluting with an organic solvent or the like.

In the case of obtaining a water-based acrylic polyol, it can be produced by a method of solution-polymerizing an olefinically unsaturated compound and converting it into an aqueous layer, or a known method such as emulsion polymerization. In that case, water solubility or water dispersibility can be imparted by neutralizing the acidic moieties of carboxylic acid-containing monomers such as acrylic acid and methacrylic acid, sulfonic acid-containing monomers or the like with amines or ammonia.

[Hydroxyl value and acid value of polyvalent hydroxy compound]

A hydroxyl value of the polyvalent hydroxy compound contained in the resin composition of the present embodiment is preferably 5 mgKOH/g or more and 300 mgKOH/g or less, more preferably 10 mgKOH/g or more and 280 mgKOH/g or less, and still more preferably 30 mgKOH/g or more and 250 mgKOH/g or less. When the hydroxyl value of the polyvalent hydroxy compound is within the above range, it is possible to obtain a resin film that is even more excellent in various physical properties such as tensile strength. More specifically, when the hydroxyl value of the polyvalent hydroxy compound is equal to or more than the above lower limit value, the crosslinking density of urethane due to the reaction with polyisocyanate is further increased, and the function of urethane bonds is more easily exhibited. On the other hand, when the hydroxyl value of the polyvalent hydroxy compound is equal to or less than the above upper limit value, the crosslinking density does not increase excessively, and the mechanical properties of the resin film can

be further improved. The hydroxyl value of the polyvalent hydroxy compound is measured, for example, by potentiometric titration, and calculated as a value with respect to the solid content in the polyvalent hydroxy compound.

[Glass transition temperature Tg of polyvalent hydroxy compound]

A glass transition temperature Tg of the polyvalent hydroxy compound contained in the resin composition of the present embodiment is preferably 0°C or higher and 100°C or lower, more preferably 0°C or higher and 90°C or lower, still more preferably 0°C or higher and 80°C or lower, and particularly preferably 5°C or higher and 70°C or lower. When the glass transition temperature of the polyvalent hydroxy compound is within the above range, a resin film with superior tensile strength can be obtained. The glass transition temperature of the polyvalent hydroxy compound can be measured using, for example, a differential scanning calorimeter (DSC).

[Weight average molecular weight Mw of polyvalent hydroxy compound]

The weight average molecular weight Mw of the polyvalent hydroxy compound is preferably $5.0 \times 10^3$ or more and $2.0 \times 10^5$ or less, more preferably $5.0 \times 10^3$ or more and $1.5 \times 10^5$ or less, and still more preferably $5.0 \times 10^3$ or more and $1.0 \times 10^5$ or less. When the weight average molecular weight Mw of the polyvalent hydroxy compound is within the above range, it is possible to obtain a resin film that is even more excellent in various physical properties such as tensile strength. The weight average molecular weight Mw of the polyvalent hydroxy compound is a weight average molecular weight based on polystyrene measured by gel permeation chromatography (GPC).

[NCO/OH]

A molar equivalent ratio (NCO/OH) of the isocyanate group of the blocked polyisocyanate composition with respect to the hydroxyl group of the polyvalent hydroxy compound contained in the resin composition of the present embodiment is determined according to the required physical properties of the resin film, but is usually 0.01 or more and 10.0 or less, preferably 0.1 or more and 5.0 or less, more preferably 0.2 or more and 3.0 or less, and still more preferably 0.25 or more and 2.0 or less.

[Content of blocked polyisocyanate composition]

In the resin composition of the present embodiment, a content of the blocked polyisocyanate may be any amount as long as the molar equivalent ratio of the isocyanate group of the blocked polyisocyanate with respect to the hydroxyl group of the polyvalent hydroxy compound is within the above range. For example, it is preferably 1 part by mass or more and 200 parts by mass or less, more preferably 5 parts by mass or more and 180 parts by mass or less, and still more preferably 10 parts by mass or more and 150 parts by mass or less with respect to 100 parts by mass of the polyvalent hydroxy compound. When the content of the blocked polyisocyanate is within the above range, it is possible to obtain a resin film that is even more excellent in various physical properties such as tensile strength. The content of the blocked polyisocyanate can be calculated, for example, from the added amount, or can also be calculated by identification and quantification using a nuclear magnetic resonance (NMR) method and gas chromatography/mass spectrometry (GC/MS method).

<Other additives>

The resin composition of the present embodiment may further contain other additives.

Examples of these other additives include curing agents capable of reacting with a crosslinkable functional group in the polyvalent hydroxy compound, curing catalysts, solvents, pigments (such as extender pigments, color pigments and metallic pigments), ultraviolet absorbers, light stabilizers, radical stabilizers, anti-yellowing agents for suppressing coloration during a baking step, coating surface modifiers, flow modifiers, pigment dispersants, antifoaming agents, thickeners and film-forming aids.

Examples of the curing agent include melamine resins, urea resins, epoxy group-containing compounds or resins, carboxyl group-containing compounds or resins, acid anhydrides, alkoxysilane group-containing compounds or resins, and hydrazide compounds.

The curing catalyst may be a basic compound or a Lewis acid compound.

Examples of the basic compound include metal hydroxides, metal alkoxides, metal carboxylates, metal acetylacetonates, hydroxides of onium salts, onium carboxylates, halides of onium salts, metal salts of active methylene-based compounds, onium salts of active methylene-based compounds, aminosilanes, amines and phosphines. The onium salt is preferably an ammonium salt, a phosphonium salt or a sulfonium salt.

Examples of the Lewis acid compound include organic tin compounds, organic zinc compounds, organic titanium compounds and organic zirconium compounds.

Examples of the solvent include the same as those exemplified in the above-mentioned blocked polyisocyanate composition.

Further, as the pigments (such as extender pigments, color pigments and metallic pigments), ultraviolet absorbers, light stabilizers, radical stabilizers, anti-yellowing agents for suppressing coloration during a baking step, coating surface modifiers, flow modifiers, pigment dispersants, antifoaming agents, thickeners and film-forming aids, known agents can be appropriately selected and used.

<Method for producing resin composition>

The resin composition of the present embodiment can be used both as a solvent-based resin composition and as a water-based resin composition, but is preferably used as a water-based resin composition.

At this time, the above blocked polyisocyanate composition may be added to the polyvalent hydroxy compound as a main agent after mixing the components (X) and (Y) and, if necessary, other components such as a solvent in advance, or the components (X) and (Y) and, if necessary, other components such as a solvent may be respectively added to the polyvalent hydroxy compound as a main agent.

Among the above possibilities, it is preferable to add a mixture prepared by mixing the components (X) and (Y) and, if necessary, other components such as a solvent in advance to the polyvalent hydroxy compound serving as a main agent.

In the case of producing a water-based resin composition (aqueous resin composition), first, additives such as a curing agent capable of reacting with a crosslinkable functional group in the polyvalent hydroxy compound, a curing catalyst, a solvent, a pigment (such as an extender pigment, a color pigment and a metallic pigment), an ultraviolet absorber, a light stabilizer, a radical stabilizer, an anti-yellowing agent for suppressing coloration during a baking step, a coating surface modifier, a flow modifier, a pigment dispersant, an antifoaming agent, a thickener and a film-forming aid are added to the polyvalent hydroxy compound, or a water dispersion or aqueous solution thereof according to need. Then, the above blocked polyisocyanate composition or water dispersion thereof is added as a curing agent, and if necessary, water or a solvent is further added thereto to adjust the viscosity. Then, a water-based resin composition (aqueous resin composition) can be obtained by forcibly stirring with a stirrer.

In the case of producing a solvent-based resin composition, first, additives such as a curing agent capable of reacting with a crosslinkable functional group in the polyvalent hydroxy compound, a curing catalyst, a solvent, a pigment (such as an extender pigment, a color pigment and a metallic pigment), an ultraviolet absorber, a light stabilizer, a radical stabilizer, an anti-yellowing agent for suppressing coloration during a baking step, a coating surface modifier, a flow modifier, a pigment dispersant, an antifoaming agent, a thickener and a film-forming aid are added to the polyvalent hydroxy compound, or a solvent-dilution thereof according to need. Then, the above blocked polyisocyanate composition is added as a curing agent, and if necessary, a solvent is further added to adjust the viscosity. Then, a solvent-based resin composition can be obtained by stirring manually or by stirring using a stirring device such as a Mazelar or the like.

<<Resin film>>

A resin film of the present embodiment is obtained by curing the above resin composition. The resin film of the present embodiment is excellent in water resistance.

The resin film of the present embodiment can be obtained by coating the above resin composition on a base material using a known method such as roll coating, curtain flow coating, spray coating, bell coating and electrostatic coating, and curing by heating.

The heating temperature is preferably about 70°C or higher and about 120°C or lower, more preferably about 70°C or higher and about 110°C or lower, and still more preferably about 75°C or higher and about 100°C or lower from the viewpoint of energy saving and heat resistance of the base material.

The heating time is preferably about 1 minute or more and about 60 minutes or less, and more preferably about 2 minutes or more and about 40 minutes or less from the viewpoint of energy saving and heat resistance of the base material.

The base material is not particularly limited, and examples thereof include outer panels of automobile bodies such as passenger cars, trucks, motorcycles and buses; automobile parts such as bumpers and the like; outer panels of home electric appliances such as mobile phones and audio equipment, and various films, and among them, outer panels of automobile bodies or automobile parts are preferred.

The material of the base material is not particularly limited, and examples thereof include metal materials such as iron, aluminum, brass, copper, tinplate, stainless steel, galvanized steel and zinc alloy (such as Zn-Al, Zn-Ni and Zn-Fe) plated steel; resins such as polyethylene resins, polypropylene resins, acrylonitrile-butadiene-styrene (ABS) resins,

polyamide resins, acrylic resins, vinylidene chloride resins, polycarbonate resins, polyurethane resins and epoxy resins, and various plastic materials such as FRP and the like; inorganic materials such as glass, cement and concrete; wood; and fibrous materials such as paper and cloth, and among them, metal materials or plastic materials are preferred.

The base material may be a base material in which a surface treatment such as a phosphate treatment, a chromate treatment and a complex oxide treatment has been performed on a surface of the above-described metal material or a metal surface of a vehicle body or the like molded from the above-described metal material, and may also be a base material on which a coating film is further formed. The base material on which a coating film is formed may be a base material on which a surface treatment is performed as necessary, and an undercoat coating film is formed thereon, for example, a vehicle body on which an undercoat coating film formed with an electrodeposition paint. The base material may be a base material in which a desired surface treatment has been performed on a surface of the above-described plastic material or a plastic surface of an automobile part or the like molded from the above-described metal material. Further, the base material may be a base material obtained by combining a plastic material and a metal material.

Alternatively, the resin film of the present embodiment can also be produced by a production method including a step of adding water to a mixture of the above blocked polyisocyanate composition and a polyvalent hydroxy compound; and baking the resulting mixture at a temperature of 90°C or less after allowing it to stand within a temperature range of 10°C to 70°C for 1 to 240 hours.

By performing the above steps, the recoat adhesion improves.

Examples of the polyvalent hydroxy compound include the same as those exemplified in the above-mentioned resin composition.

Since the resin film of the present embodiment is excellent in low-temperature curability, it is suitably used as a coating film for products in various fields where energy saving is required and for materials with low heat resistance.

## <<Laminate>>

A laminate of the present embodiment is obtained by laminating one or more layers of the above-described resin film on a base material.

The thickness of each layer of the resin film is 1 μm or more and 50 μm or less.

The laminate of the present embodiment may include two or more layers of the above-described resin films having the same composition, or may include two or more layers of the above-described resin films having different compositions.

Further, examples of the base material include the same as those exemplified in the above section entitled "resin film".

The laminate of the present embodiment can be obtained by coating each of the above resin compositions on a base material using a known method such as roll coating, curtain flow coating, spray coating, bell coating and electrostatic coating, and curing by heating; or by heating and curing all the layers together after coating.

In addition to the above-described base material and the above-described resin film, the laminate of the present embodiment can include, for example, other layers composed of known components, such as a primer layer, an adhesive layer, and a decorative layer.

## EXAMPLES

Hereinafter, the present embodiment will be described in more detail based on Examples and Comparative Examples, but the present embodiment is in no way limited by the following Examples.

## <<First test>>

### <Test items>

With respect to the polyisocyanates and blocked polyisocyanate compounds obtained in Synthesis Examples and the blocked polyisocyanate compositions obtained in Examples and Comparative Examples, physical properties were measured and evaluations were conducted according to the methods described below.

### [Physical property A]

#### (Isocyanate group (NCO) content)

In order to measure the NCO content of polyisocyanate, a polyisocyanate before being blocked with a blocking

agent was used as a measurement sample.

First, 2 g or more and 3 g or less of a measurement sample was accurately weighed in a flask (W g). Then, 20 mL of toluene was added thereto to dissolve the measurement sample. Then, 20 mL of a 2N toluene solution of di-n-butylamine was added thereto, and after mixing, the resulting mixture was allowed to stand at room temperature for 15 minutes. Then, 70 mL of isopropyl alcohol was added thereto and mixed. Then, this solution was titrated with a 1N hydrochloric acid solution (factor F) in the presence of an indicator. The obtained titration value was taken as V2 mL. Then, the titration value obtained without the polyisocyanate sample was taken as V1 ml. Then, the isocyanate group (NCO) content (% by mass) of the polyisocyanate was calculated from the following formula.

$$\text{Isocyanate group (NCO) content (\% by mass)} = (V1 - V2) \times F \times 42/(W \times 1{,}000) \times 100$$

[Physical property B]

(Number average molecular weight and weight average molecular weight)

The number average molecular weight and weight average molecular weight are the number average molecular weight and weight average molecular weight measured by gel permeation chromatography (GPC) with reference to polystyrene standards using the following apparatus.

In order to measure the number average molecular weight of polyisocyanate, a polyisocyanate before being blocked with a blocking agent was used as a measurement sample.

For the number average molecular weight of a blocked polyisocyanate compound and the weight average molecular weight of a polyvalent hydroxy compound, the blocked polyisocyanate compound or the polyvalent hydroxy compound was used as it was as a measurement sample. Measurement conditions are shown below.

(Measurement conditions)

| | |
|---|---|
| Apparatus: | HLC-802A, manufactured by Tosoh Corporation |
| Column: | G1000HXI, × 1,<br>G2000HXL × 1,<br>G3000HXI, × 1, manufactured by Tosoh Corporation |
| Carrier: | tetrahydrofuran |
| Detection method: | differential refractometer |

[Physical property C]

(Modification rate of hydrophilic compound and composition ratio of hydrophilic group)

A modification rate of a hydrophilic compound in each blocked polyisocyanate compound and a composition ratio of hydrophilic groups in an aqueous resin composition were calculated by the following method, assuming that all the hydrophilic compounds used reacted with isocyanate groups of the polyisocyanate.

That is, the modification rate of the hydrophilic compound was calculated as a ratio of the molar amount of a nonionic hydrophilic compound with respect to the molar amount of the isocyanate groups of the raw material polyisocyanate in percentage (mol%).

The composition ratio of a hydrophilic group was calculated as a ratio of the mass of the hydrophilic group with respect to the total mass of the solid content of the obtained aqueous resin composition in percentage (% by mass).

[Physical property D]

(Determination of molar ratio of urethane bond/urea bond in coating film, and determination of molar ratio of imidazole component)

The obtained resin film was packed into a disposable insert for swelling measurement, and deuterated chloroform containing TMS was added dropwise as a swelling solvent to obtain a measurement sample.
Using the obtained measurement sample, quantification was carried out according to the following quantitative method.

(Measurement conditions)

Method: solid-state NMR
Apparatus: "Avance 500" (product name), manufactured by Bruker Corporation
Solvent: deuterated chloroform
Number of integrations: 10,000 times
Sample concentration: 50 wt/vol%
Chemical shift reference: the deuterated chloroform peak was set to 77.0 ppm by mass.

(Quantitative method)

Urethane bond: quantified at a peak height of 156.4 ppm
Urea bond: quantified at a peak height of 159.1 ppm
Imidazole component: quantified at a peak height of 150.5 to 151.5 ppm

In the resin film, when a ratio of urethane bonds was defined as a, a ratio of urea bonds was defined as b and a ratio of imidazole components was defined as c, a molar ratio of urethane bond/urea bond was calculated by the formula: a/b, and a molar ratio of imidazole components was calculated by the formula: c/(a + b + c).

[Physical property 1]

(Non-volatile content of blocked polyisocyanate compound)

The non-volatile content of the blocked polyisocyanate compound was determined as follows.
First, an aluminum dish having a bottom diameter of 38 mm was accurately weighed. Then, about 1 g of the blocked polyisocyanate compound produced in each of the Examples and Comparative Examples was placed on the aluminum dish and accurately weighed (W1). Next, the blocked polyisocyanate compound was adjusted to have a uniform thickness. Then, the blocked polyisocyanate compound placed on the aluminum dish was kept in an oven at 105°C for 1 hour. Then, after the aluminum dish reached room temperature, the blocked polyisocyanate compound remaining in the aluminum dish was accurately weighed (W2). Then, the non-volatile content (% by mass) of the blocked polyisocyanate compound was calculated from the following formula.

$$\text{Non-volatile content (\% by mass) of blocked polyisocyanate compound} = W2/W1 \times 100$$

[Physical property 2]

(Effective NCO content)

Further, an effective NCO content of the blocked polyisocyanate compound was calculated by the following formula.

$$\text{Effective NCO content [\% by mass]} = \{100 \times (\text{mass of isocyanate groups in solid content of polyisocyanate used in blocking reaction})\}/(\text{mass of blocked polyisocyanate compound after blocking reaction})$$

[Physical property 3]

(Average number of isocyanate groups)

The average number of isocyanate groups (average number of NCOs) of polyisocyanate and blocked polyisocyanate compound was obtained by the following formula. It should be noted that in the formula, "Mn" denotes the number average molecular weight of the polyisocyanate or blocked polyisocyanate compound, and the values measured in the above section entitled "Physical property B" were used for both cases. "NCO content" denotes the isocyanate group content of the polyisocyanate measured before being blocked with a blocking agent, and the value calculated in the above section entitled "Physical property A" was used. For the "effective NCO content", the value calculated in the above section entitled [Physical property 2] was used.

$$\text{Average number of isocyanate groups of polyisocyanate} = (\text{Mn} \times \text{NCO content} \times 0.01)/42$$

$$\text{Average number of isocyanate groups of blocked polyisocyanate compound} = (\text{Mn} \times \text{effective NCO content} \times 0.01)/42$$

[Production of water-based resin composition]

A water-based acrylic polyol main agent ("Setaqua (registered trademark) 6522" (product name), manufactured by Nuplex Industries Ltd., OH (% by mass) (on solids) = 2.4, Acid value (mgKOH/g) = 20, solid content: 42% by mass), and each blocked polyisocyanate compound were blended so that a ratio of the molar amount of isocyanate groups with respect to the molar amount of hydroxyl groups (isocyanate group/hydroxyl group) was 1.0. Furthermore, ion-exchanged water was blended and a small amount of triethylamine was added to adjust the pH to about 8.0 or more and 8.5 or less and the solid content to 35% by mass. Then, the solution was stirred at 1,000 rpm for 15 minutes using a homodisper, and after defoaming, a water-based resin composition was obtained.

[Evaluation 1]

(Appearance of coating film)

The resin composition obtained in the above section entitled "production of water-based resin composition" was coated immediately after production on a glass plate so as to achieve a dry film thickness of 40 μm, and then dried by heating at 85°C for 30 minutes to obtain a resin film.

The appearance of the obtained coating film was observed and judged in accordance with the following evaluation criteria.

(Evaluation criteria)

A: Cloudiness (blushing) of coating film is not observed

B: Coating film is cloudy overall
C: Cracks and cissing are observed.

[Evaluation 2]

(Low-temperature curability)

The resin composition obtained in the above section entitled "production of water-based resin composition" was coated immediately after production on a polypropylene (PP) plate so as to achieve a dry film thickness of 40 μm, and then dried by heating at 85°C for 30 minutes to obtain a resin film. A percentage value (% by mass) obtained by dividing the mass of an undissolved portion when immersing the obtained resin film in acetone at 23°C for 24 hours with the mass before immersion was determined as a gel fraction. Using the calculated gel fraction, the low-temperature curability was evaluated in accordance with the following evaluation criteria.

(Evaluation criteria)

A: Gel fraction is 85% by mass or more
B: Gel fraction is 80% by mass or more and less than 85% by mass
C: Gel fraction is 75% by mass or more and less than 80% by mass
D: Gel fraction is 70% by mass or more and less than 75% by mass
E: Gel fraction is less than 70% by mass

[Evaluation 3]

(Water resistance)

The resin composition obtained in the above section entitled "production of water-based resin composition" was coated immediately after production on a glass plate so as to achieve a dry film thickness of 40 μm, and then dried by heating at 85°C for 30 minutes to obtain a resin film.
The obtained coating film was immersed in deionized water at 30°C for 24 hours, the surface of the coating film after being taken out was lightly wiped off with a paper towel, and then the state of the coating film was confirmed and judged by the following evaluation criteria.

(Evaluation criteria)

A: No difference is observed between the immersed portion and the non-immersed portion.
B: Only small paint coat particles are observed in a part of the immersed portion.
C: Paint coat particles are observed in the entire immersed portion.
D: Swelling and partial detachment of the coating film are observed.

[Evaluation 4]

(Recoat adhesion)

The resin composition obtained in the above section entitled "production of water-based resin composition" was coated immediately after production on a glass plate so as to achieve a dry film thickness of 40 μm, and then dried by heating at 85°C for 30 minutes to obtain a resin film.
Thereafter, the resin composition was again coated so as to achieve a dry film thickness of 40 μm, and then dried by heating at 85°C for 30 minutes to obtain a multilayer resin film. After that, according to the cross-cut adhesion test method specified in JIS K5600, the recoat adhesion was judged in accordance with the following evaluation criteria.

(Evaluation criteria)

A: Detachment is not observed in any of the 25 squares.
B: Partial edge loss or detachment of less than 5 squares is observed.
C: Detachment of 5 or more squares is observed.

<Synthesis of polyisocyanate>

[Synthesis Example 1-1]

(Synthesis of polyisocyanate P-1)

A four-necked flask equipped with a thermometer, a stirring blade and a reflux condenser was charged with 100 parts by mass of HDI under a nitrogen stream, the temperature inside the reactor was held at 60°C under stirring, 0.095 parts by mass of trimethylbenzylammonium hydroxide was added thereto, and after 4.5 hours, when the conversion reached 40% by mass, 0.02 parts by mass of phosphoric acid was added thereto to stop the reaction. After filtering the reaction solution, the unreacted HDI was removed using a thin film evaporator to obtain an isocyanurate-type polyisocyanate (hereinafter sometimes referred to as "polyisocyanate P-1").

The obtained polyisocyanate P-1 had an NCO content of 22.0% by mass, a number average molecular weight of 655, and an average number of isocyanate groups of 3.4. Further, the obtained polyisocyanate P-1 was subjected to $^1$H-NMR analysis to confirm the presence of isocyanurate groups.

[Synthesis Example 1-2]

(Synthesis of polyisocyanate P-2)

A four-necked flask equipped with a thermometer, a stirring blade and a reflux condenser was charged with 100 parts by mass of HDI and 5.3 parts by mass of a polyester polyol (polycaprolactone triol) ("Placcel 303" (product name), manufactured by Daicel Corporation, average number of functional groups: 3, number average molecular weight: 300) derived from a trihydric alcohol and ε-caprolactone under a nitrogen stream, and the temperature inside the reactor was held at 89°C for 1 hour under stirring to carry out a urethane-forming reaction. After that, the temperature inside the reactor was held at 63°C, tetramethylammonium caprate as an isocyanurate-forming catalyst was added thereto, and when the yield reached 52% by mass, phosphoric acid was added thereto to stop the reaction. After filtering the reaction solution, the unreacted HDI was removed using a thin film evaporator to obtain an isocyanurate-type polyisocyanate (hereinafter sometimes referred to as "polyisocyanate P-2").

The obtained polyisocyanate P-2 had an NCO content of 18.6% by mass, a number average molecular weight of 1,220, and an average number of isocyanate groups of 5.4. Further, the obtained polyisocyanate P-2 was subjected to $^1$H-NMR analysis to confirm the presence of isocyanurate groups.

<Production of blocked polyisocyanate compound (A)>

[Synthesis Example 2-1]

(Production of blocked polyisocyanate compound A-1)

In a four-necked flask equipped with a thermometer, a stirring blade and a reflux condenser, 100 parts by mass of the polyisocyanate P-1 obtained in Synthesis Example 1-1, 0.01 parts by mass of 2-ethylhexyl acid phosphate ("JP-508T" (product name) manufactured by Johoku Chemical Co., Ltd.) and 25.1 parts by mass of methoxypolyethylene glycol (M400, manufactured by NOF Corporation, number average molecular weight: 400) (amount so as to be 12 mol% with respect to 100 mol% of the isocyanate group of the polyisocyanate P-1) were mixed and reacted at 120°C for 3 hours under a nitrogen stream. The reaction solution was cooled to 60°C, 72.6 parts of dipropylene glycol dimethyl ether (DPDM) and 2-ethylimidazole were charged so as to be 88 mol% with respect to 100 mol% of the isocyanate groups of the polyisocyanate P-1, and the external bath was adjusted so that the solution temperature was 60°C to carry out a blocking reaction at 60°C for 90 minutes. After confirming the disappearance of the peak of the isocyanate group by infrared spectroscopy (IR), a blocked polyisocyanate compound A-1 was obtained. Physical properties 1 to 3 were calculated using the obtained blocked polyisocyanate compound A-1, and the results were shown in Table 2.

[Synthesis Examples 2-2 to 2-11]

(Production of blocked polyisocyanate compounds A-2 to A-11)

Blocked polyisocyanate compounds A-2 to A-11 were obtained in the same manner as in Synthesis Example 2-1 except for the items listed in Table 1. Physical properties 1 to 3 were calculated using the obtained blocked polyisocyanate compounds A-2 to A-11, and the results were shown in Table 2.

[Synthesis Example 2-13]

(Production of blocked polyisocyanate compound E-1)

In a four-necked flask equipped with a thermometer, a stirring blade and a reflux condenser, 100 parts by mass of the polyisocyanate P-2 obtained in Synthesis Example 1-2, 13 parts by mass of dipropylene glycol dimethyl ether (DPDM), 0.01 parts by mass of 2-ethylhexyl acid phosphate ("JP-508T" (product name) manufactured by Johoku Chemical Co., Ltd.) and 15 parts by mass of methoxypolyethylene glycol (MPG081, manufactured by Nippon Nyukazai Co., Ltd., number average molecular weight: 690) (amount so as to be 5 mol% with respect to 100 mol% of the isocyanate group of the polyisocyanate P-2) were mixed and reacted at 120°C for 3 hours under a nitrogen stream.

The reaction solution was cooled to 60°C, 81.8 parts by mass of diisopropyl malonate were charged (amount so as to be 97 mol% with respect to 100 mol% of the isocyanate groups of the polyisocyanate P-2), and dipropylene glycol dimethyl ether (DPDM) was further added thereto to adjust the solid content to 60% by mass. Next, while stirring, 1.3 parts by mass of sodium methylate-containing methanol solution (28% by mass with respect to the total mass of the solution) was added dropwise, and then the external bath was adjusted so that the solution temperature was 55°C to carry out a blocking reaction at 55°C for 5 hours, thereby obtaining a blocked polyisocyanate compound E-1 having a non-volatile component of 60% by mass, an effective NCO content of 5.5% by mass and an average number of isocyanate groups of 5.0.

[Synthesis Example 2-14]

(Production of blocked polyisocyanate compound E-2)

In a four-necked flask equipped with a thermometer, a stirring blade and a reflux condenser, 100 parts by mass of the polyisocyanate P-2 obtained in Synthesis Example 1-2, 13 parts by mass of dipropylene glycol dimethyl ether (DPDM), 0.01 parts by mass of 2-ethylhexyl acid phosphate ("JP-508T" (product name) manufactured by Johoku Chemical Co., Ltd.) and 15 parts by mass of methoxypolyethylene glycol (MPG081, manufactured by Nippon Nyukazai Co., Ltd., number average molecular weight: 690) (amount so as to be 5 mol% with respect to 100 mol% of the isocyanate group of the polyisocyanate P-2) were mixed and reacted at 120°C for 3 hours under a nitrogen stream.

The reaction solution was cooled to 60°C, 81.8 parts by mass of diisopropyl malonate were charged (amount so as to be 97 mol% with respect to 100 mol% of the isocyanate groups of the polyisocyanate P-2), and dipropylene glycol dimethyl ether (DPDM) was further added thereto to adjust the solid content to 60% by mass. Next, while stirring, 1.3 parts by mass of sodium methylate-containing methanol solution (28% by mass with respect to the total mass of the solution) was added dropwise, and then the external bath was adjusted so that the solution temperature was 55°C to carry out a blocking reaction at 55°C for 5 hours, thereby obtaining a blocked polyisocyanate compound intermediate having a solid content of 60% by mass. After that, 38 parts by mass of 2-methyl-2-butanol (100 mol% with respect to the blocked isocyanate group) was added to carry out a reaction at 80°C for 3 hours while removing the generated isopropyl alcohol by distillation under normal pressure. Thereafter, isopropanol and 2-methyl-2-butanol were further distilled off at 60°C under reduced pressure (50 kPa), and finally dipropylene glycol dimethyl ether (DPDM) was added thereto to obtain a blocked polyisocyanate compound E-2 having a non-volatile component of 60% by mass, an effective NCO content of 5.0% by mass and an average number of isocyanate groups of 5.0.

<Production of water-based resin composition>

[Example 1]

(Production of water-based resin composition Sa-1)

A water-based acrylic polyol main agent ("Setaqua (registered trademark) 6522" (product name), manufactured by Nuplex Industries Ltd., OH (% by mass) (on solids) = 2.4, Acid value (mgKOH/g) = 20, solid content: 42% by mass)

and the blocked polyisocyanate compound A-1 were blended so that a ratio of the molar amount of isocyanate groups with respect to the molar amount of hydroxyl groups (isocyanate group/hydroxyl group) was 1.0. Furthermore, ion-exchanged water was blended and a small amount of triethylamine was added to adjust the pH to about 8.0 or more and 8.5 or less and the solid content to 35% by mass. Then, the solution was stirred at 1,000 rpm for 15 minutes using a homodisper, and after defoaming, a water-based resin composition was obtained. After that, it was left to stand at 40°C for 24 hours to obtain a water-based resin composition Sa-1. Evaluations 1 to 4 were performed using the water-based resin composition Sa-1, and the evaluation results were shown in Table 3.

[Examples 2 to 10, Comparative Examples 1 to 4]

(Production of water-based resin compositions Sa-2 to Sa-10 and Sb-1 to Sb-4)

Water-based resin compositions Sa-2 to Sa-10 and Sb-1 to Sb-4 were obtained in the same manner as in Example 1 except for the items listed in Table 3. Evaluations 1 to 4 were performed using the water-based resin compositions Sa-2 to Sa-10 and Sb-1 to Sb-3, and the evaluation results were shown in Table 3. It should be noted that the water-based resin composition Sb-4 was not evaluated because the aqueous resin composition gelled as a result of being left to stand at 40°C for 24 hours.

[Example 11]

(Production of water-based resin composition Sa-11)

The blocked polyisocyanate compound A-8 and the blocked polyisocyanate compound E-1 were stirred at 1,000 rpm for 5 minutes with a disper blade so that the mass ratio of the resin components was 20/80 to obtain a mixture.

The above mixture was blended to a water-based acrylic polyol main agent ("Setaqua (registered trademark) 6522", manufactured by Nuplex Industries Ltd.), so that a ratio of the molar amount of isocyanate groups with respect to the molar amount of hydroxyl groups (isocyanate group/hydroxyl group) was 1.0. Furthermore, ion-exchanged water was blended and a small amount of triethylamine was added to adjust the pH to about 8.0 or more and 8.5 or less and the solid content to 35% by mass. Then, the solution was stirred at 1,000 rpm for 15 minutes using a homodisper, and after defoaming, a water-based resin composition was obtained. After that, it was left to stand at 40°C for 24 hours to obtain a water-based resin composition Sa-11.
Evaluations 1 to 4 were performed using the water-based resin composition Sa-11, and the evaluation results were shown in Table 5.

[Examples 12 to 14]

Water-based resin compositions Sa-12 to Sa-14 were obtained in the same manner as in Example 11 except for the items listed in Table 4. Evaluations 1 to 4 were performed using the water-based resin compositions Sa-12 to Sa-14, and the evaluation results were shown in Table 5.

[Table 1]

| | Blocked polyisocyanate compound | Polyisocyanate | | Hydrophilic compound | | | Imidazole-based blocking agent | | | Other blocking agents | | | Solvent | |
|---|---|---|---|---|---|---|---|---|---|---|---|---|---|---|
| | | Compound | Charged amount (parts by mass) | Compound | Modification rate (%) | Charged amount (parts by mass) | Compound | Blocking rate (%) | Charged amount (parts by mass) | Compound | Blocking rate (%) | Charged amount (parts by mass) | Compound | Charged amount (parts by mass) |
| Synthesis Example 2-1 | A-1 | P-1 | 100 | M400 | 12 | 25.1 | 2EZ | 88.0 | 44.3 | - | - | - | DPDM | 72.6 |
| Synthesis Example 2-2 | A-2 | P-1 | 100 | MPG081 | 12 | 43.4 | 2EZ | 88.0 | 44.3 | - | - | - | DPDM | 80.4 |
| Synthesis Example 2-3 | A-3 | P-1 | 100 | M1,000 | 12 | 62.9 | 2EZ | 88.0 | 44.3 | - | - | - | DPDM | 88.8 |
| Synthesis Example 2-4 | A-4 | P-1 | 100 | MPG081 | 6 | 21.7 | 2EZ | 94.0 | 47.3 | - | - | - | DPDM | 72.4 |
| Synthesis Example 2-5 | A-5 | P-1 | 100 | MPG081 | 20 | 72.3 | 2EZ | 80.0 | 40.2 | - | - | - | DPDM | 91.1 |
| Synthesis Example 2-6 | A-6 | P-1 | 100 | MPG081 | 12 | 43.4 | 4MZ | 88.0 | 37.8 | - | - | - | DPDM | 77.6 |
| Synthesis Example 2-7 | A-7 | P-1 | 100 | MPG081 | 12 | 43.4 | 2EZ | 88.0 | 44.3 | 3,5DMP | 18.0 | 9.1 | DPDM | 84.3 |
| Synthesis Example 2-8 | A-8 | P-2 | 100 | MPG081 | 12 | 36.7 | 2EZ | 88.0 | 37.4 | - | - | - | DPDM | 74.6 |
| Synthesis Example 2-9 | A-9 | P-2 | 100 | MPG081 | 12 | 36.7 | 4MZ | 88.0 | 32.0 | - | - | - | DPDM | 72.3 |

(continued)

| | Blocked polyisocyanate compound | Polyisocyanate | | Hydrophilic compound | | | Imidazole-based blocking agent | | | Other blocking agents | | | Solvent | |
|---|---|---|---|---|---|---|---|---|---|---|---|---|---|---|
| | | Compound | Charged amount (parts by mass) | Compound | Modification rate (%) | Charged amount (parts by mass) | Compound | Blocking rate (%) | Charged amount (parts by mass) | Compound | Blocking rate (%) | Charged amount (parts by mass) | Compound | Charged amount (parts by mass) |
| Synthesis Example 2-10 | A-10 | P-1 | 100 | MPG081 | 12 | 43.4 | - | - | - | 3,5DMP | 88.0 | 44.3 | DPDM | 80.4 |
| Synthesis Example 2-11 | A-11 | P-1 | 100 | MPG081 | 12 | 43.4 | - | - | - | - | - | - | DPDM | 61.5 |

Hydrophilic compound

- M400: methoxy polyethylene glycol (number average molecular weight: 400, manufactured by NOF Corporation)
- MPG081: methoxy polyethylene glycol (number average molecular weight: 690, manufactured by Nippon Nyukazai Co., Ltd.)
- M1,000: methoxy polyethylene glycol (number average molecular weight: 1,000, manufactured by NOF Corporation)

Blocking agent

- 2EZ: 2-ethylimidazole
- 4MZ: 4-methylimidazole
- 3,5DMP: 3,5-dimethylpyrazole

Solvent

- DPDM: dipropylene glycol dimethyl ether

[Table 2]

| | Blocked polyisocyanate compound | Physical properties of blocked polyisocyanate compound | | |
|---|---|---|---|---|
| | | [Physical property 1] Non-volatile content [% by mass] | [Physical property 2] Effective NCO content [% by mass] | [Physical property 3] Average number of isocyanate groups |
| Synthesis Example 2-1 | A-1 | 70.0 | 8.0 | 3.0 |
| Synthesis Example 2-2 | A-2 | 70.0 | 7.2 | 3.0 |
| Synthesis Example 2-3 | A-3 | 70.0 | 6.5 | 3.0 |
| Synthesis Example 2-4 | A-4 | 70.0 | 8.6 | 3.2 |
| Synthesis Example 2-5 | A-5 | 70.0 | 5.8 | 2.7 |
| Synthesis Example 2-6 | A-6 | 70.0 | 7.5 | 3.0 |
| Synthesis Example 2-7 | A-7 | 70.0 | 6.9 | 3.0 |
| Synthesis Example 2-8 | A-8 | 70.0 | 6.6 | 4.8 |
| Synthesis Example 2-9 | A-9 | 70.0 | 6.8 | 4.8 |
| Synthesis Example 2-10 | A-10 | 70.0 | 7.2 | 3.0 |
| Synthesis Example 2-11 | A-11 | 70.0 | 9.5 | 3.0 |

[Table 3]

| | Water-based resin composition | Polyhydric hydroxy compound Acrylic polyol | | Blocked polyisocyanate compound | | Hydrophilic group component | Pretreatment | Urethane bond /urea bond | c/(a+b + c) | Evaluation | | | |
|---|---|---|---|---|---|---|---|---|---|---|---|---|---|
| | Compound | Compound | Charged amount [parts by mass] | Compound | Charged amount [parts by mass] | % by mass | Treatment at 40°C [hours] | Molar ratio | Mol% | [Evaluation 1] Coating ilm appearance | [Evaluation 2] Low-temperature curability | [Evaluation 3] Water resistance | [Evaluation 4] Recoat adhesion |
| Example 1 | Sa-1 | Setaqua 6522 | 100 | A-1 | 31.1 | 5.1 | 24 | 60/40 | 2 | B | C | B | A |
| Example 2 | Sa-2 | Setaqua 6522 | 100 | A-2 | 34.6 | 8.5 | 24 | 55/45 | 9 | A | C | B | A |
| Example 3 | Sa-3 | Setaqua 6522 | 100 | A-2 | 34.6 | 8.5 | 8 | 75/25 | 4 | A | C | B | B |
| Example 4 | Sa-4 | Setaqua 6522 | 100 | A-3 | 38.3 | 11.8 | 24 | 50/50 | 2 | A | C | C | B |
| Example 5 | Sa-5 | Setaqua 6522 | 100 | A-4 | 29.0 | 4.2 | 24 | 65/35 | 9 | B | C | B | A |
| Example 6 | Sa-6 | Setaqua 6522 | 100 | A-5 | 42.9 | 14.2 | 24 | 50/50 | 2 | A | C | C | B |
| Example 7 | Sa-7 | Setaqua 6522 | 100 | A-6 | 33.2. | 8.6 | 24 | 65/35 | 2 | A | D | C | B |
| Example 8 | Sa-8 | Setaqua 6522 | 100 | A-7 | 36.1 | 8.3 | 24 | 55/45 | 2 | A | C | B | A |
| Example 9 | Sa-9 | Setaqua 6522 | 100 | A-8 | 37.7 | 8.1 | 24 | 55/45 | 2 | A | B | A | A |
| Example 10 | Sa-10 | Setaqua 6522 | 100 | A-9 | 36.6 | 8.2 | 24 | 65/35 | 2 | A | D | B | A |
| Comparative Example 1 | Sb-1 | Setaqua 6522 | 100 | A-2 | 34.6 | 8.5 | 0.5 | 97/3 | 8 | A | C | B | C |
| Comparative Example 2 | Sb-2 | Setaqua 6522 | 100 | A-2 | 34.6 | 8.5 | 360 | 25/75 | 1 | C | D | B | A |

(continued)

| | Water-based resin composition | Polyhydric hydroxy compound Acrylic polyol | | Blocked polyisocyanate compound | | Hydrophilic group component | Pretreatment | Urethane bond /urea bond | c/(a + b + c) | Evaluation | | | |
|---|---|---|---|---|---|---|---|---|---|---|---|---|---|
| | Compound | Compound | Charged amount [parts by mass] | Compound | Charged amount [parts by mass] | % by mass | Treatment at 40°C [hours] | Molar ratio | Mol% | [Evaluation 1] Coating ilm appearance | [Evaluation 2] Low-temperature curability | [Evaluation 3] Water resistance | [Evaluation 4] Recoat adhesion |
| Comparative Example 3 | Sb-3 | Setaqua 6522 | 100 | A-10 | 34.6 | 8.5 | 24 | 99/1 | 0 | A | E | D | C |
| Comparative Example 4 | Sb-4 | Setaqua 6522 | 100 | A-11 | 26.2 | 9.2 | 24 | 55/45 | 0 | Impossible to evaluate | Impossibleto evaluate | Impossible to evaluate | Impossible to evaluate |

[Table 4]

| | Water-based resin composition | Polyhydric hydroxy comound Acrylic polyol | | Blocked polyisocyanate compound A | | Hydrophilic group in compound A | Blocked polyisocyanate compound E | | Hydrophilic group in compound E | Hydrophilic group | A/E |
|---|---|---|---|---|---|---|---|---|---|---|---|
| | Compound | Compound | Charged amount [parts by mass] | Compound | Charged amount [parts by mass] | % by mass | Compound | Charged amount [parts by mass] | % by mass | % by mass | Mass ratio |
| Example 11 | Sa-11 | Setaqua 6522 | 100 | A-8 | 7.5 | 23.9% | E-1 | 35.0 | 7.7% | 4.7% | 20/80 |
| Example 12 | Sa-12 | Setaqua 6522 | 100 | A-8 | 30.0 | 23.9% | E-2 | 8.8 | 7.0% | 7.4% | 80/20 |
| Example 13 | Sa-13 | Setaqua 6522 | 100 | A-8 | 19.5 | 23.9% | E-2 | 23.3 | 7.0% | 6.1% | 50/50 |
| Example 14 | Sa-14 | Setaqua 6522 | 100 | A-8 | 8.0 | 23.9% | E-2 | 37.3 | 7.0% | 4.7% | 20/80 |

[Table 5]

| | Pretreatment | Urethane bond /urea bond | c/(a + b + c) | Evaluation | | | |
|---|---|---|---|---|---|---|---|
| | Treatment at 40°C [hours] | Molar ratio | Mol% | [Evaluation 1] Coating film appearance | [Evaluation 2] Low-temperature curability | [Evaluation 3] Water resistance | [Evaluation 4] Recoat adhesion |
| Example 11 | 24 | 55/45 | 2 | A | C | A | A |
| Example 12 | 24 | 55/45 | 2 | A | B | A | A |
| Example 13 | 24 | 55/45 | 2 | A | B | A | A |
| Example 14 | 24 | 55/45 | 2 | A | A | A | A |

<<Second test>>

<Test items>

With respect to the polyisocyanates and blocked polyisocyanate components obtained in Synthesis Examples and the blocked polyisocyanate compositions obtained in Examples and Comparative Examples, physical properties were measured and evaluations were conducted according to the methods described below.

[Physical property 2-1]

(Isocyanate group (NCO) content)

In order to measure the NCO content of polyisocyanate, a polyisocyanate before being blocked with a blocking agent was used as a measurement sample.

First, 2 g or more and 3 g or less of a measurement sample was accurately weighed in a flask (W g). Then, 20 mL of toluene was added thereto to dissolve the measurement sample. Then, 20 mL of a 2N toluene solution of di-n-butylamine was added thereto, and after mixing, the resulting mixture was allowed to stand at room temperature for 15 minutes. Then, 70 mL of isopropyl alcohol was added thereto and mixed. Then, this solution was titrated with a 1N hydrochloric acid solution (factor F) in the presence of an indicator. The obtained titration value was taken as V2 mL. Then, the titration value obtained without the polyisocyanate sample was taken as V1 ml. Then, the isocyanate group (NCO) content (% by mass) of the polyisocyanate was calculated from the following formula.

$$\text{Isocyanate group (NCO) content (\% by mass)} = (V1 - V2) \times F \times 42/(W \times 1{,}000) \times 100$$

Further, an effective NCO content of the blocked polyisocyanate composition was calculated by the following formula.

$$\text{Effective NCO content [\% by mass]} = \{100 \times (\text{mass of isocyanate groups in solid content of polyisocyanate used in blocking reaction})\}/(\text{mass of blocked polyisocyanate composition after blocking reaction})$$

[Physical property 2-2]

(Number average molecular weight and weight average molecular weight)

The number average molecular weight and weight average molecular weight are the number average molecular weight and weight average molecular weight measured by gel permeation chromatography (GPC) with reference to polystyrene standards using the following apparatus.

In order to measure the number average molecular weight of polyisocyanate, a polyisocyanate before being blocked with a blocking agent was used as a measurement sample.

In order to measure the number average molecular weight of the blocked polyisocyanate component, a polyisocyanate after being blocked with a blocking agent was used as a measurement sample.

For the weight average molecular weight, the blocked polyisocyanate component, the blocked polyisocyanate composition or the polyvalent hydroxy compound was used as it was as a measurement sample. Measurement conditions are shown below.

(Measurement conditions)

| | |
|---|---|
| Apparatus: | HLC-802A, manufactured by Tosoh Corporation |
| Column: | G1000HXl, × 1,<br>G2000HXL × 1,<br>G3000HXl, × 1, manufactured by Tosoh Corporation |
| Carrier: | tetrahydrofuran |
| Detection method: | differential refractometer |

[Physical property 2-3]

(Average number of isocyanate groups)

The average number of isocyanate groups (average number of NCOs) of polyisocyanate and blocked polyisocyanate compound was obtained by the following formula. It should be noted that in the formula, "Mn" denotes the number average molecular weight of the polyisocyanate and "Mw" denotes the weight average molecular weight of the blocked polyisocyanate component (X) or the blocked polyisocyanate component (B), and the values measured in the above section entitled "Physical property 2-2" were used for both cases. "NCO content" denotes the isocyanate group content of the polyisocyanate measured before being blocked with a blocking agent, and the value calculated in the above section entitled "Physical property 2-1" was used. For the "effective NCO content", the value calculated in the above section entitled [Physical property 2-1] was used.

$$\text{Average number of isocyanate groups of polyisocyanate} = (\text{Mn} \times \text{NCO content} \times 0.01)/42$$

$$\text{Average number of isocyanate groups of blocked polyisocyanate component} = (\text{Mn} \times \text{effective NCO content} \times 0.01)/42$$

[Physical property 2-4]

(Solid content of blocked polyisocyanate component or composition)

A solid content of the blocked polyisocyanate component or composition was determined in the following manner.

First, an aluminum dish having a bottom diameter of 38 mm was accurately weighed. Then, about 1 g of the blocked polyisocyanate composition produced in each of the Examples and Comparative Examples was placed on the aluminum dish and accurately weighed (W1). Next, the blocked polyisocyanate composition was adjusted to have a uniform thickness. Then, the blocked polyisocyanate composition placed on the aluminum dish was kept in an oven at 105°C for 1 hour. Then, after the aluminum dish reached room temperature, the blocked polyisocyanate composition remaining in the aluminum dish was accurately weighed (W2). Then, the solid content (% by mass) of the blocked polyisocyanate composition was calculated from the following formula.

$$\text{Solid content (\% by mass) of the blocked polyisocyanate composition} = \text{W2/W1} \times 100$$

[Physical property 2-5]

(Amount of modification and composition ratio of nonionic hydrophilic group)

An amount of modification and composition ratio of nonionic hydrophilic groups in each blocked polyisocyanate component and blocked polyisocyanate composition were calculated by the following method, assuming that all the nonionic hydrophilic compounds used reacted with the isocyanate groups of the polyisocyanate.

That is, the amount of modification of the nonionic hydrophilic group was calculated as a ratio of the molar amount of a nonionic hydrophilic compound with respect to the molar amount of the isocyanate groups of the raw material polyisocyanate in percentage (mol%).

The composition ratio of a nonionic hydrophilic group was calculated as a ratio of the mass of the nonionic hydrophilic compound with respect to the total mass of the solid content of the obtained blocked polyisocyanate component or blocked polyisocyanate composition in percentage (% by mass).

[Physical property 2-6]

(Determination of structure (IV-1) ratio and structure (V)/structure (IV) molar ratio)

After removing the solvent and other components from each blocked polyisocyanate component with an evaporator at 50°C or less and drying under reduced pressure, a ratio (mol%) of a structure (IV-1) with respect to 100 mol% of a structure (IV) was quantified by 13C-NMR under the following measurement conditions, and a ratio (mol%) of a structure (V) with respect to the structure (IV) (structure (V)/structure (IV)) was calculated in molar ratio from the composition ratio.

(Measurement conditions)

Apparatus: "JEOL-ECZ500 (SC)" (product name) manufactured by JEOL Ltd.
Solvent: deuterated chloroform
Number of integrations: 5,120 times
Sample concentration: 50 wt/vol%
Chemical shift reference: the deuterated chloroform peak was set to 77.0 ppm by mass.

[Physical property 2-7]

(Determination of molar ratio of urethane bond/urea bond in coating film)

A resin film obtained by the method described later in the section for Evaluation 2-3 was packed into a disposable insert for swelling measurement, and deuterated chloroform containing TMS was added dropwise as a swelling solvent to obtain a measurement sample.

Using the obtained measurement sample, quantification was carried out according to the following quantitative method.

(Measurement conditions)

Method: solid-state NMR
Apparatus: "Avance 500" (product name), manufactured by Bruker Corporation
Solvent: deuterated chloroform
Number of integrations: 10,000 times
Sample concentration: 50 wt/vol%
Chemical shift reference: the deuterated chloroform peak was set to 77.0 ppm by mass.

(Quantitative method)

Urethane bond: quantified at a peak height of 156.4 ppm
Urea bond: quantified at a peak height of 159.1 ppm

In the resin film, when a ratio of urethane bonds was defined as a and a ratio of urea bonds was defined as b, a molar ratio of urethane bond/urea bond was calculated by the formula: a/b.

[Production of water-based resin composition]

A water-based acrylic polyol main agent ("Setaqua (registered trademark) 6515" (product name), manufactured by Nuplex Industries Ltd., OH (% by mass) (on solids) = 3.3, Acid value (mgKOH/g) = 9.9, solid content: 45% by mass), and each blocked polyisocyanate composition were blended so that a ratio of the molar amount of isocyanate groups with respect to the molar amount of hydroxyl groups (isocyanate group/hydroxyl group) was 1.0. Furthermore, ion-exchanged water was blended and a small amount of dimethylaminoethanol was added to adjust the pH to about 8.0 or more and 8.5 or less and the solid content to 40% by mass. Then, the solution was stirred at 1,000 rpm for 15 minutes using a homodisper, and after defoaming, a water-based resin composition was obtained.

The obtained water-based resin composition was left to stand at 40°C for 24 hours for evaluation, if necessary.

[Evaluation 2-1]

(Low-temperature curability)

The resin composition obtained in the above section entitled "production of water-based resin composition" was coated immediately after production on a polypropylene (PP) plate so as to achieve a dry film thickness of 40 μm, and then dried by heating at 80°C for 30 minutes to obtain a resin film. A percentage value (% by mass) obtained by dividing the mass of an undissolved portion when immersing the obtained resin film in acetone at 23°C for 24 hours with the mass before immersion was determined as a gel fraction. Using the calculated gel fraction, the low-temperature curability was evaluated in accordance with the following evaluation criteria.

(Evaluation criteria)

A: Gel fraction is 80% by mass or more

B: Gel fraction is less than 80% by mass

[Evaluation 2-2]

(pH change during storage)

Immediately after production, the water-based resin composition obtained in the above section entitled "production of water-based resin composition" was stored at 40°C for 10 days. Before and after storage, pH measurements were carried out. Using the absolute value of the amount of change in pH after storage from the initial pH, changes in pH were evaluated in accordance with the following evaluation criteria.

(Evaluation criteria)

A: pH of less than 1.0
B: pH of 1.0 or more and less than 1.2
C: pH of 1.2 or more
D: Unable to measure pH due to gelation of coating liquid

[Evaluation 2-3]

(Low-temperature curability after storage)

Immediately after production, the resin composition obtained in the above section entitled "production of water-based resin composition" was stored at 40°C for 10 days. The resin composition after storage was coated on a polypropylene (PP) plate so as to have a dry film thickness of 40 μm, and then dried by heating at 80°C for 30 minutes to obtain a resin film. A percentage value (% by mass) obtained by dividing the mass of an undissolved portion when immersing the obtained resin film in acetone at 23°C for 24 hours with the mass before immersion was determined as a gel fraction after storage. The calculated gel fraction after storage was compared with the (initial) gel fraction immediately after production, and the low-temperature curability after storage was evaluated in accordance with the following evaluation criteria.

(Evaluation criteria)

A: The gel fraction after storage is 80% or more with respect to the initial gel fraction
B: The gel fraction after storage is 78% or more and less than 80% with respect to the initial gel fraction
C: The gel fraction after storage is less than 78% with respect to the initial gel fraction
D: Unable to measure due to gelation of coating liquid

[Evaluation 2-4]

(Recoat adhesion)

The resin composition obtained in the above section entitled "production of water-based resin composition" was coated immediately after production on a glass plate so as to achieve a dry film thickness of 40 μm, and then dried by heating at 85°C for 30 minutes to obtain a resin film.

Thereafter, the resin composition was again coated so as to achieve a dry film thickness of 40 μm, and then dried by heating at 85°C for 30 minutes to obtain a multilayer resin film. After that, according to the cross-cut adhesion test method specified in JIS K5600, the recoat adhesion was judged in accordance with the following evaluation criteria.

(Evaluation criteria)

A: Detachment is not observed in any of the 25 squares.

B: Detachment such as edge loss is partially observed.

<Synthesis of polyisocyanate>

[Synthesis Example 2-1-1]

(Synthesis of polyisocyanate P-1)

A four-necked flask equipped with a thermometer, a stirring blade and a reflux condenser was charged with 100 parts by mass of HDI under a nitrogen stream, the temperature inside the reactor was held at 60°C under stirring, 0.095 parts by mass of trimethylbenzylammonium hydroxide was added thereto, and after 4.5 hours, when the conversion reached 40% by mass, 0.02 parts by mass of phosphoric acid was added thereto to stop the reaction. After filtering the reaction solution, the unreacted HDI was removed using a thin film evaporator to obtain an isocyanurate-type polyisocyanate (hereinafter sometimes referred to as "polyisocyanate P-1"). The obtained polyisocyanate P-1 had an NCO content of 22.0% by mass, a number average molecular weight of 655, and an average number of isocyanate groups of 3.4. Further, the obtained polyisocyanate P-1 was subjected to $^1$H-NMR analysis to confirm the presence of isocyanurate groups.

[Synthesis Example 2-1-2]

(Synthesis of polyisocyanate P-2)

A four-necked flask equipped with a thermometer, a stirring blade and a reflux condenser was charged with 100 parts by mass of HDI and 5.3 parts by mass of a polyester polyol (polycaprolactone triol) ("Placcel 303" (product name), manufactured by Daicel Corporation, average number of functional groups: 3, number average molecular weight: 300) derived from a trihydric alcohol and ε-caprolactone under a nitrogen stream, and the temperature inside the reactor was held at 89°C for 1 hour under stirring to carry out a urethane-forming reaction. After that, the temperature inside the reactor was held at 63°C, tetramethylammonium caprate as an isocyanurate-forming catalyst was added thereto, and when the yield reached 52% by mass, phosphoric acid was added thereto to stop the reaction. After filtering the reaction solution, the unreacted HDI was removed using a thin film evaporator to obtain an isocyanurate-type polyisocyanate (hereinafter sometimes referred to as "polyisocyanate P-2").

The obtained polyisocyanate P-2 had an NCO content of 18.6% by mass, a number average molecular weight of 1,220, and an average number of isocyanate groups of 5.4. Further, the obtained polyisocyanate P-1 was subjected to 1H-NMR analysis to confirm the presence of isocyanurate groups.

<Production of blocked polyisocyanate component (X)>

[Synthesis Example 2-2-1]

(Production of blocked polyisocyanate component X-1)

In a four-necked flask equipped with a thermometer, a stirring blade and a reflux condenser, 100 parts by mass of the polyisocyanate P-1 obtained in Synthesis Example 1-1, 0.01 parts by mass of 2-ethylhexyl acid phosphate ("JP-508T" (product name) manufactured by Johoku Chemical Co., Ltd.) and 29.0 parts by mass of methoxypolyethylene glycol (MPG-081, manufactured by Nippon Nyukazai Co., Ltd., number of ethylene oxide repeating units: 15) (amount so as to be 8 mol% with respect to 100 mol% of the isocyanate group of the polyisocyanate P-1) were mixed and reacted at 120°C for 3 hours under a nitrogen stream. The reaction solution was cooled to 60°C, 2-ethylimidazole was charged so as to be 92 mol% with respect to 100 mol% of the isocyanate groups of the polyisocyanate P-1, and the external bath was adjusted so that the solution temperature was 60°C to carry out a blocking reaction at 60°C for 90 minutes or longer. After confirming the disappearance of the peak of the isocyanate group by infrared spectroscopy (IR), dipropylene glycol dimethyl ether (DPDM) was added thereto so as to adjust the solid content to 60% by mass, thereby obtaining a blocked polyisocyanate component X-1.

[Synthesis Example 2-2-2]

(Production of blocked polyisocyanate component X-2)

In a four-necked flask equipped with a thermometer, a stirring blade and a reflux condenser, 100 parts by mass

of the polyisocyanate P-1 obtained in Synthesis Example 2-1-1, 0.01 parts by mass of 2-ethylhexyl acid phosphate ("JP-508T" (product name) manufactured by Johoku Chemical Co., Ltd.) and 72.5 parts by mass of methoxypolyethylene glycol (MPG-081, manufactured by Nippon Nyukazai Co., Ltd., number of ethylene oxide repeating units: 15) (amount so as to be 20 mol% with respect to 100 mol% of the isocyanate group of the polyisocyanate P-1) were mixed and reacted at 120°C for 3 hours under a nitrogen stream. The reaction solution was cooled to 60°C, 2-ethylimidazole was charged so as to be 80 mol% with respect to 100 mol% of the isocyanate groups of the polyisocyanate P-1, and the external bath was adjusted so that the solution temperature was 60°C to carry out a blocking reaction at 60°C for 90 minutes or longer. After confirming the disappearance of the peak of the isocyanate group by infrared spectroscopy (IR), dipropylene glycol dimethyl ether (DPDM) was added thereto so as to adjust the solid content to 60% by mass, thereby obtaining a blocked polyisocyanate component X-2.

[Synthesis Example 2-2-3]

(Production of blocked polyisocyanate component X-3)

In a four-necked flask equipped with a thermometer, a stirring blade and a reflux condenser, 100 parts by mass of the polyisocyanate P-1 obtained in Synthesis Example 2-1-1, 0.02 parts by mass of 2-ethylhexyl acid phosphate ("JP-508T" (product name) manufactured by Johoku Chemical Co., Ltd.) and 108.7 parts by mass of methoxypolyethylene glycol (MPG-081, manufactured by Nippon Nyukazai Co., Ltd., number of ethylene oxide repeating units: 15) (amount so as to be 30 mol% with respect to 100 mol% of the isocyanate group of the polyisocyanate P-1) were mixed and reacted at 120°C for 3 hours under a nitrogen stream. The reaction solution was cooled to 60°C, 2-ethylimidazole was charged so as to be 70 mol% with respect to 100 mol% of the isocyanate groups of the polyisocyanate P-1, and the external bath was adjusted so that the solution temperature was 60°C to carry out a blocking reaction at 60°C for 90 minutes or longer. After confirming the disappearance of the peak of the isocyanate group by infrared spectroscopy (IR), dipropylene glycol dimethyl ether (DPDM) was added thereto so as to adjust the solid content to 60% by mass, thereby obtaining a blocked polyisocyanate component X-3.

[Synthesis Example 2-2-4]

(Production of blocked polyisocyanate component X-4)

In a four-necked flask equipped with a thermometer, a stirring blade and a reflux condenser, 100 parts by mass of the polyisocyanate P-1 obtained in Synthesis Example 2-1-1, 0.02 parts by mass of 2-ethylhexyl acid phosphate ("JP-508T" (product name) manufactured by Johoku Chemical Co., Ltd.) and 145.0 parts by mass of methoxypolyethylene glycol (MPG-081, manufactured by Nippon Nyukazai Co., Ltd., number of ethylene oxide repeating units: 15) (amount so as to be 40 mol% with respect to 100 mol% of the isocyanate group of the polyisocyanate P-1) were mixed and reacted at 120°C for 3 hours under a nitrogen stream. The reaction solution was cooled to 60°C, 2-ethylimidazole was charged so as to be 60 mol% with respect to 100 mol% of the isocyanate groups of the polyisocyanate P-1, and the external bath was adjusted so that the solution temperature was 60°C to carry out a blocking reaction at 60°C for 90 minutes or longer. After confirming the disappearance of the peak of the isocyanate group by infrared spectroscopy (IR), dipropylene glycol dimethyl ether (DPDM) was added thereto so as to adjust the solid content to 60% by mass, thereby obtaining a blocked polyisocyanate component X-4.

[Synthesis Example 2-2-5]

(Production of blocked polyisocyanate component X-5)

In a four-necked flask equipped with a thermometer, a stirring blade and a reflux condenser, 100 parts by mass of the polyisocyanate P-1 obtained in Synthesis Example 2-1-1, 0.02 parts by mass of 2-ethylhexyl acid phosphate ("JP-508T" (product name) manufactured by Johoku Chemical Co., Ltd.) and 72.5 parts by mass of methoxypolyethylene glycol (MPG-081, manufactured by Nippon Nyukazai Co., Ltd., number of ethylene oxide repeating units: 15) (amount so as to be 20 mol% with respect to 100 mol% of the isocyanate group of the polyisocyanate P-1) were mixed and reacted at 120°C for 3 hours under a nitrogen stream. The reaction solution was cooled to 60°C, 1,2,4-triazole was charged so as to be 80 mol% with respect to 100 mol% of the isocyanate groups of the polyisocyanate P-1, and the external bath was adjusted so that the solution temperature was 60°C to carry out a blocking reaction at 60°C for 90 minutes or longer. After confirming the disappearance of the peak of the isocyanate group by infrared spectroscopy (IR), dimethylformamide (DMF) was added thereto so as to adjust the solid content to 60% by mass, thereby obtaining a blocked polyisocyanate component X-5.

[Synthesis Example 2-2-6]

(Production of blocked polyisocyanate component X-6)

In a four-necked flask equipped with a thermometer, a stirring blade and a reflux condenser, 100 parts by mass of the polyisocyanate P-1 obtained in Synthesis Example 2-1-1, 0.02 parts by mass of 2-ethylhexyl acid phosphate ("JP-508T" (product name) manufactured by Johoku Chemical Co., Ltd.) and 19.6 parts by mass of methoxypolyethylene glycol (MPG-081, manufactured by Nippon Nyukazai Co., Ltd., number of ethylene oxide repeating units: 15) (amount so as to be 5.4 mol% with respect to 100 mol% of the isocyanate group of the polyisocyanate P-1) were mixed and reacted at 120°C for 3 hours under a nitrogen stream. The reaction solution was cooled to 60°C, 2-ethylimidazole was charged so as to be 94.6 mol% with respect to 100 mol% of the isocyanate groups of the polyisocyanate P-1, and the external bath was adjusted so that the solution temperature was 60°C to carry out a blocking reaction at 60°C for 90 minutes or longer. After confirming the disappearance of the peak of the isocyanate group by infrared spectroscopy (IR), dimethylformamide (DMF) was added thereto so as to adjust the solid content to 60% by mass, thereby obtaining a blocked polyisocyanate component X-6.

<Production of blocked polyisocyanate component (Y)>

[Synthesis Example 2-3-1]

(Production of blocked polyisocyanate component Y-1)

In a four-necked flask equipped with a thermometer, a stirring blade and a reflux condenser, 100 parts by mass of the polyisocyanate P-2 obtained in Synthesis Example 2-1-1, 0.01 parts by mass of 2-ethylhexyl acid phosphate ("JP-508T" (product name) manufactured by Johoku Chemical Co., Ltd.), 5.9 parts by mass of methoxypolyethylene glycol (MPG-081, manufactured by Nippon Nyukazai Co., Ltd., number of ethylene oxide repeating units: 15) (amount so as to be 2 mol% with respect to 100 mol% of the isocyanate group of the polyisocyanate P-1) and 18.7 parts by mass of dipropylene glycol dimethyl ether (DPDM) were mixed and reacted at 120°C for 3 hours under a nitrogen stream. The reaction solution was cooled to 40°C, diisopropyl malonate was charged so as to be 98 mol% with respect to 100 mol% of the isocyanate groups of the polyisocyanate P-1, and dipropylene glycol dimethyl ether (DPDM) was further added thereto to adjust the solid content to 70% by mass. Next, while stirring, 1.1 parts by mass of sodium methylate-containing methanol solution (28% by mass with respect to the total mass of the solution) was added dropwise, and then the external bath was adjusted so that the solution temperature was 55°C to carry out a blocking reaction at 55°C for 5 hours, thereby obtaining a blocked polyisocyanate component intermediate having a solid content of 70% by mass. After that, 168 parts by mass of 2-methyl-2-butanol (400 mol% with respect to the blocked isocyanate group) was added to carry out a reaction at 80°C for 3 hours while removing the generated isopropyl alcohol by distillation under normal pressure. Thereafter, isopropanol and 2-methyl-2-butanol were further distilled off at 60°C under reduced pressure (50 kPa), and finally dipropylene glycol dimethyl ether (DPDM) was added thereto, thereby adjusting the solid content to 60% by mass and obtaining a blocked polyisocyanate component Y-1. A ratio of a structure (IV-1) with respect to 100 mol% of a structure (IV) was measured for the obtained blocked polyisocyanate component Y-1, which was found to be 54 mol%.

[Synthesis Example 2-3-2]

(Production of blocked polyisocyanate component Y-2)

In a four-necked flask equipped with a thermometer, a stirring blade and a reflux condenser, 100 parts by mass of the polyisocyanate P-2 obtained in Synthesis Example 2-1-1, 0.01 parts by mass of 2-ethylhexyl acid phosphate ("JP-508T" (product name) manufactured by Johoku Chemical Co., Ltd.), 23.7 parts by mass of methoxypolyethylene glycol (MPG-081, manufactured by Nippon Nyukazai Co., Ltd., number of ethylene oxide repeating units: 15) (amount so as to be 8 mol% with respect to 100 mol% of the isocyanate group of the polyisocyanate P-1) and 21.8 parts by mass of dipropylene glycol dimethyl ether (DPDM) were mixed and reacted at 120°C for 3 hours under a nitrogen stream. The reaction solution was cooled to 40°C, diisopropyl malonate was charged so as to be 92 mol% with respect to 100 mol% of the isocyanate groups of the polyisocyanate P-1, and dipropylene glycol dimethyl ether (DPDM) was further added thereto to adjust the solid content to 70% by mass. Next, while stirring, 1.1 parts by mass of sodium methylate-containing methanol solution (28% by mass with respect to the total mass of the solution) was added dropwise, and then the external bath was adjusted so that the solution temperature was 55°C to carry out a blocking reaction at 55°C for 5 hours, thereby obtaining a blocked polyisocyanate component intermediate having a solid content of 70% by mass. After that, 168 parts by mass of 2-methyl-2-butanol (400 mol% with respect to the blocked isocyanate group) was added to carry out a reaction

at 80°C for 3 hours while removing the generated isopropyl alcohol by distillation under normal pressure. Thereafter, isopropanol and 2-methyl-2-butanol were further distilled off at 60°C under reduced pressure (50 kPa), and finally dipropylene glycol dimethyl ether (DPDM) was added thereto, thereby adjusting the solid content to 60% by mass and obtaining a blocked polyisocyanate component Y-2. A ratio of a structure (IV-1) with respect to 100 mol% of a structure (IV) was measured for the obtained blocked polyisocyanate component Y-2, which was found to be 54 mol%.

<Production of blocked polyisocyanate composition>

[Example 2-1]

(Production of blocked polyisocyanate composition PA-a1)

In a four-necked flask equipped with a thermometer, a stirring blade and a reflux condenser, 25 parts by mass of the blocked polyisocyanate component X-1 obtained in Synthesis Example 2-2-1 and 75 parts by mass of the blocked polyisocyanate component Y-1 obtained in Synthesis Example 2-3-1 were charged, under a nitrogen stream, and mixed at 40°C for 1 hour or longer by adjusting the external bath so that the solution temperature was 40°C to obtain a blocked polyisocyanate composition PA-a1.

[Examples 2-2 to 2-8]

(Production of blocked polyisocyanate compositions PA-a2 to PA-a8)

Each blocked polyisocyanate composition was produced by using the same method as in Example 2-1, with the exception that the combination and mixing ratio of the blocked polyisocyanate component (X) and blocked polyisocyanate component (Y) to be blended were as shown in Table 6.

[Example 2-9]

(Production of blocked polyisocyanate composition PA-a9)

In a four-necked flask equipped with a thermometer, a stirring blade and a reflux condenser, 25 parts by mass of the blocked polyisocyanate component X-1 obtained in Synthesis Example 2-2-1 and 75 parts by mass of the blocked polyisocyanate component Y-1 obtained in Synthesis Example 2-3-1 were charged, under a nitrogen stream, and mixed at 40°C for 1 hour or longer by adjusting the external bath so that the solution temperature was 40°C to obtain a blocked polyisocyanate composition PA-a9.

[Example 2-10]

(Production of blocked polyisocyanate composition PA-a10)

In a four-necked flask equipped with a thermometer, a stirring blade and a reflux condenser, 25 parts by mass of the blocked polyisocyanate component X-6 obtained in Synthesis Example 2-2-6 and 75 parts by mass of the blocked polyisocyanate component Y-2 obtained in Synthesis Example 2-3-1 were charged, under a nitrogen stream, and mixed at 40°C for 1 hour or longer by adjusting the external bath so that the solution temperature was 40°C to obtain a blocked polyisocyanate composition PA-a10.

[Comparative Example 2-1]

(Production of blocked polyisocyanate composition PA-b1)

The blocked polyisocyanate component Y-2 obtained in Synthesis Example 2-3-2 was used as it was as a blocked polyisocyanate composition PA-b1.

[Comparative Example 2]

(Production of blocked polyisocyanate composition PA-b2)

The blocked polyisocyanate component X-1 obtained in Synthesis Example 2-2-1 was used as it was as a

blocked polyisocyanate composition PA-b2.

The following table shows the results of various evaluations using each of the blocked polyisocyanate compositions obtained in Examples and Comparative Examples. It should be noted that in the tables, "H" represents a hydrogen atom.

[Table 6]

| | | | | Example 2-1 | Example 2-2 | Example 2-3 | Example 2-4 | Example 2-5 |
|---|---|---|---|---|---|---|---|---|
| Blocked polyisocyanate composition | | | | PA-a1 | PA-a2 | PA-a3 | PA-a4 | PA-a5 |
| Composition | Component (X) | Type | | X-1 | X-1 | X-2 | X-3 | X-4 |
| | | Raw material polyisocyanate | | P-1 | P-1 | P-1 | P-1 | P-1 |
| | | Amount of hydrophilic group | (% by mass) | 16.5 | 16.5 | 34.1 | 44.6 | 61.5 |
| | | Amount of modification of hydrophilic group | (mol%) | 8 | 8 | 20 | 30 | 40 |
| | | Effective NCO% | (% by mass) | 6.9 | 6.9 | 5.0 | 3.8 | 2.9 |
| | | Solid content | (% by mass) | 60 | 60 | 60 | 60 | 60 |
| | | Structure (IIa) | $R^{21}$ | Ethyl group | Ethyl group | Ethyl group | Ethyl group | Ethyl group |
| | | | $R^{22}$ | H | H | H | H | H |
| | | | $R^{23}$ | H | H | H | H | H |
| | | Type | | Y-1 | Y-2 | Y-1 | Y-1 | Y-1 |
| | | Raw material polyisocyanate | | P-2 | P-2 | P-2 | P-2 | P-2 |
| | | Amount of hydrophilic group | (% by mass) | 3.1 | 11.7 | 3.1 | 3.1 | 3.1 |
| | | Amount of modification of hydrophilic group | (mol%) | 2 | 8 | 2 | 2 | 2 |
| | | Average number of NCO groups | - | 5.0 | 5.0 | 5.0 | 5.0 | 5.0 |
| | | Effective NCO% | (% by mass) | 5.8 | 5.0 | 5.8 | 5.8 | 5.8 |
| | | Solid content | (% by mass) | 60 | 60 | 60 | 60 | 60 |

(continued)

| | | | | Example 2-1 | Example 2-2 | Example 2-3 | Example 2-4 | Example 2-5 |
|---|---|---|---|---|---|---|---|---|
| Blocked polyisocyanate composition | | | | PA-a1 | PA-a2 | PA-a3 | PA-a4 | PA-a5 |
| | Component (Y) | Structure (IV) | $R^{41}$ | Ethyl group | Ethyl group | Ethyl group | Ethyl group | Ethyl group |
| | | | $R^{42}$ | Methyl group | Methyl group | Methyl group | Methyl group | Methyl group |
| | | | $R^{43}$ | Methyl group | Methyl group | Methyl group | Methyl group | Methyl group |
| | | | $R^{44}$ | H | H | H | H | H |
| | | | $R^{45}$ | Methyl group | Methyl group | Methyl group | Methyl group | Methyl group |
| | | | $R^{46}$ | Methyl group | Methyl group | Methyl group | Methyl group | Methyl group |
| | | Structure (V) | $R^{51}$ | Methyl group | Methyl group | Methyl group | Methyl group | Methyl group |
| | | | $R^{52}$ | Methyl group | Methyl group | Methyl group | Methyl group | Methyl group |
| | | | $R^{53}$ | Methyl group | Methyl group | Methyl group | Methyl group | Methyl group |
| | | | $R^{54}$ | Methyl group | Methyl group | Methyl group | Methyl group | Methyl group |
| | | Structure (V) /structure (IV) molar ratio | - | 80/20 | 80/20 | 80/20 | 80/20 | 80/20 |
| | | Content of structure (IV-1) | mol% | 95 | 95 | 95 | 95 | 95 |
| | (X)/(Y) mass ratio | | - | 22/78 | 50/50 | 10/90 | 7/93 | 5/95 |
| Physical properties | Amount of hydrophilic group of blocked polyisocyanate composition | | (% by mass) | 6.1 | 14.1 | 6.1 | 6.1 | 6.1 |
| | Treatment time at 40°C | | - | None | None | None | None | None |
| | Urethane/urea ratio | | - | 97/3 | 97/3 | 97/3 | 97/3 | 97/3 |
| Evaluation | Low-temperature curability | | | A | B | A | A | A |
| | pH decrease | | | A | A | A | A | A |
| | Low-temperature curability after storage | | | A | A | A | A | A |
| | Recoat adhesion | | | B | B | B | B | B |

[Table 7]

| | | | | Example 2-6 | Example 2-7 | Example 2-8 | Example 2-9 | Example 2-10 |
|---|---|---|---|---|---|---|---|---|
| Blocked polyisocyanate composition | | | | PA-a6 | PA-a7 | PA-a8 | PA-a9 | PA-a10 |
| Composition | Component (X) | Type | | X-2 | X-2 | X-5 | X-1 | X-6 |
| | | Raw material polyisocyanate | | P-1 | P-1 | P-1 | P-1 | P-1 |
| | | Amount of hydrophilic group | (% by mass) | 34.1 | 34.1 | 34.1 | 16.5 | 11.7 |
| | | Amount of modification of hydrophilic group | (mol%) | 20 | 20 | 20 | 8 | 5.4 |
| | | Effective NCO% | (% by mass) | 5.0 | 5.0 | 5.2 | 6.9 | 7.9 |
| | | Solid content | (% by mass) | 60 | 60 | 60 | 60 | 60 |
| | | Structure (IIa) | $R^{21}$ | Ethyl group | Ethyl group | - | Ethyl group | Ethyl group |
| | | | $R^{22}$ | H | H | - | H | H |
| | | | $R^{23}$ | H | H | - | H | H |
| | Component (Y) | Type | | Y-1 | Y-1 | Y-1 | Y-1 | Y-2 |
| | | Raw material polyisocyanate | | P-2 | P-2 | P-2 | P-2 | P-2 |
| | | Amount of hydrophilic group | (% by mass) | 3.1 | 3.1 | 3.1 | 3.1 | 11.7 |
| | | Amount of modification of hydrophilic group | (mol%) | 2 | 2 | 2 | 2 | 8 |
| | | Average number of NCO groups | - | 5.0 | 5.0 | 5.0 | 5.0 | 5.0 |
| | | Effective NCO% | (% by mass) | 5.8 | 5.8 | 5.8 | 5.8 | 5 |
| | | Solid content | (% by mass) | 60 | 60 | 60 | 60 | 60 |

(continued)

| | | | | Example 2-6 | Example 2-7 | Example 2-8 | Example 2-9 | Example 2-10 |
|---|---|---|---|---|---|---|---|---|
| Blocked polyisocyanate composition | | | | PA-a6 | PA-a7 | PA-a8 | PA-a9 | PA-a10 |
| | | Structure (IV) | $R^{41}$ | Ethyl group | Ethyl group | Ethyl group | Ethyl group | Ethyl group |
| | | | $R^{42}$ | Methyl group | Methyl group | Methyl group | Methyl group | Methyl group |
| | | | $R^{43}$ | Methyl group | Methyl group | Methyl group | Methyl group | Methyl group |
| | | | $R^{44}$ | H | H | H | H | H |
| | | | $R^{45}$ | Methyl group | Methyl group | Methyl group | Methyl group | Methyl group |
| | | | $R^{46}$ | Methyl group | Methyl group | Methyl group | Methyl group | Methyl group |
| | | Structure (V) | $R^{51}$ | Methyl group | Methyl group | Methyl group | Methyl group | Methyl group |
| | | | $R^{52}$ | Methyl group | Methyl group | Methyl group | Methyl group | Methyl group |
| | | | $R^{53}$ | Methyl group | Methyl group | Methyl group | Methyl group | Methyl group |
| | | | $R^{54}$ | Methyl group | Methyl group | Methyl group | Methyl group | Methyl group |
| | | Structure (V)/structure (IV) molar ratio | - | 80/20 | 80/20 | 80/20 | 80/20 | 80/20 |
| | | Content of structure (IV-1) | mol% | 95 | 95 | 95 | 95 | 95 |
| | (X)/(Y) mass ratio | | - | 28/72 | 60/40 | 9/91 | 22/78 | 50/50 |
| Physical properties | Amount of hydrophilic group of blocked polyisocyanate composition | | (% by mass) | 11.7 | 21.6 | 6.1 | 6.1 | 11.7 |
| | Treatment time at 40°C | | - | None | None | None | 24 hours | None |
| | Urethane/urea ratio | | - | 97/3 | 97/3 | 97/3 | 60/40 | 97/3 |
| Evaluation | Low-temperature curability | | | B | B | A | A | A |
| | pH decrease | | | A | A | B | A | B |
| | Low-temperature curability after storage | | | A | A | A | A | B |
| | Recoat adhesion | | | B | B | B | A | B |

[Table 8]

| | | | | Comparative Example 2-1 | Comparative Example 2-2 |
|---|---|---|---|---|---|
| Blocked polyisocyanate composition | | | | PA-b1 | PA-b2 |
| Composition | Component (X) | Type | | - | X-1 |
| | | Raw material polyisocyanate | | - | P-1 |
| | | Amount of hydrophilic group | (% by mass) | - | 16.5 |
| | | Amount of modification of hydrophilic group | (mol%) | - | 8 |
| | | Effective NCO% | (% by mass) | - | 6.9 |
| | | Solid content | (% by mass) | - | 60 |
| | | Structure (IIa) | $R^{21}$ | - | Ethyl group |
| | | | $R^{22}$ | - | H |
| | | | $R^{23}$ | - | H |
| | Component (Y) | Type | | Y-2 | - |
| | | Raw material polyisocyanate | | P-2 | - |
| | | Amount of hydrophilic group | (% by mass) | 11.7 | - |
| | | Amount of modification of hydrophilic group | (mol%) | 8 | - |
| | | Average number of NCO groups | - | 5.0 | - |
| | | Effective NCO% | (% by mass) | 5.0 | - |
| | | Solid content | (% by mass) | 60 | - |
| | | Structure (IV) | $R^{41}$ | Ethyl group | - |
| | | | $R^{42}$ | Methyl group | - |
| | | | $R^{43}$ | Methyl group | - |
| | | | $R^{44}$ | H | - |
| | | | $R^{45}$ | Methyl group | - |
| | | | $R^{46}$ | Methyl group | - |
| | | Structure (V) | $R^{51}$ | Methyl group | - |
| | | | $R^{52}$ | Methyl group | - |
| | | | $R^{53}$ | Methyl group | - |
| | | | $R^{54}$ | Methyl group | - |
| | | Structure (V)/structure (IV) molar ratio | - | 80/20 | |
| | | Content of structure (IV-1) | mol% | 95 | |
| | (X)/(Y) mass ratio | | - | 0/100 | 100/0 |

(continued)

| | | | Comparative Example 2-1 | Comparative Example 2-2 |
|---|---|---|---|---|
| Blocked polyisocyanate composition | | | PA-b1 | PA-b2 |
| Physical properties | Amount of hydrophilic group of blocked polyisocyanate composition | (% by mass) | 11.7 | 16.5 |
| | Treatment time at 40°C | - | None | None |
| | Urethane/urea ratio | - | - | 97/3 |
| Evaluation | Low-temperature curability | | A | B |
| | pH decrease | | C | D |
| | Low-temperature curability after storage | | C | D |
| | Recoat adhesion | | B | B |

As shown in the above tables, in Examples 2-1 to 2-10 in which the blocked polyisocyanate compositions PA-a1 to PA-a10 were obtained by combining and blending the component (X) and the component (Y), curability was excellent immediately after being formed into a water-based resin composition and when baked at a low temperature of 90°C or less after storage immediately after being formed into a water-based resin composition, and a decrease in pH was suppressed when stored immediately after being formed into a water-based resin composition.

In addition, in Example 2-9 in which a coating film obtained by leaving the water-based resin composition (blocked isocyanate composition PA-a9) to stand at 40°C for 24 hours, followed by baking at a temperature of 90°C or less (85°C) was evaluated, the recoat adhesion was particularly favorable.

On the other hand, in Comparative Examples 2-1 and 2-2 in which the blocked polyisocyanate compositions PA-b 1 and PA-b2 were obtained by blending either the component (X) or the component (Y) alone, it was not possible to obtain a product that was excellent in all characteristics of curability immediately after being formed into a water-based resin composition and when baked at a low temperature of 90°C or less after storage immediately after being formed into a water-based resin composition, and suppression of a decrease in pH when stored immediately after being formed into a water-based resin composition.

While preferred embodiments of the present invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

INDUSTRIAL APPLICABILITY

According to the present embodiment, it is possible to provide a resin film using a blocked polyisocyanate composition that exhibits excellent curability when baked at a low temperature of 90°C or less, when used as a water-based coating composition, and brings about excellent coating film appearance, water resistance and recoat adhesion of the resin film obtained after curing; a method for producing a resin film; a laminate; and a method for producing a blocked polyisocyanate composition. In addition, as described above, since the water-based resin composition containing the blocked polyisocyanate composition obtained by the method for producing a blocked polyisocyanate composition of the present embodiment is excellent in low-temperature curability, it is suitably used for coating materials with low heat resistance.

Further, according to the blocked polyisocyanate composition of the present embodiment, it is possible to provide a blocked polyisocyanate composition that exhibits excellent curability immediately after being formed into a water-based resin composition and when baked at a low temperature of 90°C or less after storage immediately after being formed into a water-based resin composition, and brings about suppression of a decrease in pH when stored immediately after being formed into a water-based resin composition. The resin composition of the present embodiment contains the aforementioned polyisocyanate composition, exhibits excellent curability immediately after being formed into a water-based resin composition and when baked at a low temperature of 90°C or less after storage immediately after being formed into a water-based resin composition, and can suppress a decrease in pH when stored immediately after being formed into a water-based resin composition. In addition, as described above, since the resin composition of the present embodiment is excellent in low-temperature curability, it is suitably used for coating materials with low

heat resistance.

## Claims

1. A resin film comprising:

a urethane bond and a urea bond derived from a polyisocyanate obtained from an aliphatic isocyanate and/or an alicyclic isocyanate;
a hydrophilic group; and
a structure represented by the following general formula (I),
wherein a molar ratio of the urethane bond and the urea bond (urethane bond/urea bond) is from 95/5 to 30/70,

[Chemical Formula 1]

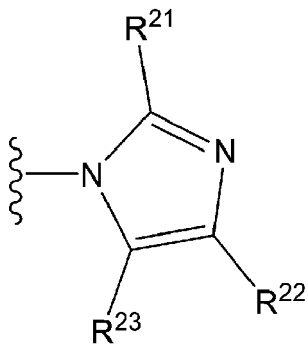

(I)

wherein each of $R^{21}$, $R^{22}$ and $R^{23}$ independently represents a hydrogen atom or an alkyl group which may contain one or more substituents selected from the group consisting of a hydroxy group and an amino group, a total number of carbon atoms of $R^{21}$, $R^{22}$ and $R^{23}$ is 1 or more and 20 or less, and a wavy line represents a bond.

2. The resin film according to Claim 1,
wherein the hydrophilic group is a polyethylene glycol group.

3. The resin film according to Claim 2,
wherein a content of the polyethylene glycol group in the resin film is 1% by mass or more and 20% by mass or less.

4. The resin film according to any one of Claims 1 to 3,
wherein when, in the resin film, a ratio of urethane bonds is defined as a, a ratio of urea bonds is defined as b, and a ratio of the structure represented by the general formula (I) is defined as c, a molar ratio c/(a + b + c) is 0.1 mol% or more and 50 mol% or less.

5. A method for producing a resin film, the method comprising:

adding water to a mixture of a polyisocyanate obtained from an aliphatic isocyanate and/or an alicyclic isocyanate, a hydrophilic compound, a blocked polyisocyanate compound (A) derived from an imidazole-based blocking agent (d) having a structure represented by the following general formula (II) and a polyvalent hydroxy compound; and
baking the resulting mixture at a temperature of 90°C or less after allowing it to stand within a temperature range of 10°C to 70°C for 1 to 240 hours,

[Chemical Formula 2]

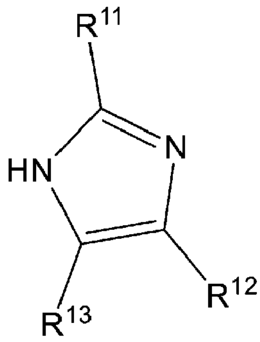

( II )

wherein each of $R^{11}$, $R^{12}$ and $R^{13}$ independently represents a hydrogen atom or an alkyl group which may contain one or more substituents selected from the group consisting of a hydroxy group and an amino group, and a total number of carbon atoms of $R^{11}$, $R^{12}$ and $R^{13}$ is 1 or more and 20 or less.

**6.** The method for producing a resin film according to Claim 5, wherein the mixture further comprises a polyisocyanate obtained from an aliphatic isocyanate and/or an alicyclic isocyanate, a hydrophilic compound, and a blocked polyisocyanate compound (E) derived from a blocking agent (e) other than an imidazole-based blocking agent.

**7.** The method for producing a resin film according to Claim 6, wherein the blocking agent (e) is an active methylene-based blocking agent.

**8.** A laminate obtained by laminating one or more layers of a resin film of any one of Claims 1 to 3 on a base material, wherein a thickness of each layer of the resin film is 1 μm or more and 50 μm or less.

**9.** A method for producing a blocked polyisocyanate composition, the method comprising:

adding water to a mixture of a polyisocyanate obtained from an aliphatic isocyanate and/or an alicyclic isocyanate, a hydrophilic compound, and a blocked polyisocyanate compound (A) derived from an imidazole-based blocking agent (d) having a structure represented by the following general formula (II); and
allowing the resulting mixture to stand within a temperature range of 10°C to 70°C for 1 to 240 hours,

[Chemical Formula 3]

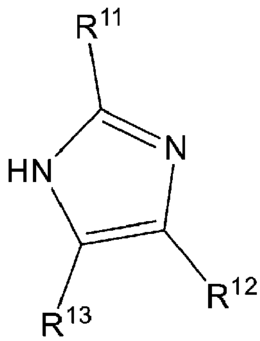

( II )

wherein each of $R^{11}$, $R^{12}$ and $R^{13}$ independently represents a hydrogen atom or an alkyl group which may contain one or more substituents selected from the group consisting of a hydroxy group and an amino group, and a total number of carbon atoms of $R^{11}$, $R^{12}$ and $R^{13}$ is 1 or more and 20 or less.

**10.** The method for producing a blocked polyisocyanate composition according to Claim 9, wherein the mixture further comprises a polyisocyanate obtained from an aliphatic isocyanate and/or an alicyclic

isocyanate, a hydrophilic compound, and a blocked polyisocyanate compound (E) derived from a blocking agent (e) other than an imidazole-based blocking agent.

**11.** The method for producing a blocked polyisocyanate composition according to Claim 10, wherein the blocking agent (e) is an active methylene-based blocking agent.

**12.** The method for producing a blocked polyisocyanate composition according to any one of Claims 9 to 11, wherein the hydrophilic compound is a polyethylene glycol-based hydrophilic compound.

**13.** A blocked polyisocyanate composition comprising:

a blocked polyisocyanate component (X) derived from a polyisocyanate (x1) and a blocking agent (x2); and
a blocked polyisocyanate component (Y) derived from a polyisocyanate (y1) and a blocking agent (y2),
wherein the blocked polyisocyanate composition comprises a hydrophilic group,
the blocking agent (x1) is a compound having a heterocyclic ring containing one or more nitrogen atoms, and
a structure of an isocyanate group blocked by the blocking agent (y2) in the blocked polyisocyanate component (Y) is a structure represented by the following general formula (IV),

[Chemical Formula 4]

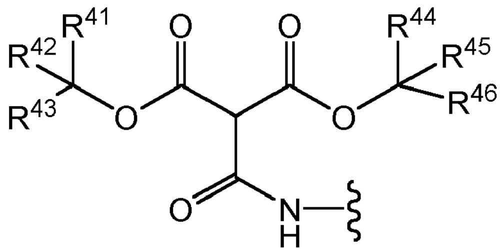

( IV )

wherein each of $R^{41}$, $R^{42}$ and $R^{43}$ independently represents an alkyl group which may contain one or more substituents selected from the group consisting of a hydroxy group and an amino group, a total number of carbon atoms of $R^{41}$, $R^{42}$ and $R^{43}$ is 3 or more and 20 or less, each of $R^{44}$, $R^{45}$ and $R^{46}$ independently represents a hydrogen atom or an alkyl group which may contain one or more substituents selected from the group consisting of a hydroxy group and an amino group, and a wavy line represents a bond.

**14.** The blocked polyisocyanate composition according to Claim 13,

wherein a structure of an isocyanate group blocked by the blocking agent (x2) in the blocked polyisocyanate component (X) is a structure represented by the following general formula (IIa),

[Chemical Formula 5]

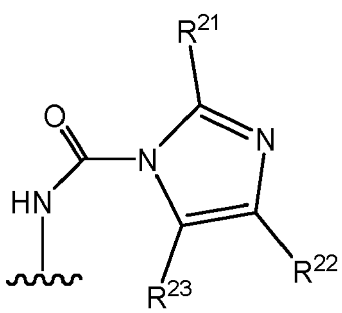

( IIa )

wherein each of $R^{21}$, $R^{22}$ and $R^{23}$ independently represents a hydrogen atom or an alkyl group which may contain one or more substituents selected from the group consisting of a hydroxy group and an amino group, a total number of carbon atoms of $R^{21}$, $R^{22}$ and $R^{23}$ is 1 or more and 20 or less, and a wavy line represents a bond.

**15.** The blocked polyisocyanate composition according to Claim 13 or 14,

wherein the structure of an isocyanate group blocked by the blocking agent (y2) includes a structure represented by the following general formula (IV-1) as the structure represented by the general formula (IV),

[Chemical Formula 6]

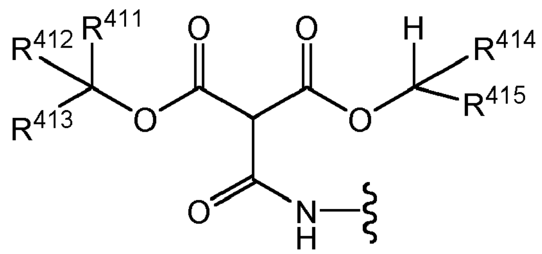

(IV-1)

wherein each of $R^{411}$, $R^{412}$ and $R^{413}$ independently represents an alkyl group which may contain one or more substituents selected from the group consisting of a hydroxy group and an amino group, a total number of carbon atoms of $R^{411}$, $R^{412}$ and $R^{413}$ is 3 or more and 20 or less, each of $R^{414}$ and $R^{415}$ independently represents a hydrogen atom or an alkyl group which may contain one or more substituents selected from the group consisting of a hydroxy group and an amino group, and a wavy line represents a bond.

**16.** The blocked polyisocyanate composition according to any one of Claims 13 to 15,

wherein each of $R^{41}$, $R^{42}$ and $R^{43}$ independently represents an unsubstituted alkyl group, and
each of $R^{44}$, $R^{45}$ and $R^{46}$ independently represents a hydrogen atom or an unsubstituted alkyl group.

**17.** The blocked polyisocyanate composition according to any one of Claims 13 to 16,

wherein the blocked polyisocyanate composition comprises a nonionic hydrophilic group,
a content of the nonionic hydrophilic group is 0.1% by mass or more and 25.0% by mass or less with respect to a total mass of a solid content of the blocked polyisocyanate composition, and
a relationship of $0 \leq (y) < (x)$ is satisfied when a content of a nonionic hydrophilic group of the blocked polyisocyanate component (X) with respect to a total mass of a solid content of the blocked polyisocyanate component (X) is defined as (x)% by mass, and a content of a nonionic hydrophilic group of the blocked polyisocyanate component (Y) with respect to a total mass of a solid content of the blocked polyisocyanate component (Y) is defined as (y)% by mass.

**18.** The blocked polyisocyanate composition according to Claim 17, wherein a content of a nonionic hydrophilic group of the blocked polyisocyanate component (X) is 15.0% by mass or more and 65.0% by mass or less with respect to a total mass of a solid content of the blocked polyisocyanate component (X).

**19.** The blocked polyisocyanate composition according to any one of Claims 13 to 18, wherein the polyisocyanate (x1) and the polyisocyanate (y1) are polyisocyanates derived from one or more diisocyanates selected from the group consisting of an aliphatic diisocyanate and an alicyclic diisocyanate.

**20.** The blocked polyisocyanate composition according to any one of Claims 13 to 19, wherein the polyisocyanate (y 1) has an average number of isocyanate groups of 3.5 or more.

**21.** A resin composition comprising a blocked polyisocyanate composition of any one of Claims 13 to 20 and a polyvalent hydroxy compound.

**22.** A resin film obtained by curing a resin composition of Claim 21.

**23.** A laminate obtained by laminating one or more layers of a resin film of Claim 22 on a base material, wherein a thickness of each layer of the resin film is 1 μm or more and 50 μm or less.

**24.** A method for producing a resin film, the method comprising:

adding water to a mixture of a blocked polyisocyanate composition of any one of Claims 13 to 20 and a polyvalent hydroxy compound; and
baking the resulting mixture at a temperature of 90°C or less after allowing it to stand within a temperature range of 10°C to 70°C for 1 to 240 hours.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002322238 A
- JP 2006335954 A
- JP 3947260 B
- JP 6025507 B
- JP SHO5734107 A
- JP SHO61275311 A
- JP HEI1261409 A
- JP HEI3006273 A
- JP HEI11130728 A
- JP 508 T